# EUROPEAN PATENT APPLICATION

(11) **EP 1 693 793 A1**
(43) Date of publication of application: **23.08.2006**
(21) Application number: 06290282.0
(22) Date of filing: 20.02.2006
(51) Int. Cl.: G06Q 10/00

(54) **Intellectual property management system**

(30) Priority: 18.02.2005 US 61111
(71) Applicant: Paul Franck Industries, Inc., Costa Mesa, CA 92627 (US)
(72) Inventor: Dupree, Jonathan J., Huntington Beach, CA 92646 (US); Mendoza, Leoncio A., San Clemente, CA 92673 (US)
(74) Representative: Loisel, Bertrand

(57) **Abstract**

The present invention provides a system for managing and maintaining information related to unique and limited edition products, including graphics and "cartoon" characters used on those products as well as the issuing and tracking of certificates of authenticity for those products. The system also maintains legal rights information such as information about the trademarks and copyrights sought and/or registered for those graphics and characters. For example, the legal rights information related to trademark protection includes the usage information of the graphics and characters on products that is necessary for trademark applications, as well as web hyperlink information for creating, accessing and tracking trademark applications and registrations on such websites such as those maintained by the United States Patent and Trademark Office.

## Description

### Field of the Invention

The present invention relates generally to information management systems and more particularly, to an intellectual property management system.

### Background of the Invention

Information concerning intellectual property assets such as patents, trademarks and copyrights is typically stored in databases that can be searched and queried. Databases containing information about these assets are now widely available on the Internet, and much of the basic data can be obtained free of charge. For example, the database of patents and trademarks sponsored by the United States Patent and Trademark Office (USPTO) contain records of large number of the patents and trademarks that are processed by these organizations. Other databases include the copyright database sponsored by the United States Library of Congress and those provided by other organizations such as the European Patent Office.

In managing or working with the intellectual property assets of an organization, it is often desirable to maintain a database of IP assets, typically termed a "portfolio." A portfolio may be organized according to various attributes, such as a group of patents having a relationship to one another, a list of graphics associated with a particular product line, or simply a group of IP assets that a user desires to group together for the purpose of management, customer service, manipulation, analysis or other objectives. However, while Internet databases of IP assets such as those mentioned above allow access to and operation on individual assets such as a single trademark, they have not provided organizations with a system for conveniently manipulating a plurality of IP asset records in a database and which is specifically customized to the portfolio of IP asset records representative of copyrights, patents or trademarks or other IP owned by the organization. These databases also do not provide the organization with the ability to manage the IP assets that are to be kept secret within the organization, such as inventions, images/graphics, logos and writings that have not been submitted for inclusion into the public databases or otherwise disclosed to the public. Moreover, these databases do not provide the organization with the ability to store customer or product information and relate them to the organization's IP asset records.

Further, there has not been provided a means for assembly such portfolios conveniently and then managing them using the assembled records. For example, in businesses that produce consumer products, there is a need to maintain information related to the graphics or logos used on those products for legal, sales and marketing purposes. In another example, where a business produces high-end and one-of-a kind consumer products, there is a need to maintain information related to unique and limited edition products, including issuing and tracking certificates of authenticity. There is also a need to obtain, track and manage IP protection for the IP used in or on the products, including such rights as trademark, copyright, trade secret, and patent rights as well as other rights. For example, "use" information is typically maintained for products and services as related to a particular trademark as that information is necessary for the application, registration and maintenance of trademark protection.

Databases storing information about the organization's customers, products, distributors, suppliers, IP assets and legal rights pertaining to those IP assets need to be interconnected and various relationships between them maintained to add high-level data processing capabilities and management.

Accordingly, it is desirable to fulfill or address one or more of the needs as noted above.

### Summary of the Preferred Embodiments

The present invention provides a system for managing and maintaining information related to unique and limited edition products, including graphics and "cartoon" characters ("characters") used on those products as well as the issuing and tracking of certificates of authenticity for those products. The system also maintains legal rights information such as information about the trademarks and copyrights sought and/or registered for those graphics and characters. For example, the legal rights information related to trademark protection includes the usage information of the graphics and characters on products that is necessary for trademark applications, as well as web hyperlink information for creating, accessing and tracking trademark applications and registrations on such websites such as those maintained by the United States Patent and Trademark Office. In one preferred embodiment, the system includes interconnected databases and relationships that add both high-level data processing capabilities and management of/tracking for: (1) intellectual property embodied in such artworks as characters/graphics, (2) the use of these characters/graphics on products, and (3) the existence of legal protection for the intellectual property. It should be noted that although the following description discloses an application of the system with respect to protecting intellectual property through trademarks and/or copyrights, one should understand that the description is equally applicable to intellectual property that may be protected by patents, trade secrets, or other forms of intellectual property protection such as mask works or registered designs.

It is an object of the present invention to provide an integrated graphics and related trademark information creation and tracking system having a data storage system including a database, the database storing a plurality of graphics and related trademark database records. The system also preferably includes a database management system coupled to and in communication with the data storage system, the database management system including a plurality of manager modules coupled to the database that provide access to the plurality of graphics and related trademark database records. The system further preferably includes a user interface system coupled to the database management system. The user interface system provides a user with an interface to create an association between a graphics database record identifying a graphic and a trademark database record identifying a trademark application, and to retrieve information related to the trademark application based on that association.

It is also an object of the present invention to provide a method for managing an intellectual property (IP) database. The method preferably includes the steps of a user entering into a client computer one or more first criteria for a search of the IP database stored on a server computer system and containing records of IP assets, and then searching the IP database for records matching the one or more criteria. The method further preferably includes the step of displaying to the user on the client computer a list of records found in the search; receiving a request from the user to search for legal protection for any IP assets stored in any of the records in the list of records, and updating information related to the legal protection for the IP assets. The method still further preferably includes the step of displaying the information related to the legal protection for the IP assets.

Other objects, features, and advantages of the present invention will become apparent to those skilled in the art from the following detailed description. It is to be understood, however, that the detailed description of the various embodiments and specific examples, while indicating preferred and other embodiments of the present invention, are given by way of illustration and not limitation. Many changes and modifications within the scope of the present invention may be made without departing from the spirit thereof, and the invention includes all such modifications.

### Brief Description of the Drawings

The invention may be more readily understood by referring to the accompanying drawings in which:
FIG. 1 is block diagram of an intellectual property management system configured in accordance with a preferred embodiment of the present invention;
FIG. 2 is a block diagram of a computer system that may be used in the intellectual property management system of FIG. 1, configured in accordance with a preferred embodiment of the present invention;
FIG. 3 is a network diagram illustrating a network of computer systems that may be used with the intellectual property management system of FIG. 1, configured in accordance with a preferred embodiment of the present invention;
FIG. 4 is a screenshot illustrating a graphical user interface (GUI) of intellectual property management system of FIG. 1, configured in accordance with a preferred embodiment of the present invention;
FIG. 5 to FIG. 31 are a series of screenshots illustrating the operation of a Character Manager module of the intellectual property management system of FIG. 1, configured in accordance with a preferred embodiment of the present invention;
FIG. 32 to FIG. 42 are a series of screenshots illustrating the operation of a Product Manager module of the intellectual property management system of FIG. 1, configured in accordance with a preferred embodiment of the present invention;
FIG. 43 to FIG. 61 are a series of screenshots illustrating the operation of a Legal Manager module of the intellectual property management system of FIG. 1, configured in accordance with a preferred embodiment of the present invention;
FIG. 62 to FIG. 74 are a series of screenshots illustrating the operation of a Certificate Manager module of the intellectual property management system of FIG. 1, configured in accordance with a preferred embodiment of the present invention;
FIG. 75 to FIG. 82 are a series of screenshots illustrating the operation of a Customer Manager module of the intellectual property management system of FIG. 1, configured in accordance with a preferred embodiment of the present invention; and,
FIG. 83 to Fig. 86 are a series of screenshots illustrating the operation of a Search Manager module of the intellectual property management system of FIG. 1, configured in accordance with a preferred embodiment of the present invention.

Like numerals refer to like parts throughout the several views of the drawings.

### Detailed Description of the Preferred Embodiments

In the following detailed description of the preferred embodiments, reference is made to the accompanying drawings that form a part hereof, and in which is shown, by way of illustration, specific preferred embodiments in which the invention may be practiced. The embodiments described herein are sufficient in detail to enable those skilled in the art to practice the invention, but it is to be understood that other embodiments may be utilized. Further, logical, mechanical, or electrical changes may be made without departing from the spirit and scope of the present invention. The following detailed description of the preferred embodiments is therefore not to be taken in a limiting sense, and the scope of the present invention is defined only be the appended claims.

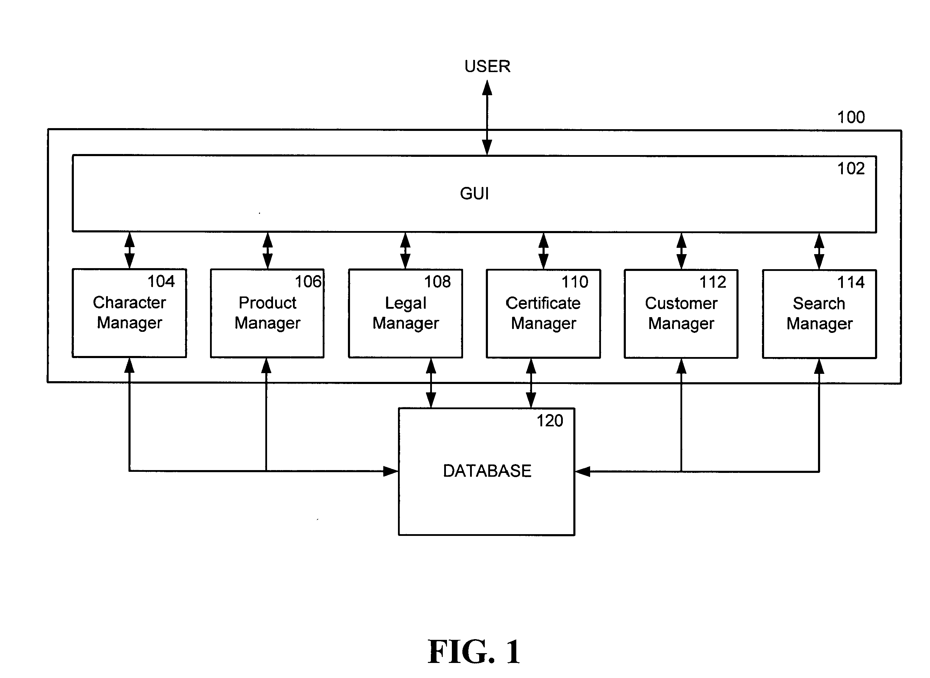

FIG. 1 is a block diagram of an intellectual property management system 100 configured in accordance with one preferred embodiment of the present invention, including a graphical user interface (GUI) 102 coupled to a series of manager modules. The GUI 102 provides a user with access to the information stored in a database 120 using the functionality provided by the series of manager modules. As further described below, in one preferred embodiment, the database 120 stores information in one or more related databases that are logically grouped by the following areas: Characters (graphics), Products, Legal, Certificates and Customers. As used herein, the term "database" should be understood to cover reference to a single database or a collection of databases. Thus, in one preferred embodiment, the database 120 includes a Character database, a Product database, a Legal database, a Certificate database, and a Customer database. In other embodiments, information may be stored or arranged using a variety of data storage software and hardware techniques known to those of ordinary skill in the art in database programming. For example, one database system that may be used with the present invention is the SQL Server™ system as offered by Microsoft Corp. Other data storage systems, such as those based on Oracle Database™ products offered by Oracle Corporation or the MySQL™ database server offered by MySQL AB, may also be used. These data storage systems run on a variety of hardware platforms, including those based on the microprocessors offered by Advanced Micro Devices™, Inc., or Intel™ Corp.

As noted above, the database 120 is preferably accessible by the functionality provided by a series of modules in the intellectual property management system 100. In one embodiment, the series of modules includes a Character Manager module 104, a Product Manager module 106, a Legal Manager module 108, a Certificate Manager module 110, a Customer Manager module 112, and a Search Manager module 114. The user accesses the functionality of each module through the GUI 102, as described further herein, through a series of exemplary screenshots of what a user would see on a preferred computer display.

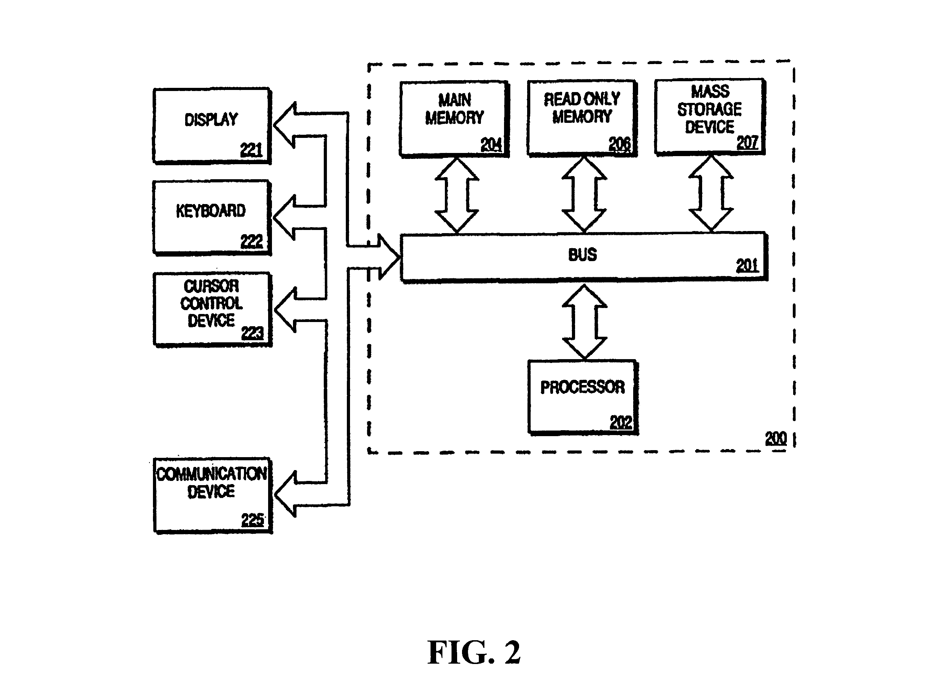

FIG. 2 illustrates an example of a computer system 200 in which the features of the present invention may be implemented. The computer system 200 includes a bus 201 for communicating information between the components in the computer system 200, and a processor 202 coupled with the bus 201 for executing software code, or instructions, and processing information. The computer system 200 further comprises a main memory 204, which may be implemented using random access memory (RAM) and/or other random memory storage device, coupled to the bus 201 for storing information and instructions to be executed by the processor 202. The main memory 204 also may be used for storing temporary variables or other intermediate information during execution of instructions by the processor 202. The computer system 200 also includes a read only memory (ROM) 206 and/or other static storage device coupled to the bus 201 for storing static information and instructions for processor 202.

Further, a mass storage device 207, such as a magnetic disk drive and/or or a optical disk drive, may be coupled to the computer system 200 for storing information and instructions. The computer system 200 can also be coupled via bus 201 to a display device 221, such as a cathode ray tube (CRT) or a liquid crystal display (LCD), for displaying information to a user so that, for example, graphical or textual information may be presented to the user on display device 221. Typically, an alphanumeric input device 222, including alphanumeric and other keys is coupled to bus 201 for communicating information and/or command the user can selections to processor 202. Another type of user input device show in the figure is a cursor control device 223, such as a conventional mouse, touch mouse, trackball, track pad or other type of cursor direction keys for communicating direction information and command selection to processor 202 and for controlling movement of a cursor on display 221. Although not illustrated, the computer system 200 may optionally include video, camera, speakers, sound card, and many other conventional options. Various types of input devices, including, but not limited to the input devices described herein unless otherwise noted, allow the user to provide command or input to the computer system 200. For example, in the various descriptions contained herein, reference may be made to a user "selecting," "clicking," or "inputting," and any grammatical variations thereof, one or more items in a user interface. These should be understood to mean that the user is using one or more input devices to accomplish the input.

A communication device 225 is also coupled to bus 201 for accessing other computer systems, as described below. The communication device 225 may include a modem, a network interface card, or other well-known interface devices, such as those used for interfacing with Ethernet, Token-ring, or other types of networks. In any event, in this manner, the computer system 200 may be coupled to a number of other computer systems via a network infrastructure such as the infrastructure illustrated and described below.

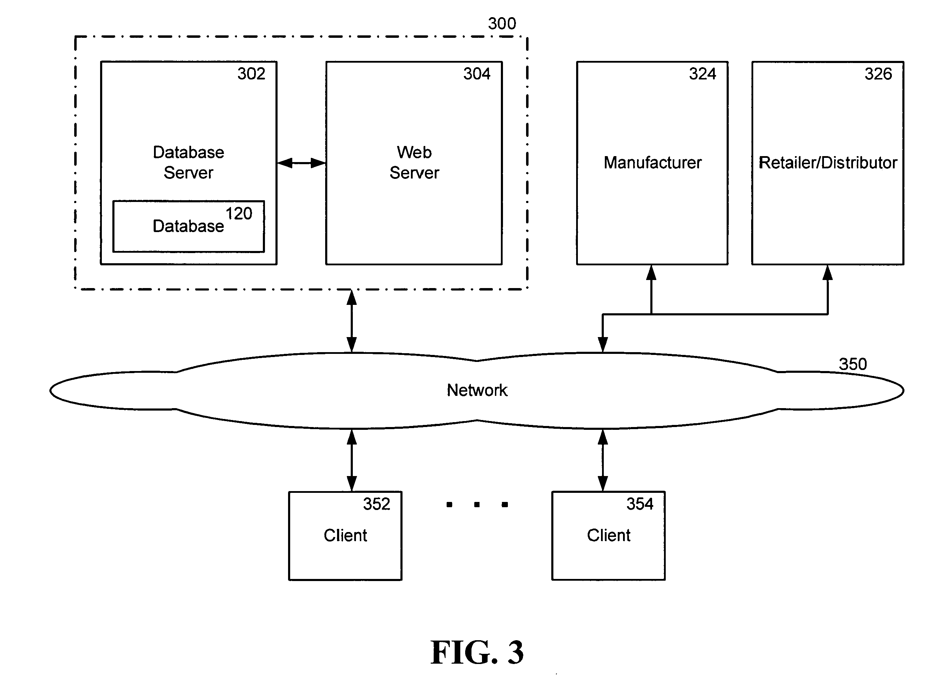

FIG. 3 illustrates a network including a server system 300 having a database server 302 for storing database 120 and a web server 304 that stores the instructions necessary to access and present the information from, as well as store information into, database 120. The user, using a client computer such as a client 352 and a client 354, accesses server system 300 through a network 350. Other systems, such as those belonging to a manufacturer 324 or a retailer/distributor 326, may also be coupled to server system 300. In the illustrated embodiment, network 350 represents a variety of networks that may include one or more local area networks as well as wide area networks. The functionality provided by database server 302, web server 304, client 352 and client 354, as well as by the computer systems operated by the manufacture 324 and retailer/distributor 326 may be implemented using a computer system having the characteristics of the computer system 200 described above. It should be noted, however, that the specific implementation of the computer system or systems used to describe the present invention is not to be limiting unless otherwise specifically noted. For example, the functionality provided by database server 302 and web server 304 may be combined in one computer system. Further, the functionality provided by database server 302 and 304 may be redistributed over several computers.

As described above, the user may interact with the information stored in database 120 through GUI 102. In the following description, the GUI 102 is implemented using one or more web pages (which may be referred to as "pages," "screens," or "forms") provided by the web server 304 accessible by the user using any Internet web browser software, such as the Internet Explorer™ browser provided by Microsoft Corp., on a client computer such as client 352. In another embodiment, one or more custom software programs can be created to implement the system described herein. Of course, the web server 304 may itself have browser software installed on it so as to be accessed by the user. Further, throughout the description of the various embodiments of the invention herein, references are made to the user performing such actions as selecting buttons, executing searches or updates on the database 120. In one preferred embodiment, these requests are generated by the user interacting with the browser. For example, one or more pages described herein may be forms that include fields in which the user may type in such data. Once the user has provided such data, the user may select a button or link on the page to request an update of the database 120 with the information. The browser will send the web server 304 a link that includes the information being sent as well as the request to update the database 120. Depending on the browser being used, the user may need to reload the page being viewed so as to "refresh" the view of the page. In one preferred embodiment, there are two ways to refresh the view: (1) with the refresh feature provided by the user's browser, or (2) a refresh button provided on the page. In one preferred embodiment, the refresh button is displayed as an envelope icon. Either selection will request the web server 304 to send the updated page so that the browser may refresh the page.

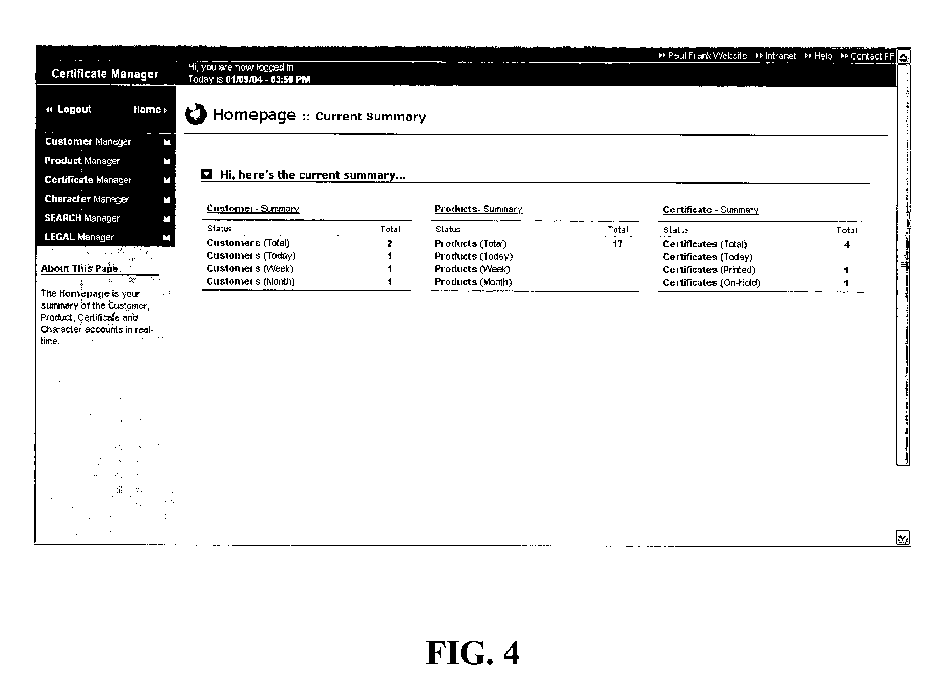

FIG. 4 illustrates a screenshot of a primary homepage of the intellectual property management system 100 for accessing each of the different modules provided by the intellectual property management system 100. This page shows the user a summary of the customers, products, and certificates that have been added to the database 120. On the left hand side is a menu bar for accessing the various managers of the major categories of data stored on database 120. The user can navigate the database structure of the database 120 using the intellectual property management system 100 by choosing any manager in the menu bar as well as specific links located on the pages described herein. For example, the user may select the "Customer - Summary," "Product - Summary," or "Certificate - Summary" links as shown on the Character Manager homepage. In one embodiment, the modules can be accessed in any order. In another embodiment, specific workflows may be accomplished by providing the user access to a series of pages in a predetermined fashion.

In the following exemplary description of the use of the system, the functionality provided by the Character Manager module 104 will be discussed first, followed by the functionality provided by the Product Manager module 106, the Legal Manager module 108, the Certificate Manager module 110, the Customer Manager module 112 and the Search Manager module 114. Thus, referring to FIG. 4, to access the functionality of the Character Manager module 104, which provides the user access to the entire database of characters and graphics in database 120, the user clicks on the "Character Manager" button on the menu bar.

### Character Manager

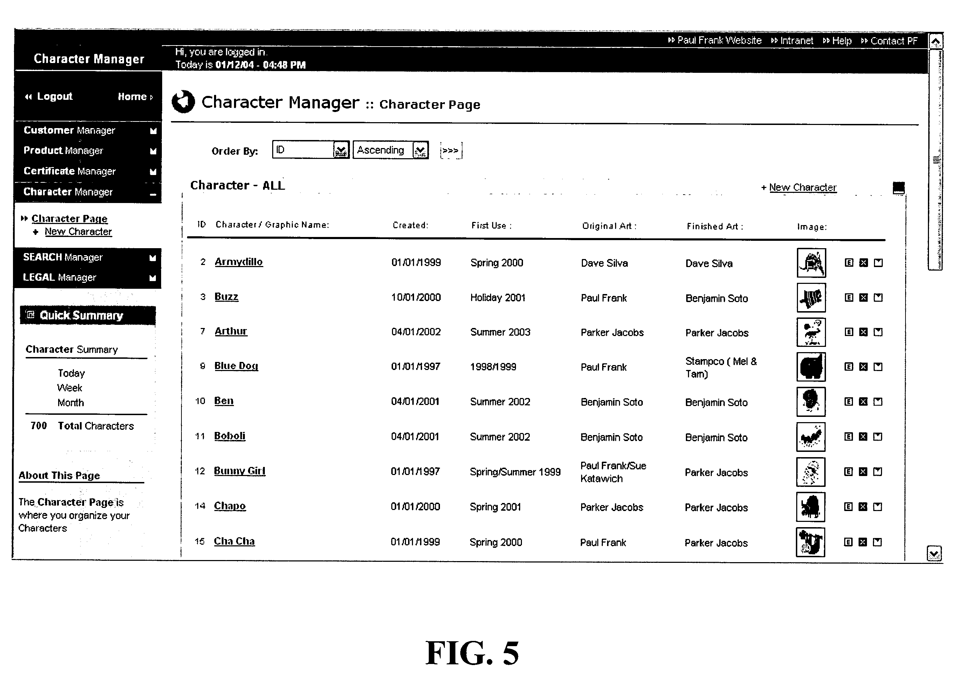

FIG. 5 illustrates a Character Manager homepage of the Character Manager module 104. A "Character - ALL" list on the main page provides the user with a snapshot of the information on each character or graphic in the database, as well as a picture to facilitate visual identification. The columns displayed in the list include a character/graphic identification number (ID) column, a creation date (Created) column, a first use date (First Use) column, an original artist (Original Art) column, a finishing artist (Finished Art) column, an thumbnail (Image) column, and a tools column (represented by the 3 icons in the column).

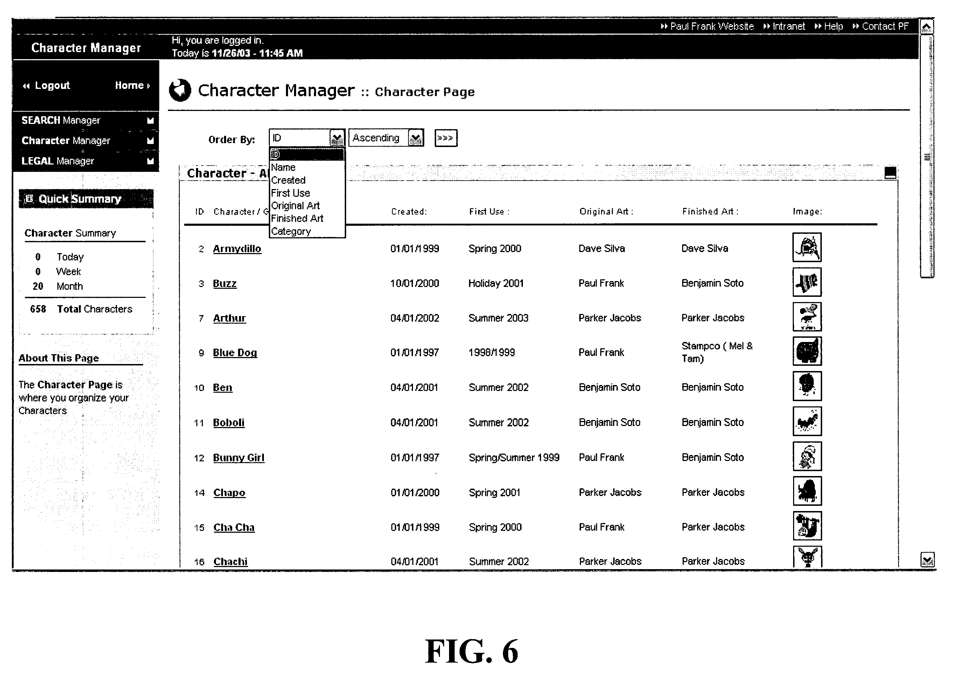

The user can sort the list in a number of ways, such as by using an "Order By" drop-down menu at the top of the page. In one embodiment, the default is to order the list by the character ID number. However, the user can sort the character list using a variety of other options, including by character name. In addition, the user can change the sorting of the list from ascending to descending order and vice versa with either category. For example, the user can sort the list by name in descending order by first choosing the Order By drop down menu and choosing the "name" option; then choosing the "Descending" item in next drop down menu; and finally clicking on an execute sort button represented by the three arrows to the right of the field. FIG. 6 illustrates the drop down menu being fully exposed and showing the full list of sorting options, including by ID, name of product (Name), creation date (Created), first use date (First Use), original artist (Original Art), artist who finished artwork (Finished Art) and category of the product (Category).

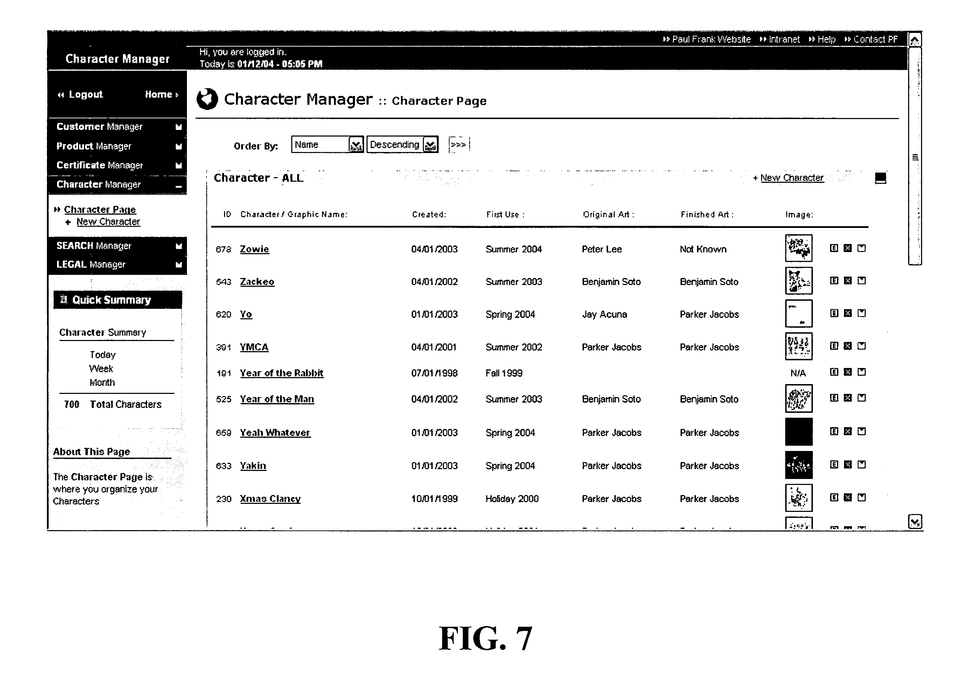

FIG. 7 illustrates that the list is sorted by character name in descending order. In addition to sorting the list, the user can search for a particular character by using the Search Manager module 114, as further described below. To examine a character record in detail, the user can select one of the entries in the list, such as the entry "Yakin."

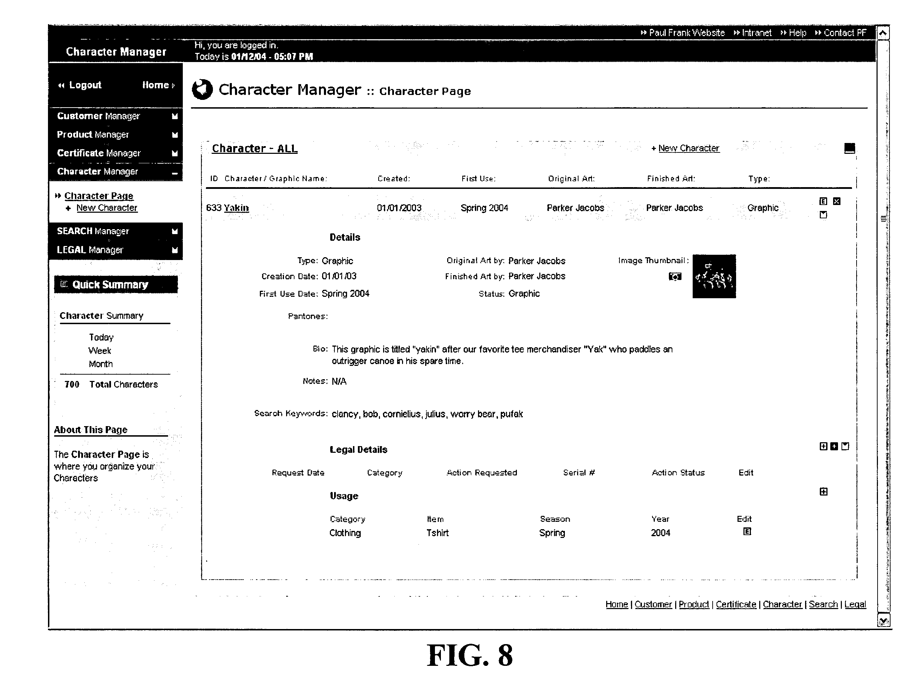

FIG. 8 illustrates a Character Detail page for the Yakin graphic, which displays the same information on the character or graphic as in the list of the main page, such as whom the original artist was (Original Art by), when it was created (Creation Date), when it was first used (First Use Date). In addition, in one preferred embodiment, the Character Detail page also displays such details as a type identifier (Type), a status of the character/graphic (Status), the standard colors used in the character/graphic (Pantones), a biography on the creation of the character/graphic (Bio), a note for miscellaneous information (Notes), a list of keywords that will facilitate the locating of the character/graphic (Search Keywords), and a list of the products on which the character/graphic was used (Usage" section). In one preferred embodiment, the Character Detail page also displays any trademarking activity related to the character or graphic in the "Legal Details" section. This is described in further detail with reference to the Legal Manager module 108, below.

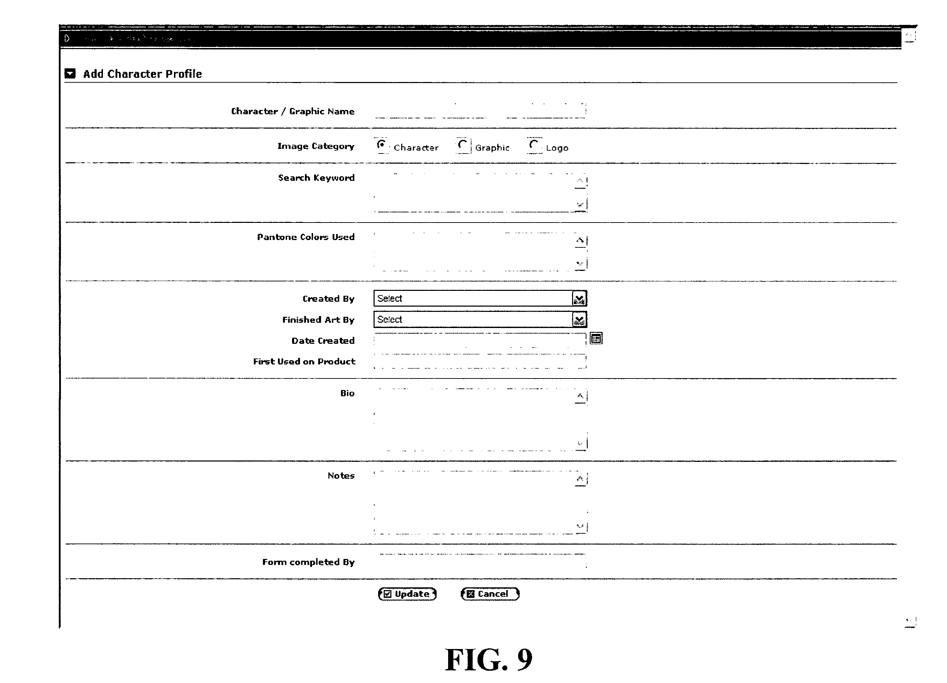

In one embodiment, to allow a user to create a new character or graphic, a "New Character" button is located in two different pages, such as at the top of any Character Detail page, as illustrated by FIG. 8, and on the Character Manager homepage, as illustrated by FIG. 5. In either case, the selection of the "New Character" button by the user will cause the user to be redirected to an "Add Character Profile" form, as shown in FIG. 9.

The following example assumes that the user enters the following information into the form:

| | |
|---|---|
| Name : | Test Graphic |
| Category | Graphic |
| Keywords : | test, clown |
| Created By: | Annie Younger |
| Finished By: | Benjamin Soto |
| Date Created: | 1/15/2004 |
| First Used: | 1/15/2004 |
| Notes : | this is a test file |
| Completed by: | Example |

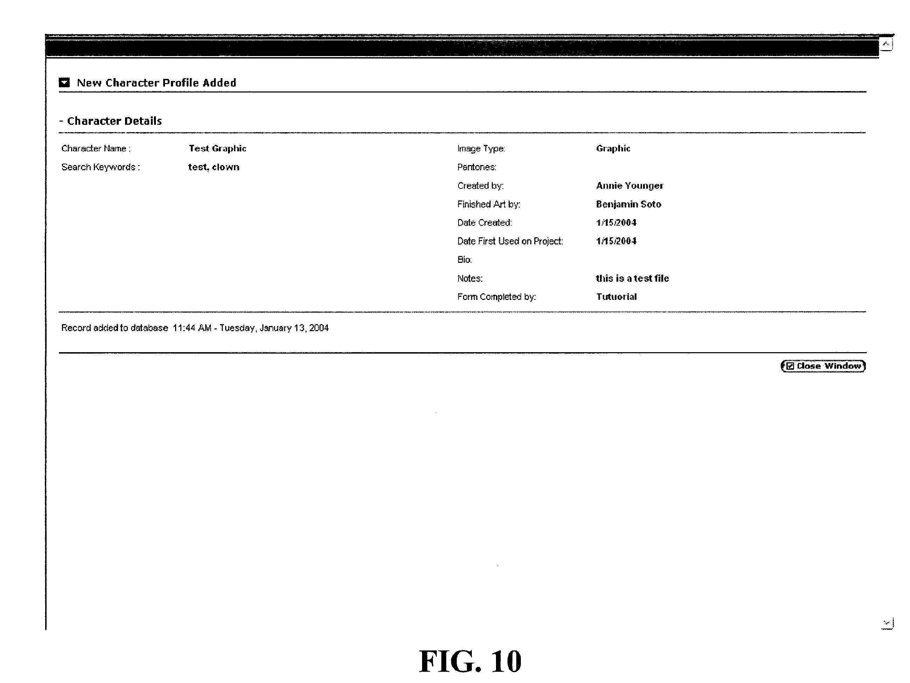

Once the user has finished entering the text and the user selects the "Update" button, a "New Character Profile Added" page confirming the addition of the character database record will be displayed, as shown in FIG. 10. In one embodiment, the intellectual property management system 100 will attempt to verify that all information entered is consistent as to form (e.g., checking format of the date), as well as substance (e.g., checking that the first use date is not before the creation date) by using software code implementing standard data consistency methods and logic.

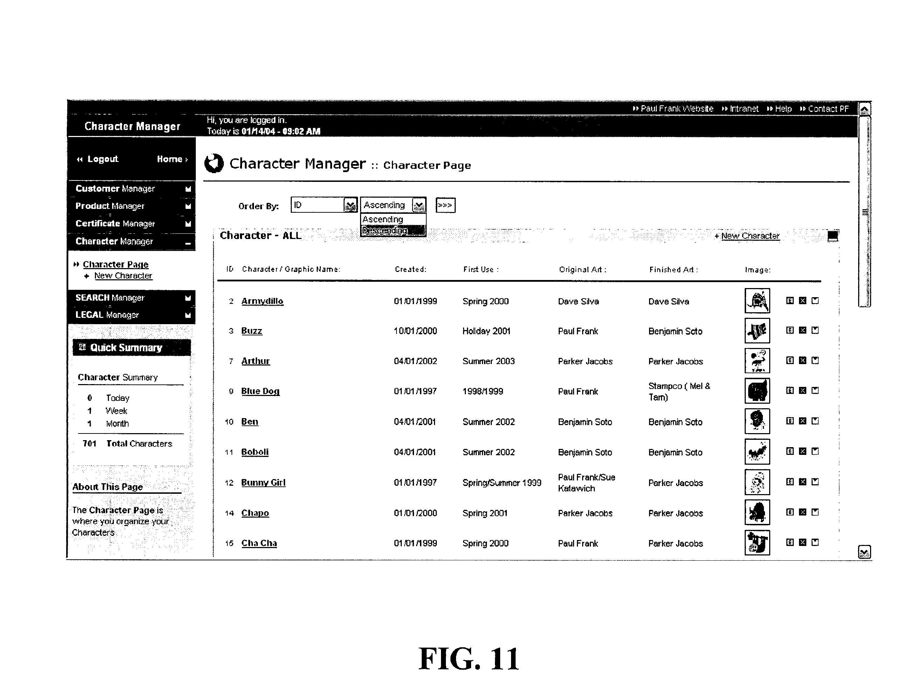

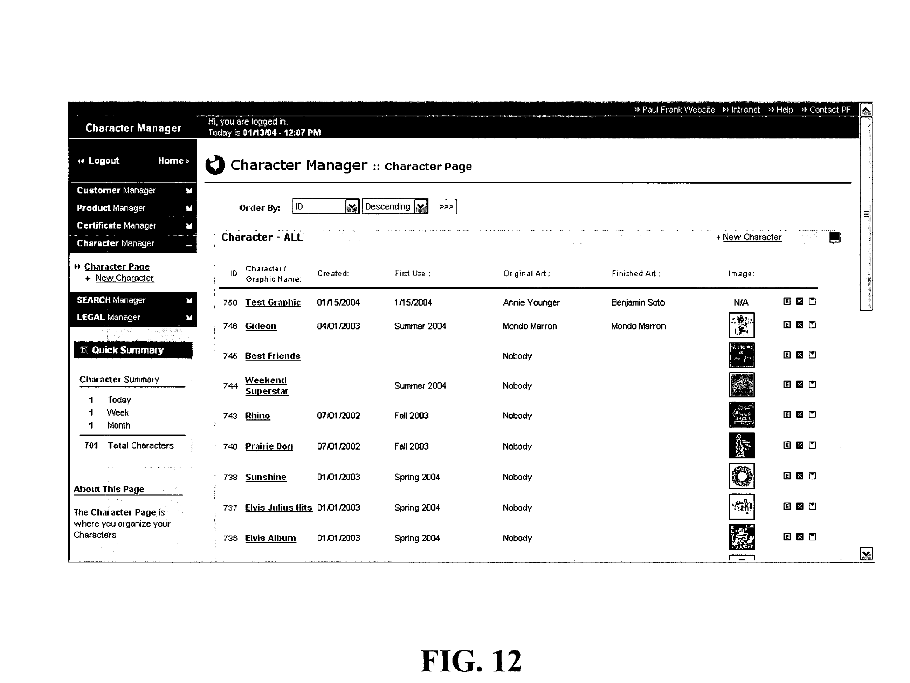

Once the user has verified that the displayed information is accurate, the user can select the "Close Window" button, and the intellectual property management system will return the user to the Character Manager homepage. Again, referring to FIG. 11, the user can use the pull-down menu to sort the list by ID in descending order so that the record with the highest ID, which is the record just added by the user, is the first entry in the list. The sorted list is then updated, as shown in FIG. 12.

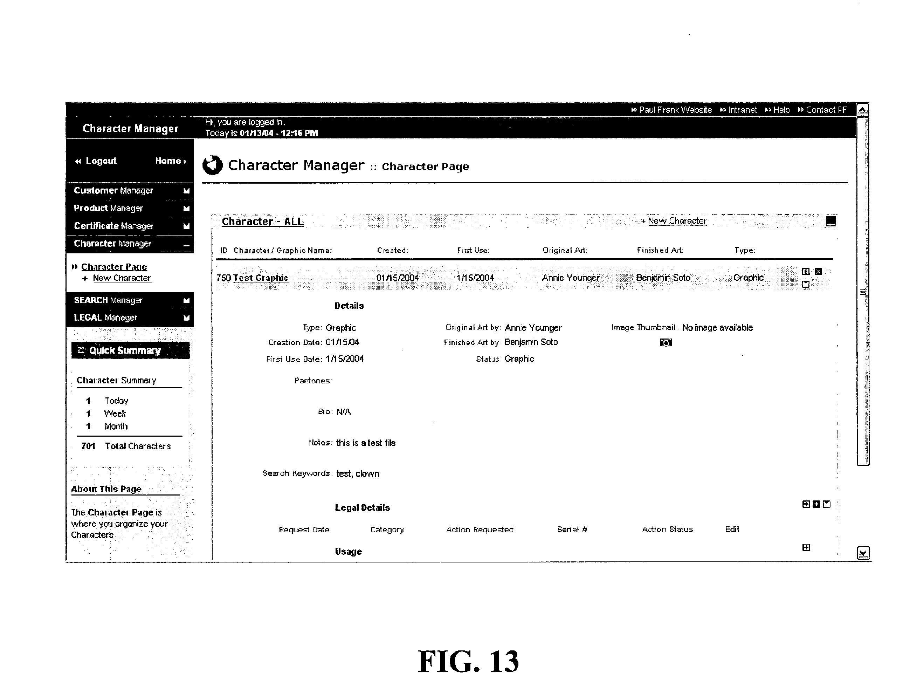

The intellectual property management system 100 provides the user the ability to edit an existing record. For example, to edit the record that the user just created, the user can first the user can select the "Test Graphic" link, which will bring the user to the Character Detail page for the Test Graphic graphic that was just added, as illustrated by FIG. 13. Then, the user can review the details of the record provided by the Character Detail page for the character/graphic, as described above, and decide if anything needs to be added or changed. For example, if the user wishes to associate a graphics file for the Test Graphic graphic so that a thumbnail can be displayed in the list or in the Character Detail page, the user can do so by the user can selecting the camera icon under the "Image Thumbnail" caption.

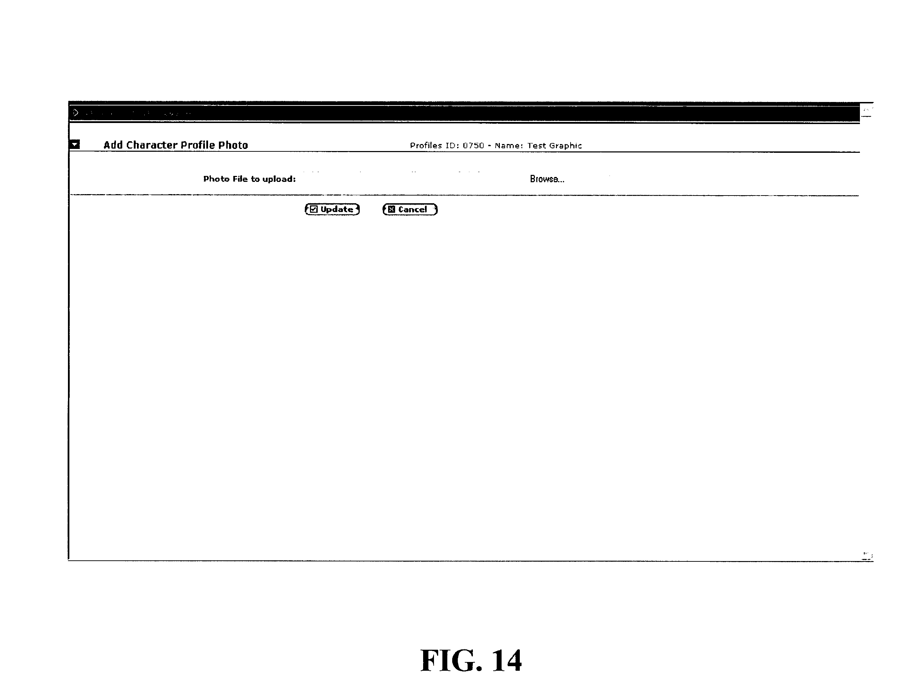

FIG. 14 illustrates an "Add Character Profile Photo" page, where the user can specify the location of a graphics file to upload into the database 120 by either entering the path to the graphics file in the text box, or the user can selecting the "Browse" button to locate the file using a browser window.

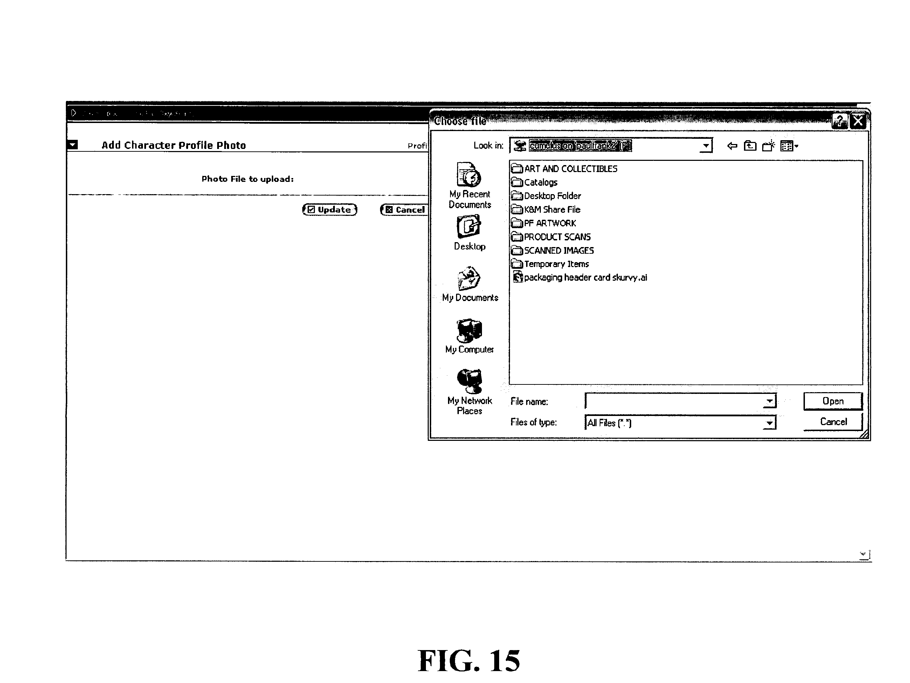

FIG. 15 illustrates where the user has opted to locate the graphics file using a browser window. Once the user locates the graphics file, the user chooses it and then clicks on the "Open" button in the browser. The intellectual property management system 100 will associate the graphics file with the character. In one embodiment, graphics files having "web-friendly" formats, such as JPEG and GIF format files, may be used. In another embodiment, any graphic format may be used, and the intellectual property management system 100 can convert the chosen graphics file to be a format usable by the system. In yet another embodiment, the intellectual property management system 100 can create a thumbnail from the chosen graphics file, and then store the graphics file in its original form. If the user does not wish to choose a graphics file or wishes to come back to choose it later on, the user can click "Cancel" on the browser window and then click "Cancel" on the Add Character Profile Photo page as shown in FIG. 14. This will bring the user back to the Character Detail screen as shown in FIG. 13.

In addition to allowing the user to select a graphics file to associate with the record, the intellectual property management system 100 also allows the user to edit the information in the record. In one embodiment, to edit the information in the record the user can select the "edit" button at the top of form FIG. 13, denoted by a square with an "E."

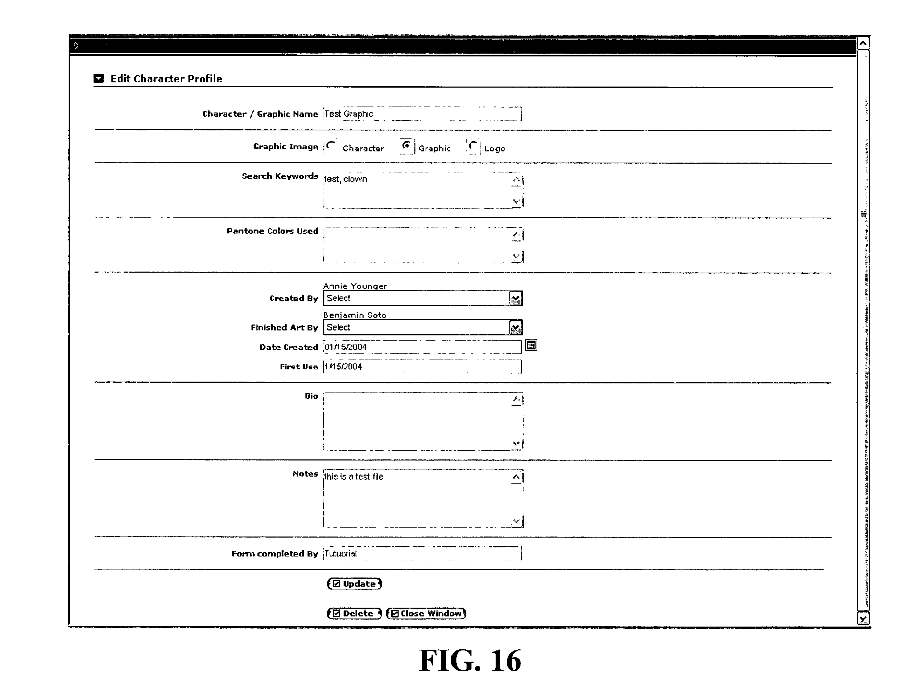

FIG. 16 illustrates the Edit Character Profile screen where the user can edit the fields of the record. In one embodiment, the only field that the user cannot edit is the ID field as this is a number that must remain unique in order for the intellectual property management system 100 to ensure that database integrity is maintained. Thus, no two records can have the same ID simultaneously, and, further, no ID can be used more than once even if the record is deleted. In another embodiment, a separate record index number, which may be hidden from the user, can be used by the intellectual property management system 100 to track each record and the ID can thus be modified by the user. Once the user has completed editing the record, the users clicks on the "Update" button and then closes the window using the "Close" button.

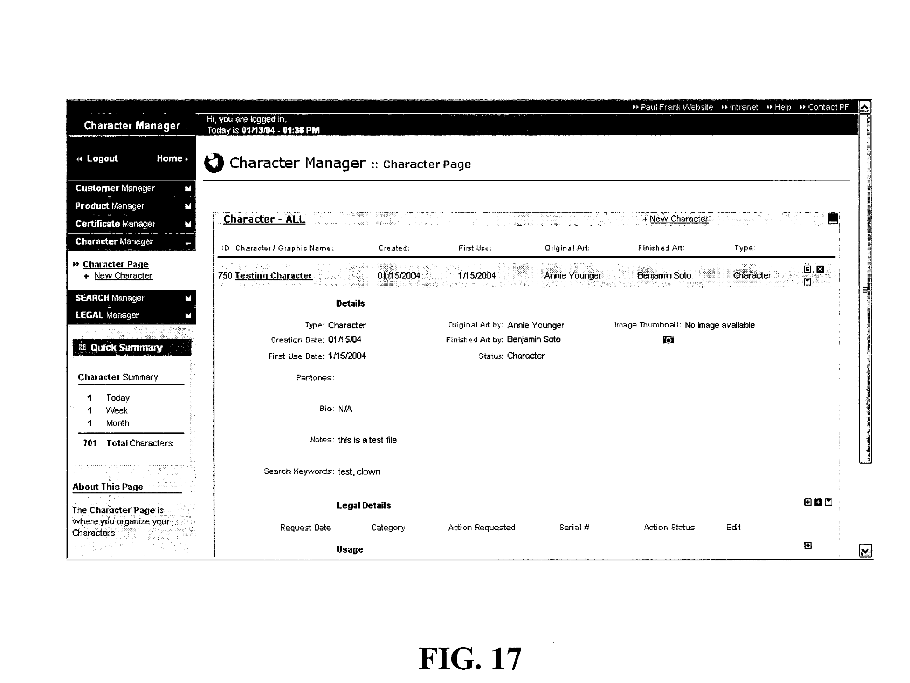

FIG. 17 illustrates the Character Details page reflecting that the user has changed the name of the graphic to "Testing Character" and changed the record type from graphic to character.

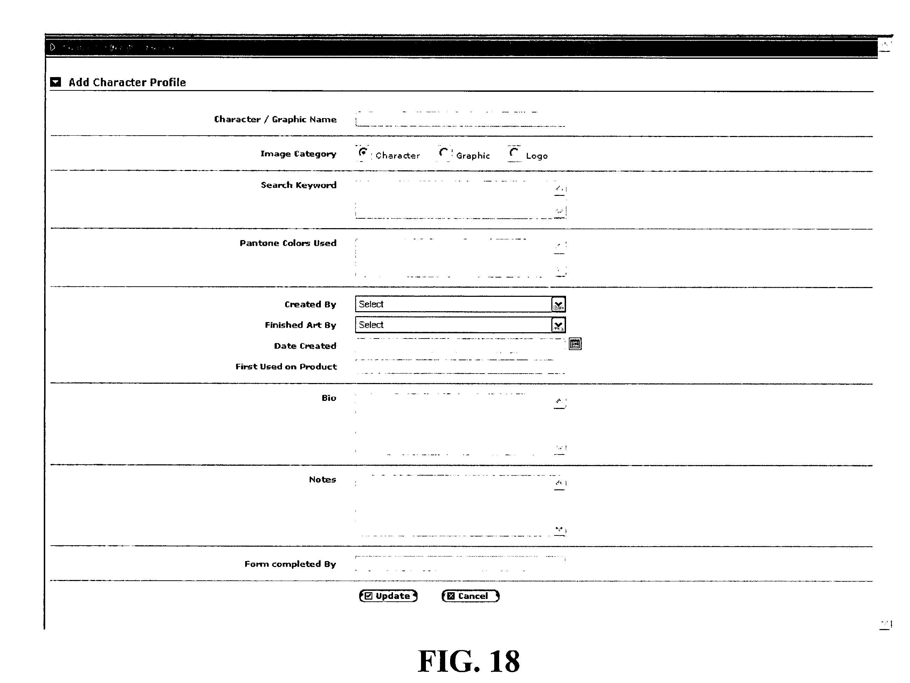

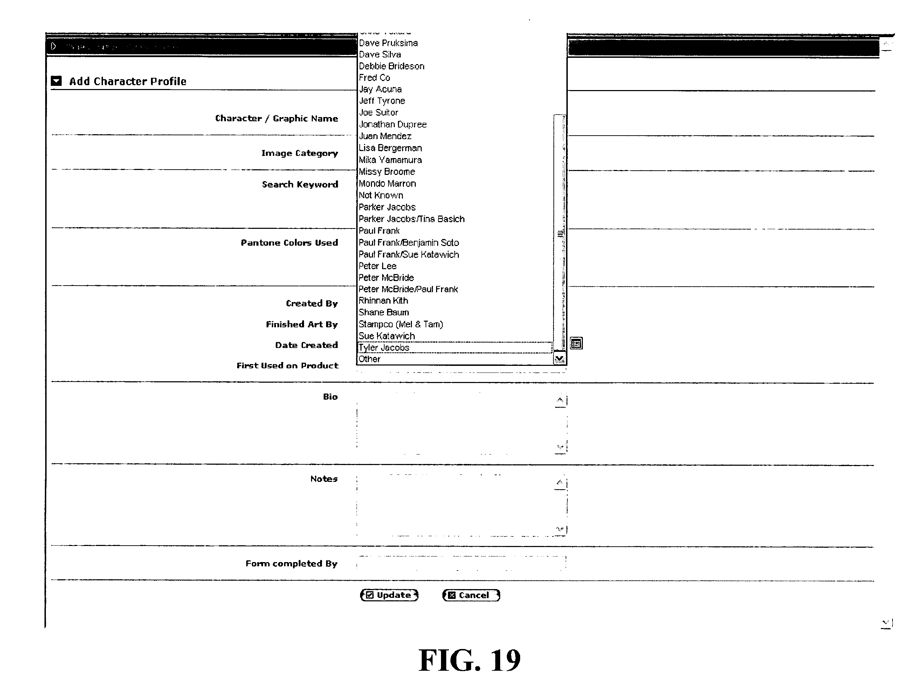

The intellectual property management system 100 also allows the user to add a new artist to the list of artists displayed in the drop down menu in the Original Art and/or the Finished Art fields of the Edit Character Profile page as shown in FIG. 16 or the Character Detail page as shown in FIG. 17. For example, the user can add the artist using the Add Character Profile form. Thus, the user first selects the "New Character" button, which will bring the user to an "Add Character Profile" page, as shown by FIG. 18. The user can then select the drop down menu for "Created By" and scroll down to select the "Other" entry at the bottom of the drop-down list, as shown by FIG. 19.

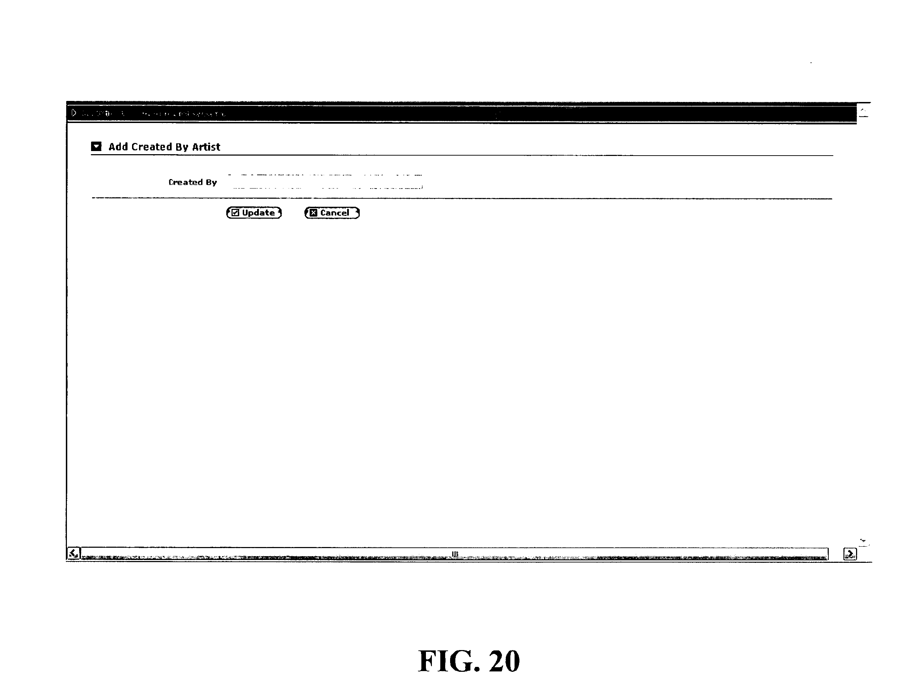

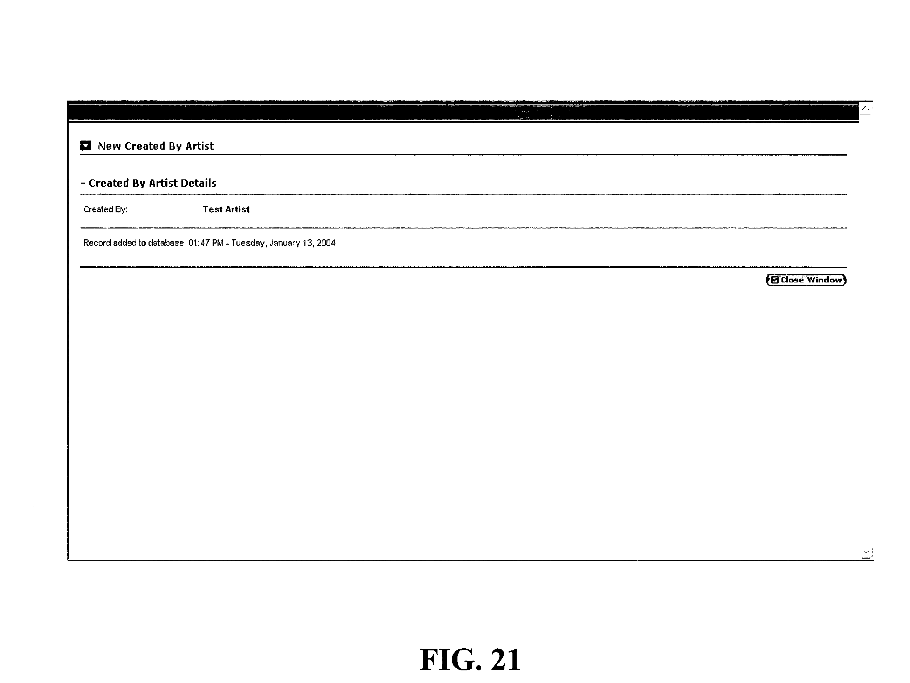

FIG. 20 illustrates the screen where the user can add an artist. For example, the user can type "Test Artist" into the "Created By" field and the user can select the "Update" button, which will bring the user to the confirmation screen adding the artist illustrated by FIG. 21. The user can click the "Close Window" button to close the window, which will brings the user back to the "Add Character Profile" form as previously illustrated by FIG. 18.

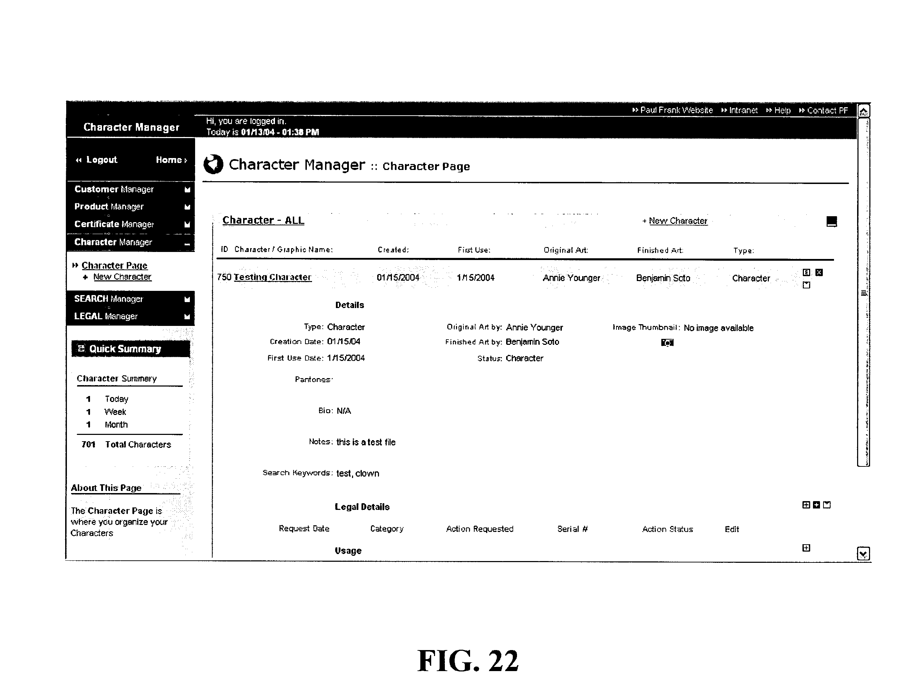

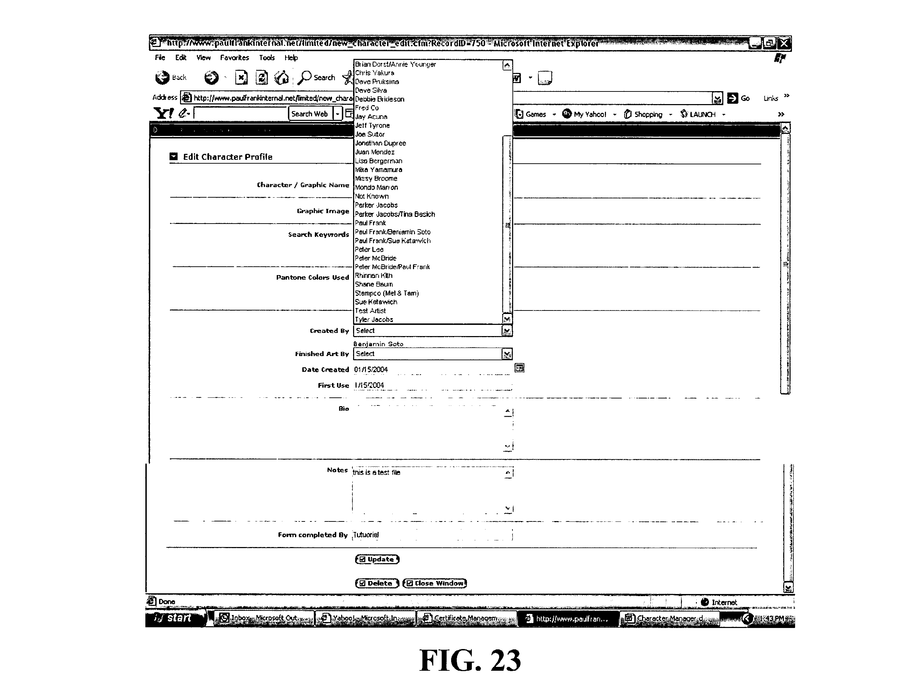

In this example, as the user may not intend to add a new record for a new character or graphic but instead may only wish to add an artist, the user can leave the page by selecting the "Cancel" button, which will return the user to the Character Detail page for the Test Character character, as illustrated by FIG. 22. Once back at this page, the user may, for example, edit this record to change the artist by selecting the "edit" button. The user will then be presented with the Edit Character Profile page, as illustrated by FIG. 23; and can then use the "Created By" dropdown menu to choose the artist entry for the "Test Artist." The user can select the "Update" button to update the character database record.

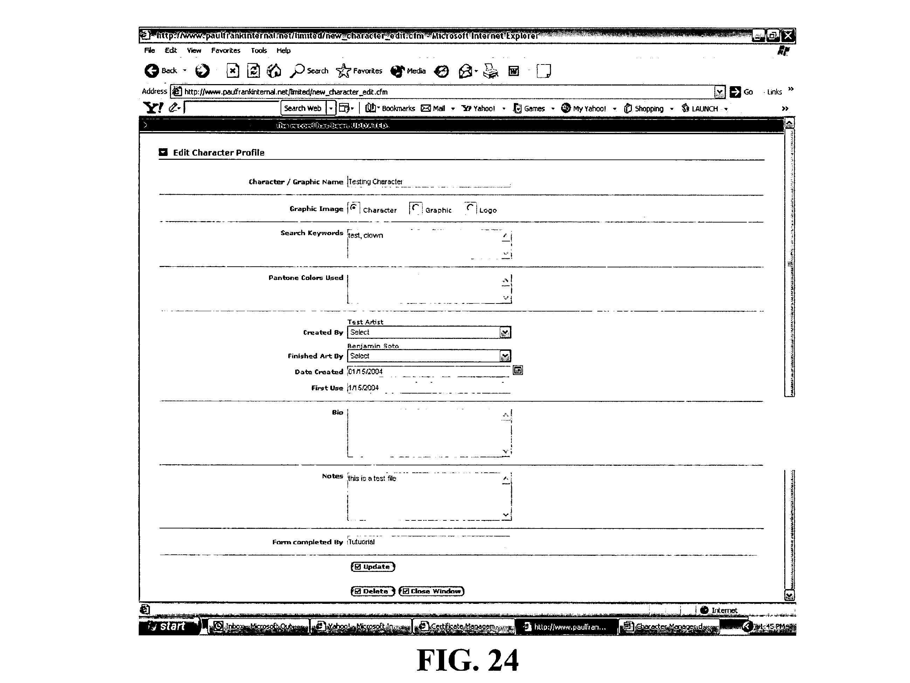

FIG. 24 illustrates that the "Created By" dropdown menu lists the new created "Test Artist" is now the user can selection for this record. To exit this screen, the user simply selects the "Close Window" button.

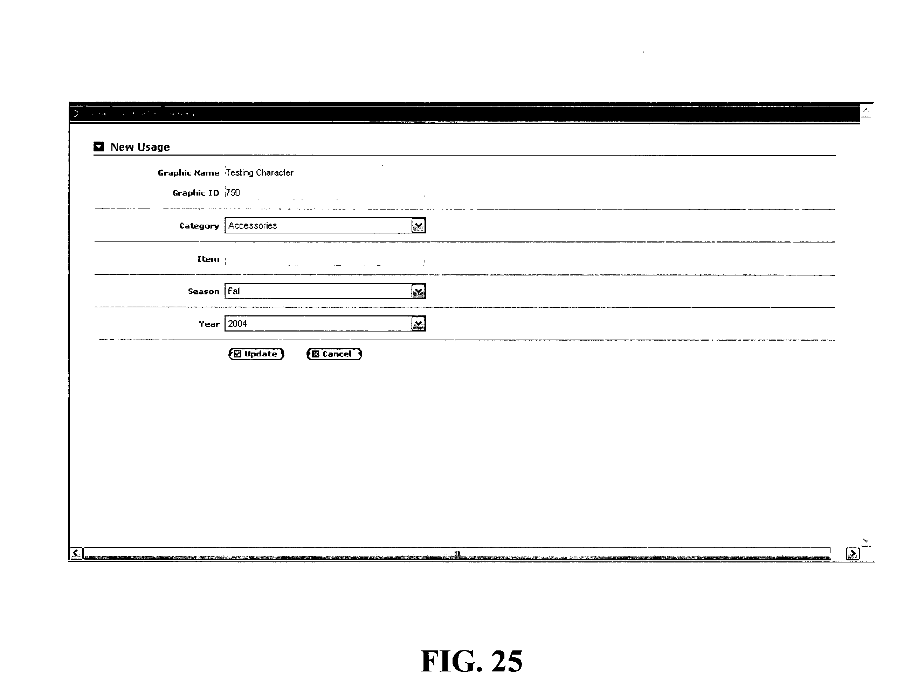

Once the user has created a record for the graphic or character, the user can update the record every time the graphic or character is used on a product to track the usage data for business as well as legal purposes (e.g., filing a Statement of Use). For example, to add a product usage to this record, the user locates the "Usage" section at the bottom of the form as illustrated by FIG. 22. To the far right of the word "Usage" is a square with a "+" symbol that the user can select and, as seen in FIG. 25, the form to add Usage information is presented to the user and automatically filled-in with the graphics' name and ID. The user can fill in the form with the following information:

| | |
|---|---|
| Category: | Clothing |
| Item: | Tshirt |
| Season: | Spring |

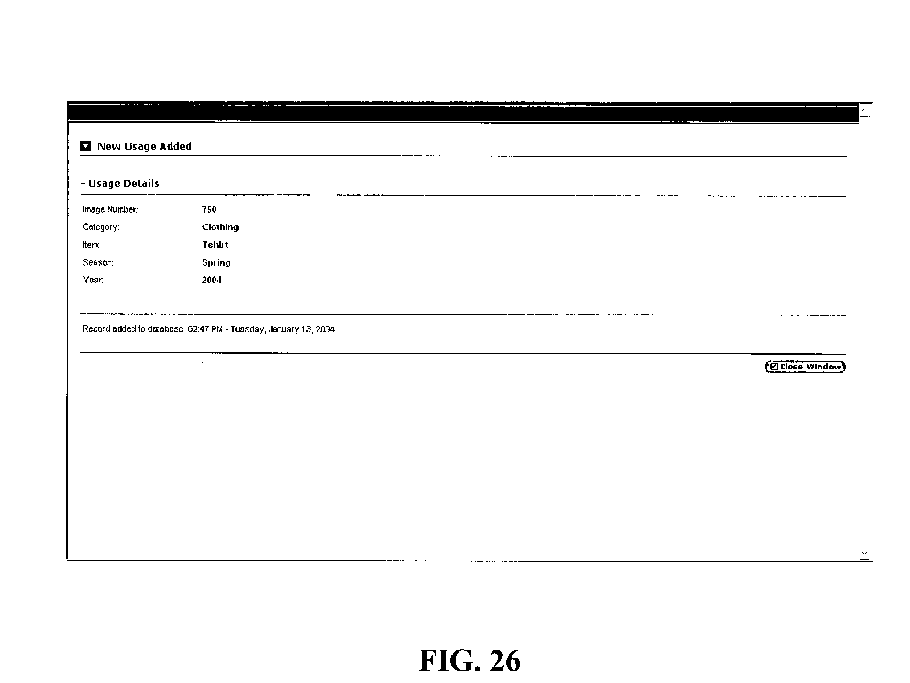

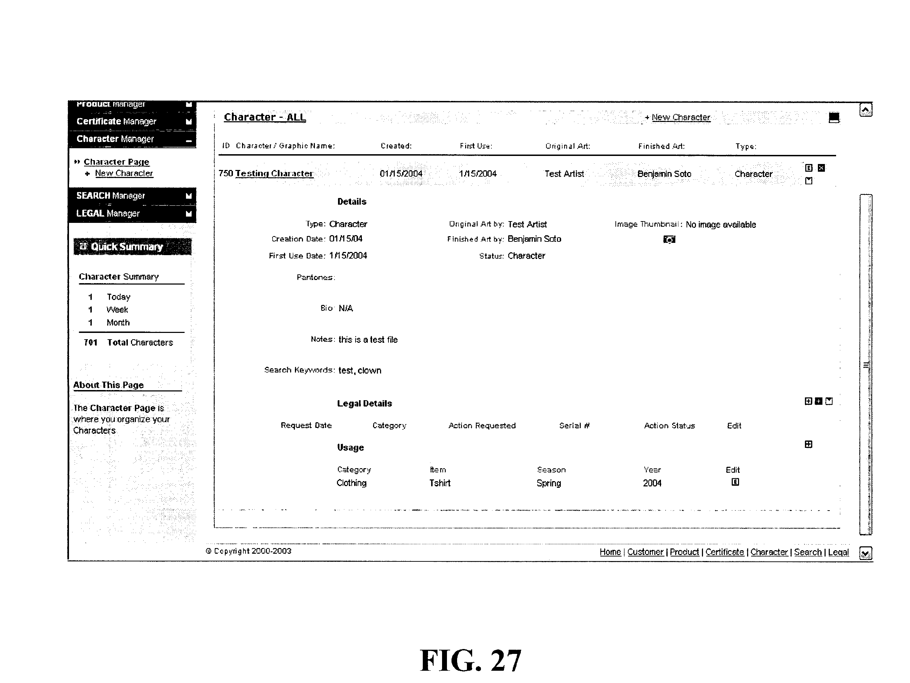

The user can select the "Update" button to complete the process and will then be presented with the confirmation page, as illustrated by FIG. 26. The user can select the "Close Window" button and return to the Character Detail page and to see that the usage information has been added to the record, as illustrated by FIG. 27.

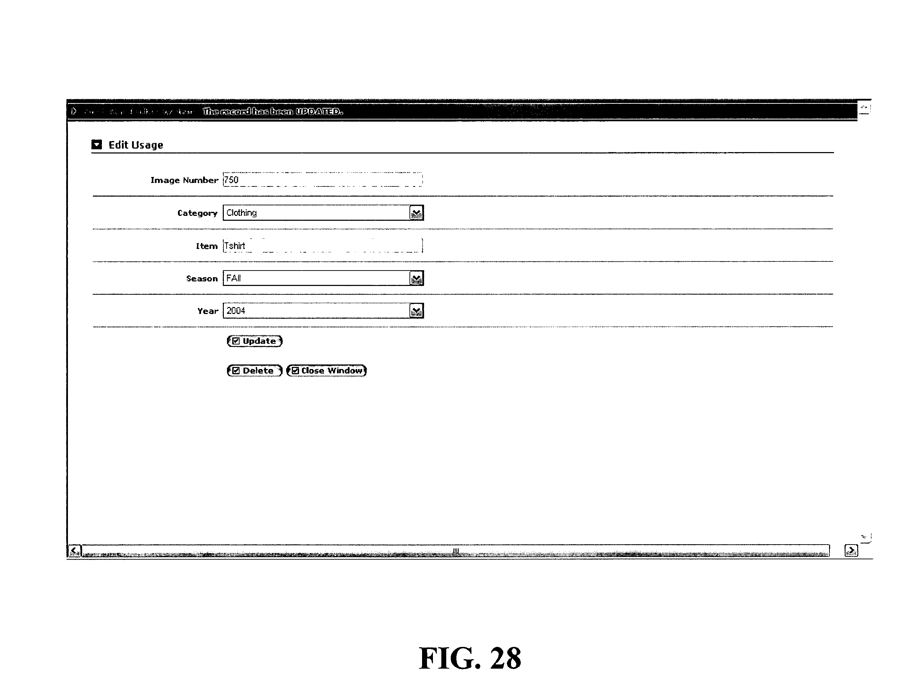

Once the user has added usage information, there may be a situation where the user either needs to edit or delete the usage information. To access the edit function for usage information, the user can select a square with an "e" in it at the end of the usage line. For example, if the user changes the Season from "Spring" to "Fall" and selects the "Update" button, the intellectual property management system 100 will display, at the top of the form, the message: "The record has been UPDATED," as illustrated by FIG. 28.

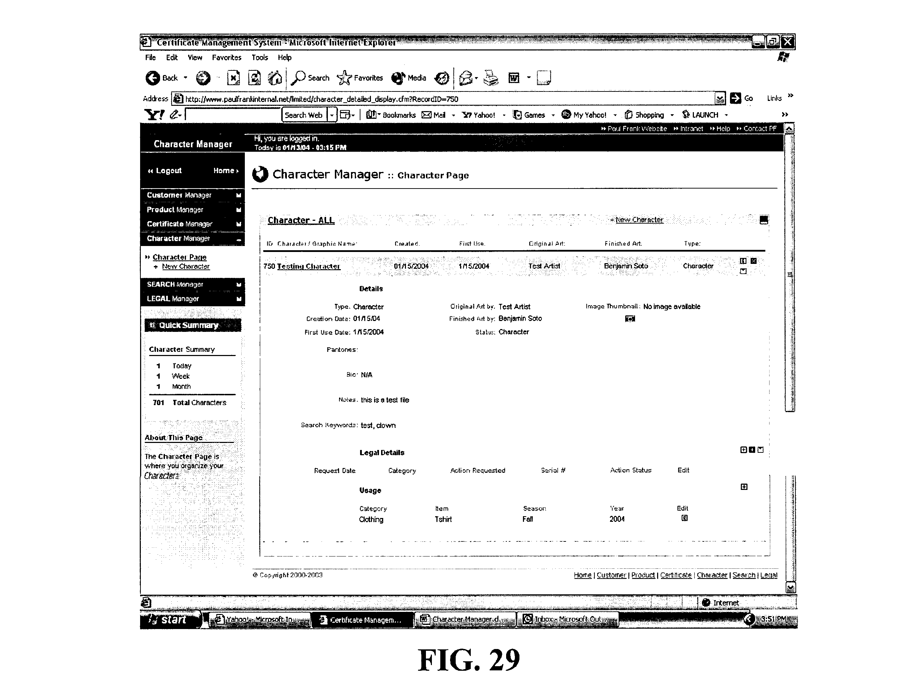

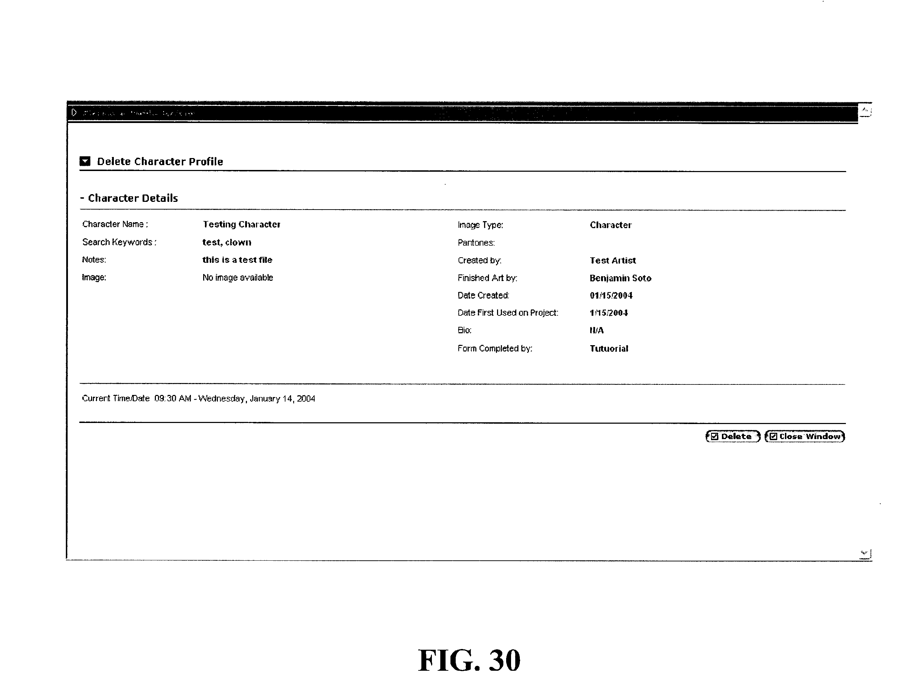

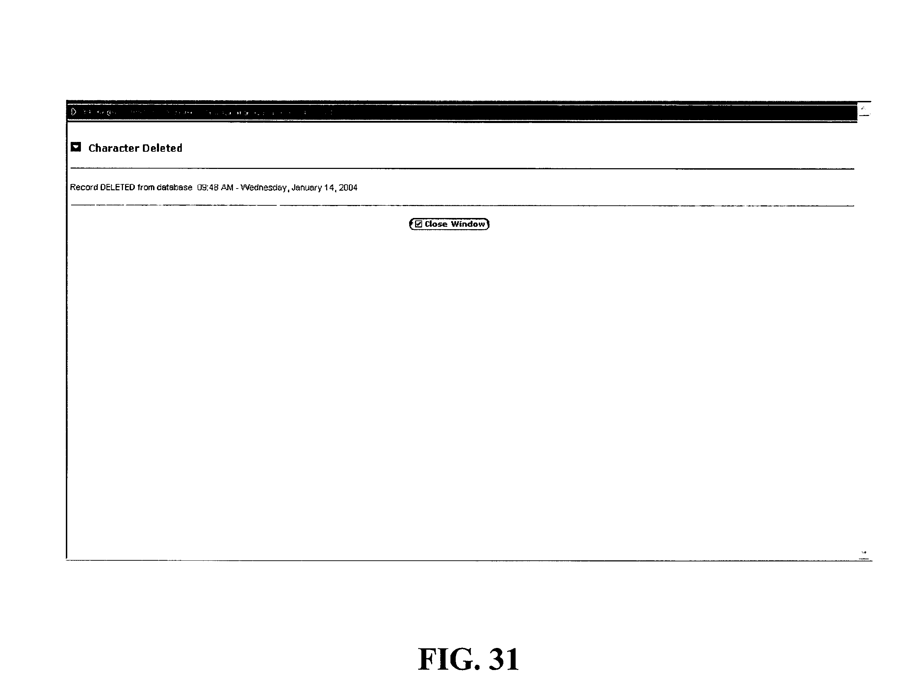

In one preferred embodiment, the intellectual property management system 100 allows the user to delete a character record in several locations: (1) from a list on the Character Manager homepage; (2) in the Edit Character page; or (3) in the Character detail page. Each of the pages includes a button for selecting the delete function, which is designated as a square with an "x" in it. For example, the user can select the delete button at the top of the Testing Character record shown in the Character detail page, as illustrated by FIG. 29, which brings the user to a confirmation page, as illustrated by FIG. 30. If the user accidentally selects the delete button, the confirmation page will allow the user to cancel the action by selecting the "Close Window" button. This will cancel the delete request and bring the user back to the Character detail page (or, in other methods where the delete function is requested from another page, back to that previous page). In this example, if the user wishes to delete the Testing Character record, the user can select the "Delete" button on the confirmation page. The intellectual property management system 100 will then provide the user with a second confirmation page to confirm that the character record has been deleted, as illustrated by FIG. 31, and the user can select the "Close Window" button to return to the Character Manager homepage, as illustrated by FIG. 5.

The discussion shall now turn to the Product Manager module 106 of the intellectual property management system 100 as configured in accordance with one preferred embodiment of the present invention. As discussed above, each of the manager modules can be accessed by the user using the menu bar on the left side of the homepage. Referring again to FIG. 4, to access the Product Manager module 106, the user can select the "Product Manager" button on this menu bar. The Product Manager module 106 provides the user with the ability to add or manage information on various types of products, such as limited edition, original, and collectible product, generically referred to herein as "items."

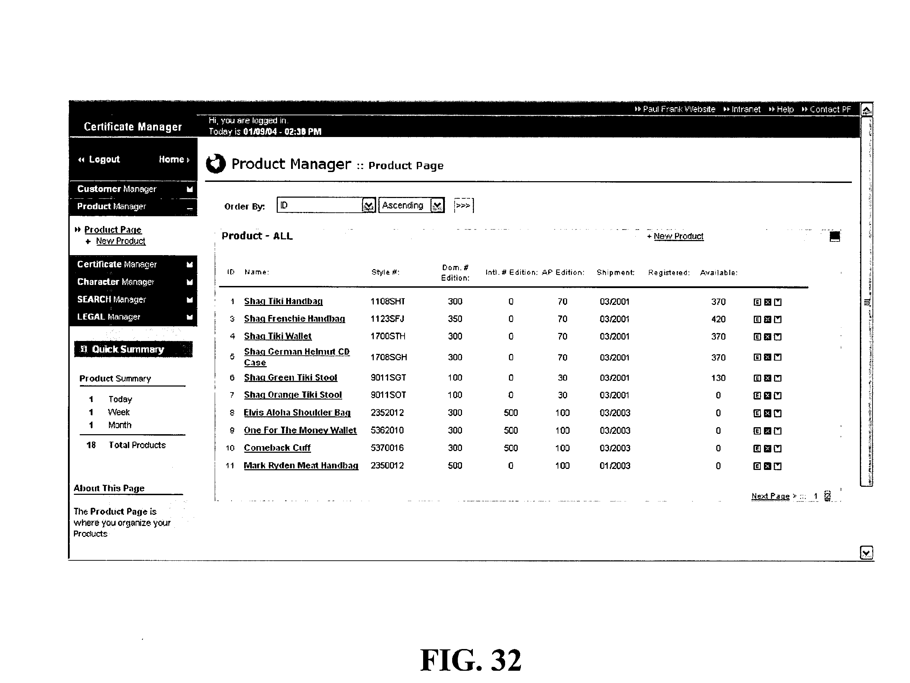

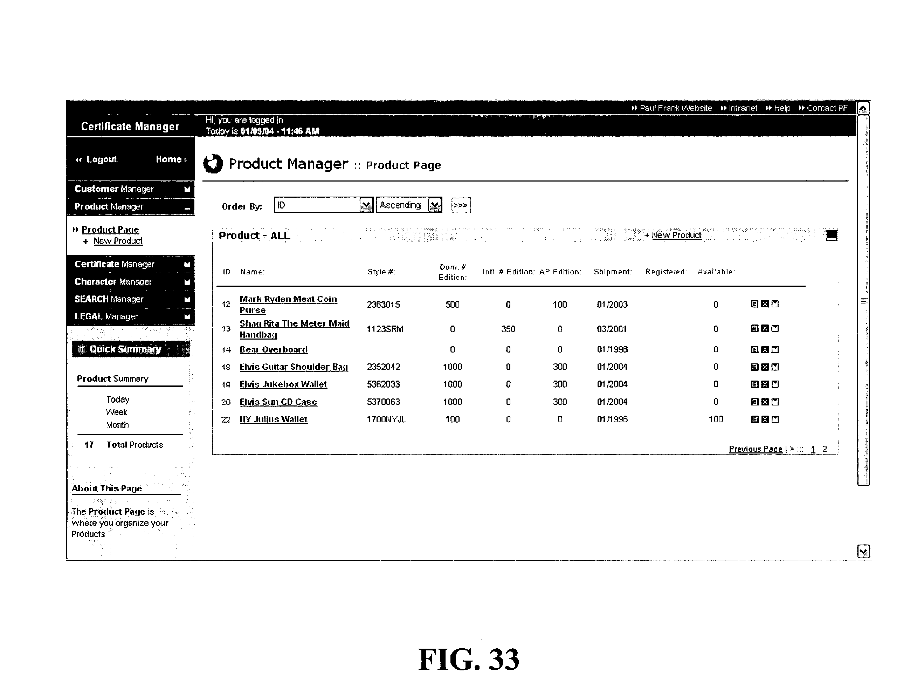

FIG. 32 illustrates a Product Manager homepage of the Product Manager module 106, configured in accordance with one embodiment, including a product listing of all the product database records in database 120. The listing provides the user with a snapshot of pertinent information for each product, which is similar to the listing shown on the Character Manager homepage as illustrated by FIG. 5. As shown, the listing includes a product identification column (ID), a product name (Name) column, a style number (Style #) column, domestic, international and artist proof edition number (Dom. # Edition, Intl. # Edition and AP Edition) columns, a shipment date (Shipment) column, a registered (Registered) column, a stock availability column, and a tools column (represented by the 3 icons in the column). In one embodiment, to access the detail on an item, the user can select the product name. Where the product listing spans multiple pages, the user can access either "Next Page" or "2" at the bottom right of the Product Manager homepage. FIG. 33 illustrates the second page of the product listing.

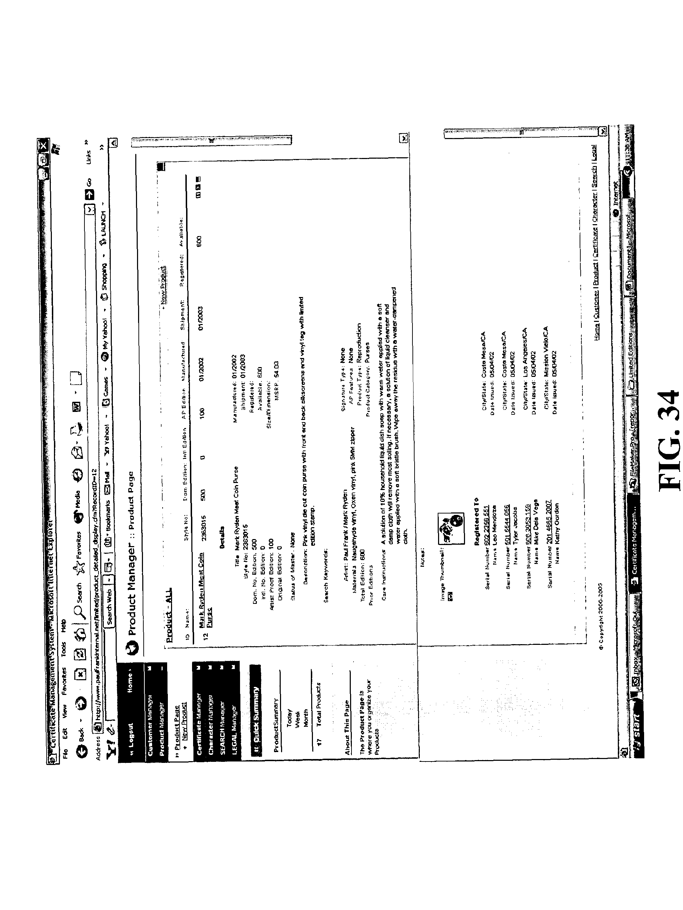

FIG. 34 illustrates the Detailed Product page for a product in the listing, the "Mark Ryden Meat Coin Purse." This page includes all the information regarding that particular item, including edition size, materials and care instructions. In one embodiment, the product detail page includes all of the product information that will be used to issue a Certificate of Authenticity for the product. The following table lists the terms and field labels stored in database 120 as related to describing products for the Product Manager module 106 in accordance to one preferred embodiment of the present invention.

| **TERM/FIELD** | **DEFINITION** |
|---|---|
| **Style Number:** | This is the unique number assigned to the product. |
| **Item Title:** | The product name. |
| **Item Description:** | A brief description of the product, including color, and any special features |
| **Search Keywords:** | Words or phrases that are associated with the product but may not be in the item title. This field helps with searching when the user may not know the title of the item. |
| **Artist:** | The artist(s) who created, or collaborated on, the product. |
| **Domestic No. Edition:** | A limited edition may contain more than one edition type. It may have a domestic edition, an international edition, and/or an artist proof edition. The number of the limited edition is the total of all these "sub" editions. It is useful to differentiate between the sub-editions as they have different values. The domestic edition is generally referred to as the "regular" edition and usually has the highest number of pieces of all the sub-editions. |
| **International No. Edition:** | This is an edition that was made specifically for the international market and not sold in the US. |
| **Artist Proof Edition:** | This is the smallest and most valuable sub-edition. Usually artist proofs are unique in some way to make them different and more valuable than the domestic or international editions. |
| **Original Edition:** | Usually originals are one of a kind, and therefore this number would be "1." However, sometimes an artist will make a template or mold and hand make "multiple" originals. In this case the number would be the total number of "multiple" originals made. |
| **Manufactured Date:** | This is the date the product was made. In the case of reproductions, the date it was reproduced at the vendor. In the case of originals, the date when the artist created it. |
| **Shipment Date:** | This is the date the product shipped out to retail. |
| **Materials:** | This is the technical description of exactly what materials were used to produce the product. |
| **Signature Type:** | The value of a piece can vary depending on if it's signed and the way it's signed. The user can select the type of signature, if any, the product has from the drop down list. |
| **AP Features:** | Usually artist proofs are made unique in some way to make them different and more valuable than the domestic or international editions. If there are any unique features to the AP edition, this field will store that information. |
| **Product Category:** | The general category under which the product falls. This field may be used for reporting and sorting purposes. |
| **Product Type:** | The product may either be a reproduction (such as a purse, wallet, or print), an original work of art, or a multiple original (see Original Edition field definition.). If an item is not a limited edition, but has become collectible, the preferred choice is the collectible option. |
| **Status of Master:** | This mainly applies to print reproductions. |
| **Size/Dimension:** | Usually associated with print reproductions. However, if another type of reproduction comes in different sizes, that information would be input here. |
| **MSRP:** | Manufacturer's Suggested Retail Price. This is the retail price of the item at the time of original release. |
| **Prior Editions:** | Usually applies to print reproductions. If an original were reproduced in another medium (such as a giclee and a lithographic print) that information would go here. |
| **Care Instructions:** | This is the instruction to the consumer on how to care for the product. Instructions will depend on materials used. |
| **Notes:** | Any information that does not fit into any of the field categories but is nevertheless important to note on the certificate file. |

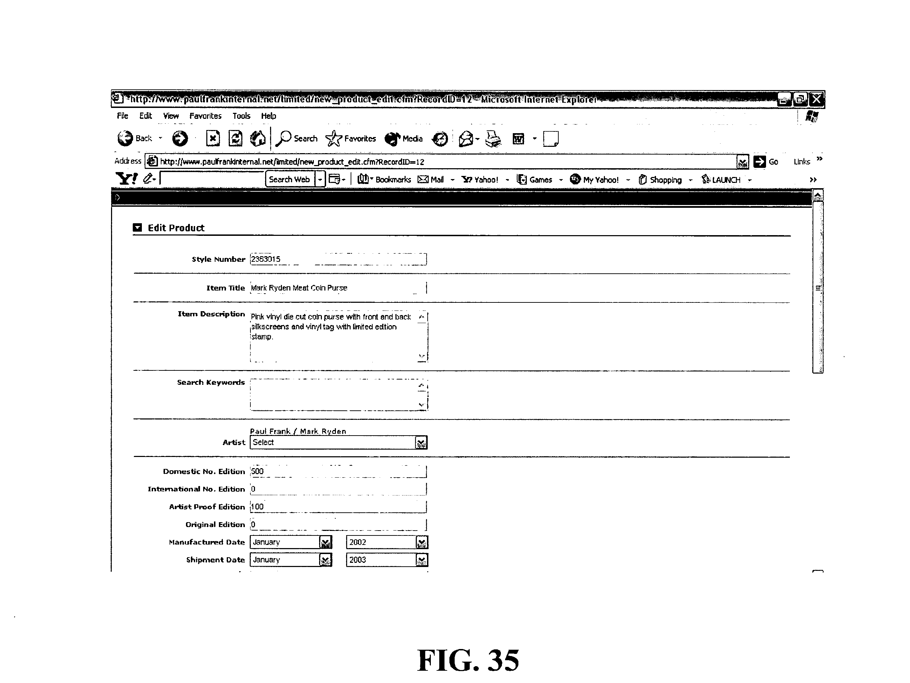

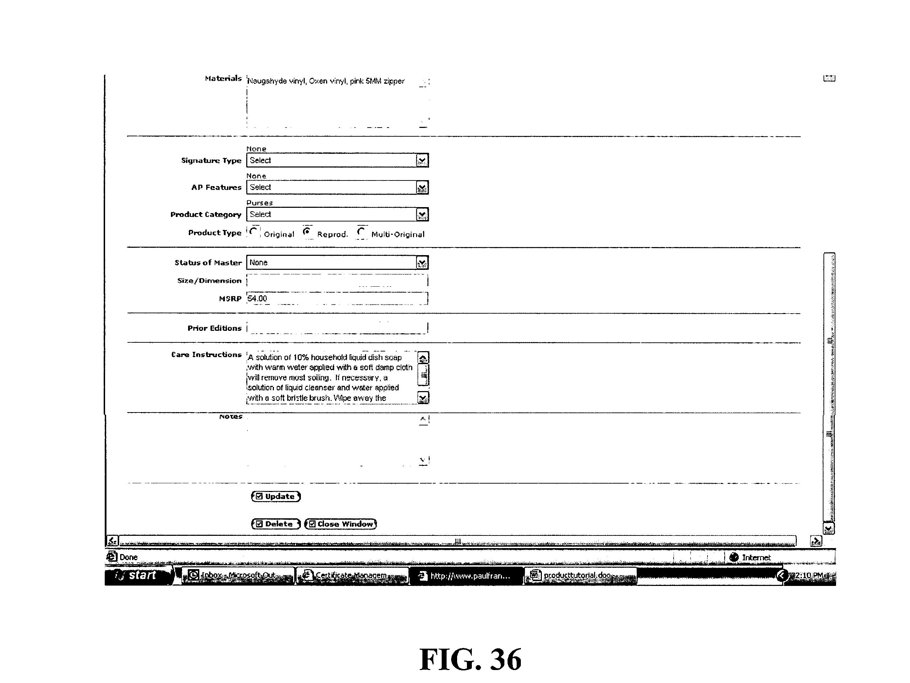

Again, similar to the editing functionality provided by the Character Manager module 104, the editing functionality provided by the Product Manager module 106 is accessed by an icon represented as a square with an "E" in it. Thus, if the user selects the "E" icon at the top right hand corner of the Product detail page, the user will be presented with the Edit Product page, as illustrated by FIG. 35 and FIG. 36. On the Edit Product page, the user can make changes to the information for the product and, when finished, can update the product database record in the database 120 by selecting the "Update" button. The user can also delete the product database record by selecting the "Delete" button on the bottom of the Edit Product page. If no changes are necessary, the user can select the "Close Window" button to return to the Product detail page.

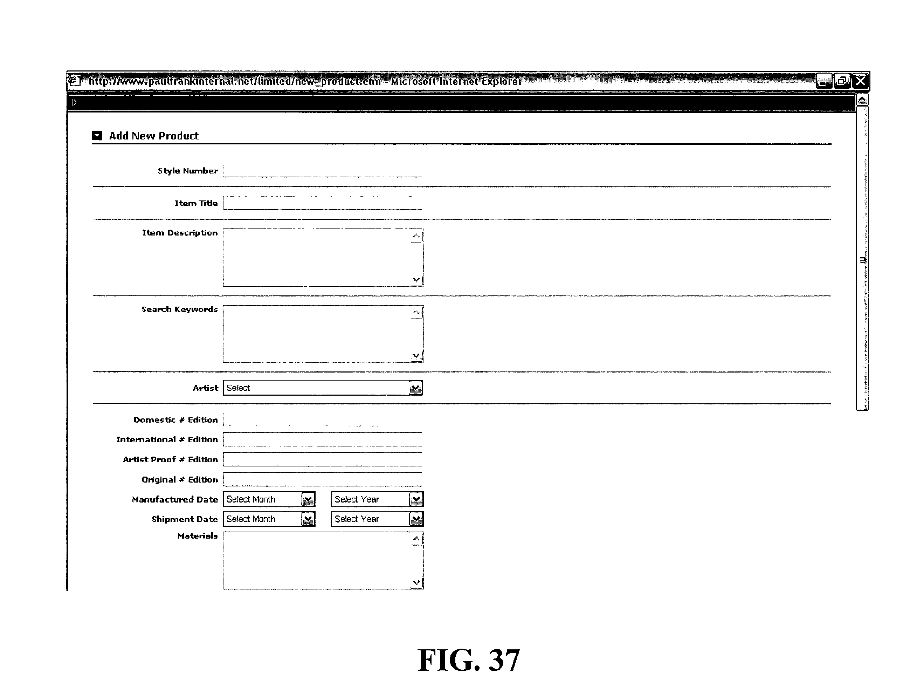

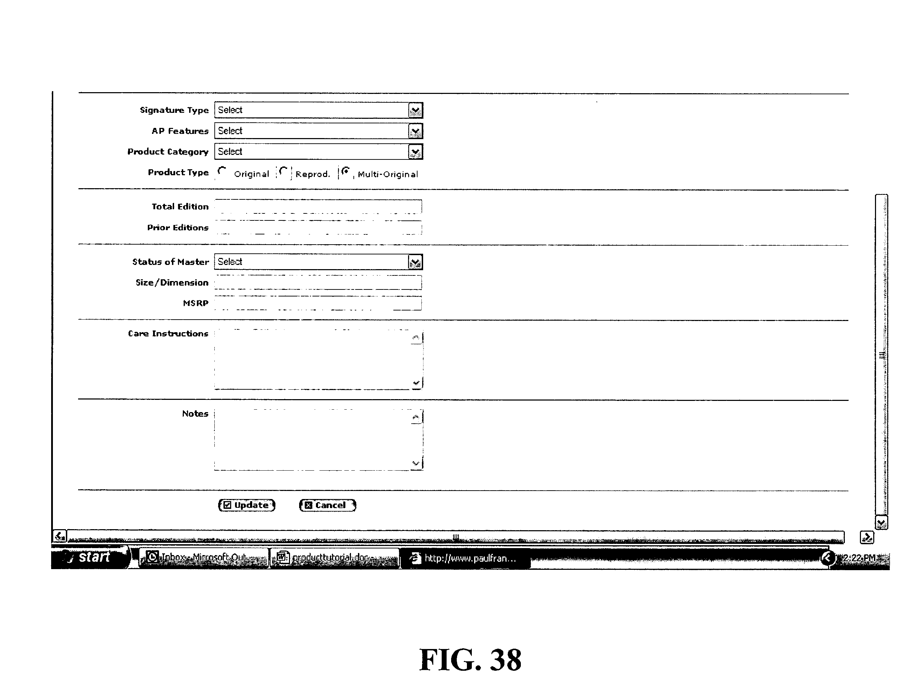

To add a new product database record into the database 120, the user can either select the "New Product" link on the top right corner of the Product detail page or the "New Product" link in the menu bar selecting either one of these links will bring the user to the Add New Product page, as illustrated by FIG. 37 and FIG. 38. The user can input information into the Add New Product page, and once completed, the user can select the "Update" button to create the product database record to store the information into database 120.

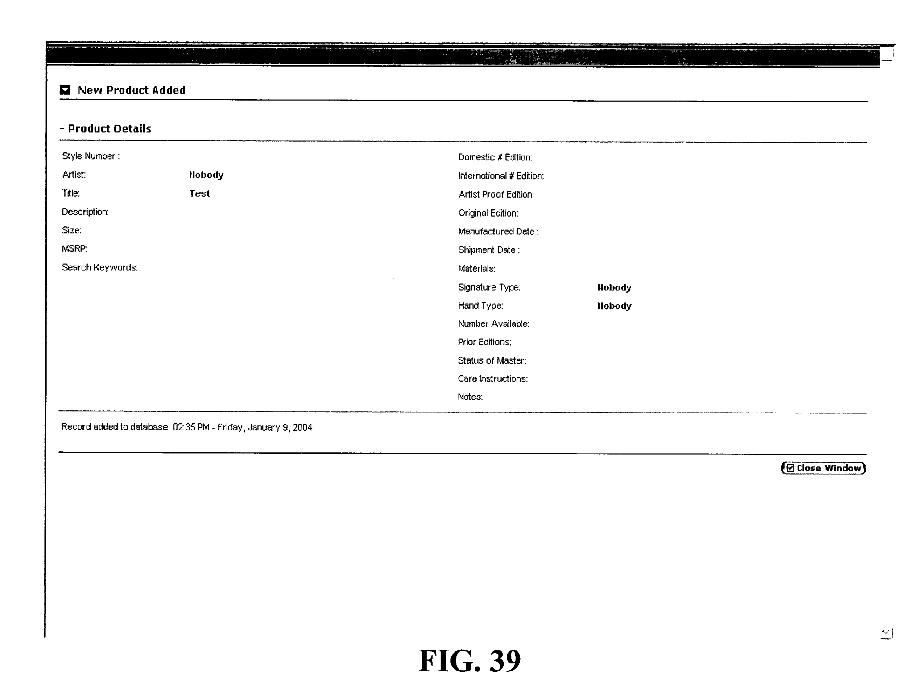

FIG. 39 illustrates a confirmation page that is presented to the user after the user has created a "Test" product database record by entereing the title "Test" into the Item Title field of the Add New Product page and then selecting the "Update" button. The user can review the information in the confirmation page and the user can select the "Close Window" button when done. The user will then be brought back to the Product Manager homepage, as previously shown in FIG. 32.

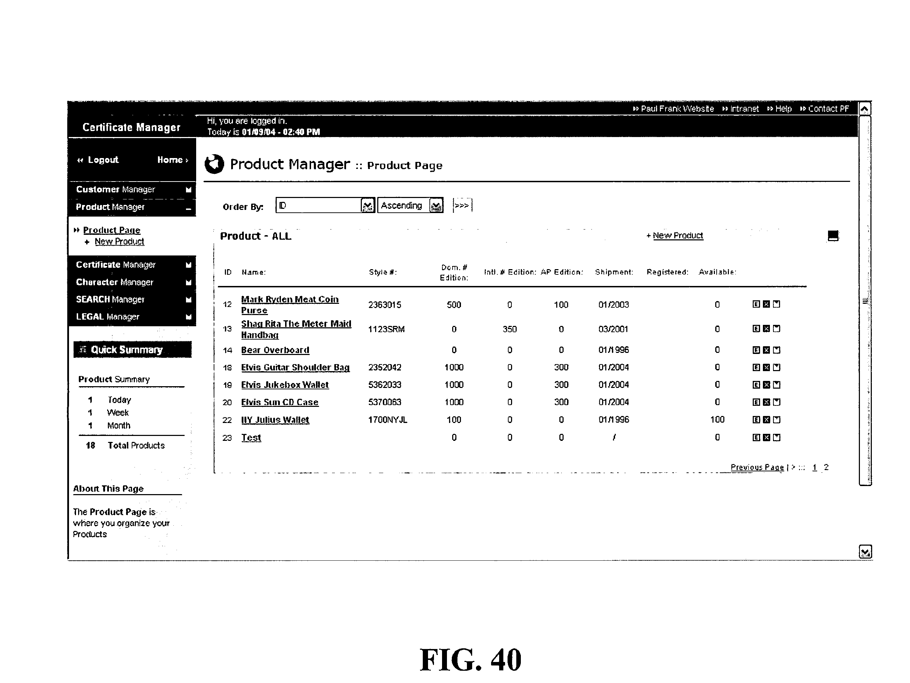

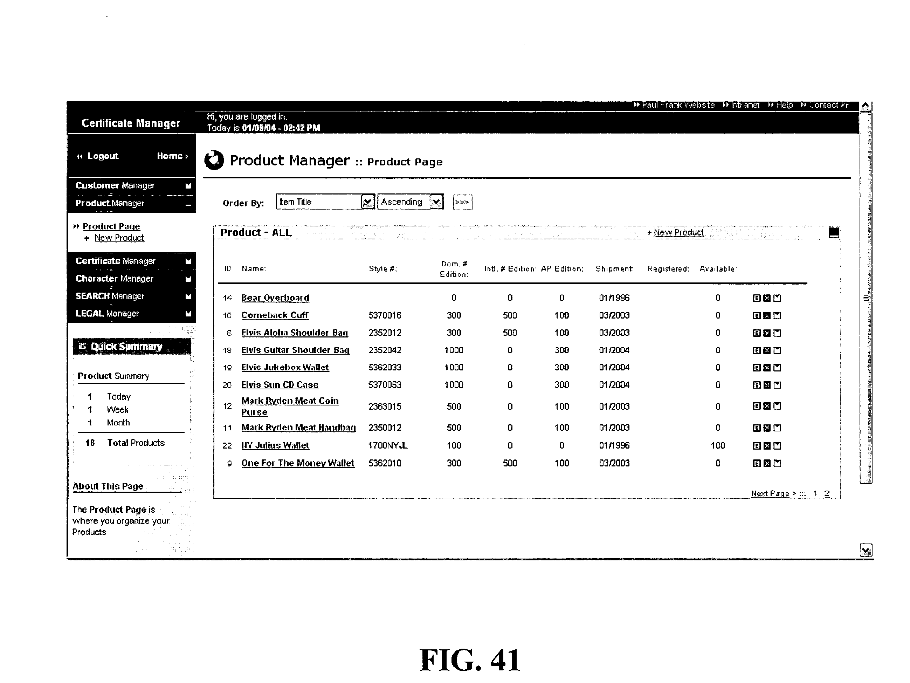

To locate the new product entry added to the Product list, the user can select the "Next Page" link or the number "2," link as shown in FIG. 40. Similar to the Customer Manager module 104, the Product Manage module 106 provides the user with the ability to change the sort order of the product list by selecting one of the options under the "Order By" drop-down menu. For example, the user can choose to sort the product list by "Item Title" in ascending order using the Order By menu and then selecting the arrows next to "Ascending," as illustrated by FIG. 41

Similar to the Character Manager module 104, the user can delete a product database record in the Product Manager module 106 by selecting the delete button. The delete button is represented by an icon in the shape of a box containing an "x" as illustrated in the tools column of FIG. 32. Selecting the delete button will delete any record with which the user is interacting. In one embodiment, delete buttons may be found on the Product detail page, the Edit Product page, as well as on the Product Manager homepage.

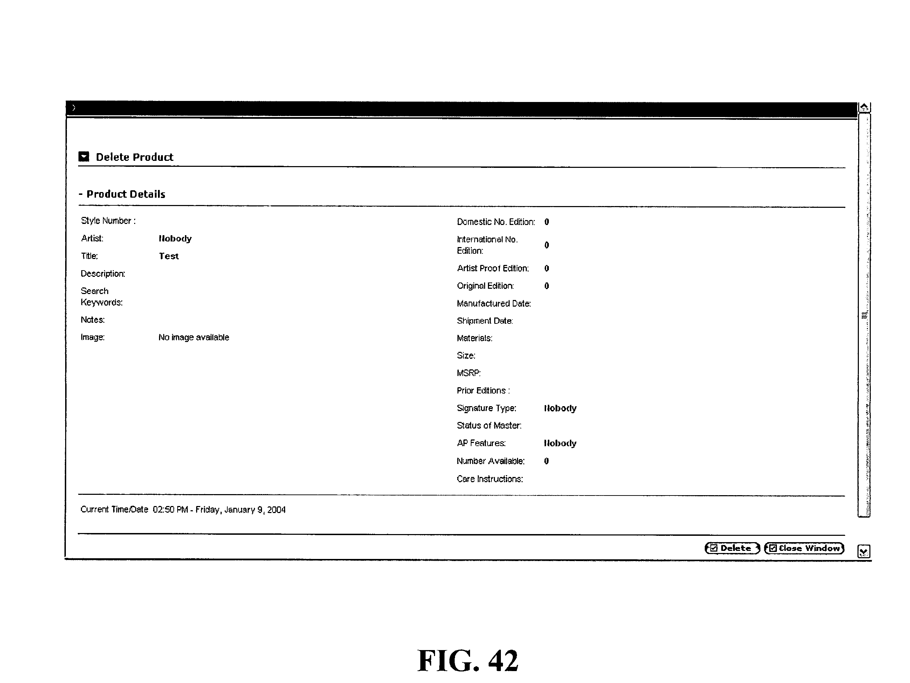

FIG. 42 illustrates a Delete Product confirmation page to confirm that the user wishes to delete the Test Product record based on the user selecting the delete button on any of the aforementioned pages. If the user wishes to delete the file, the user can select the "Delete" button. If the user does not wish to delete the file, the user can select the "Close Window" button. If the user can selects the delete button, the product record will be deleted from the database 120.

### Legal Manager

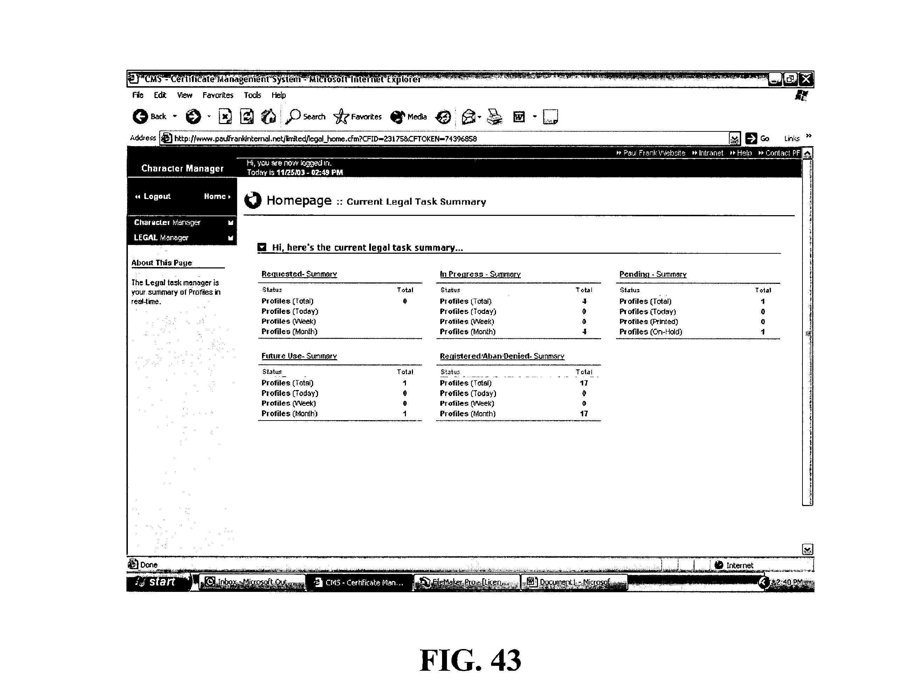

FIG. 43 illustrates a Legal Manager homepage for the Legal Manager module 108. In one embodiment, located on the left hand-side column is a menu area through the use of which the user can access the Character Manage module 104. In another embodiment, the menu area can contain menu items to allow the user to navigate between the various manager modules. The Legal Manager homepage also includes a middle area that displays the action request status summaries.

The user can view a detailed list of each type of legal task by selecting the links under each respective heading. For example, to see the detailed list of all the action requests that are in progress, the user can select the link that has the "In-Progress - Summary" heading.

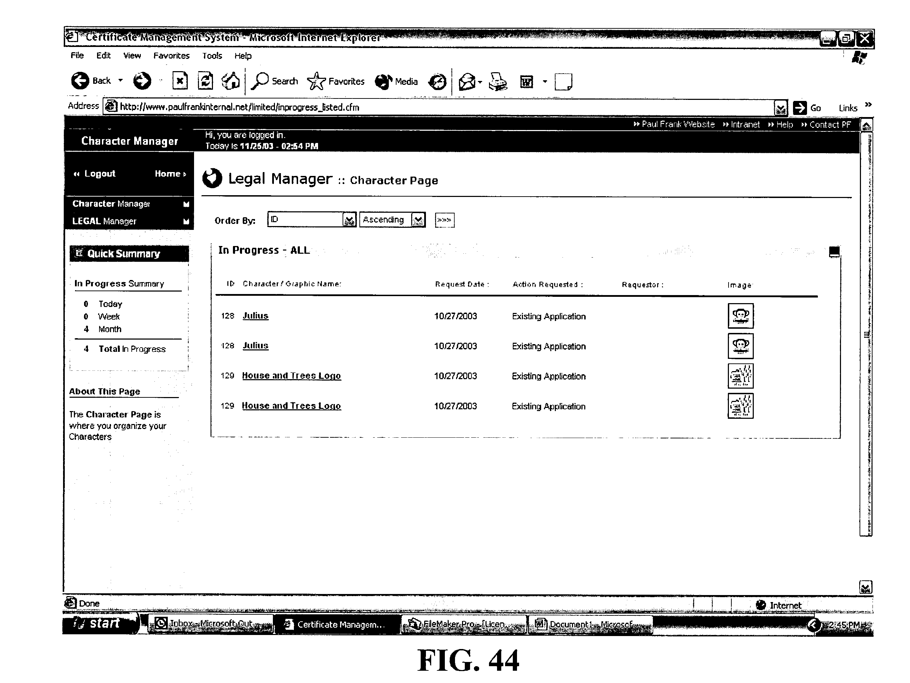

FIG. 44 illustrates the list of all the actions and/or applications that are in progress. The top headings provides the user with a snapshot of the status of each request, the character involved in the request, the date of the request, what the request is and who the requestor is. To see the details of a particular request, the user can select the character name heading. For example, the character "Julius" has two requests that are in progress, and the user can select either one of the Julius links.

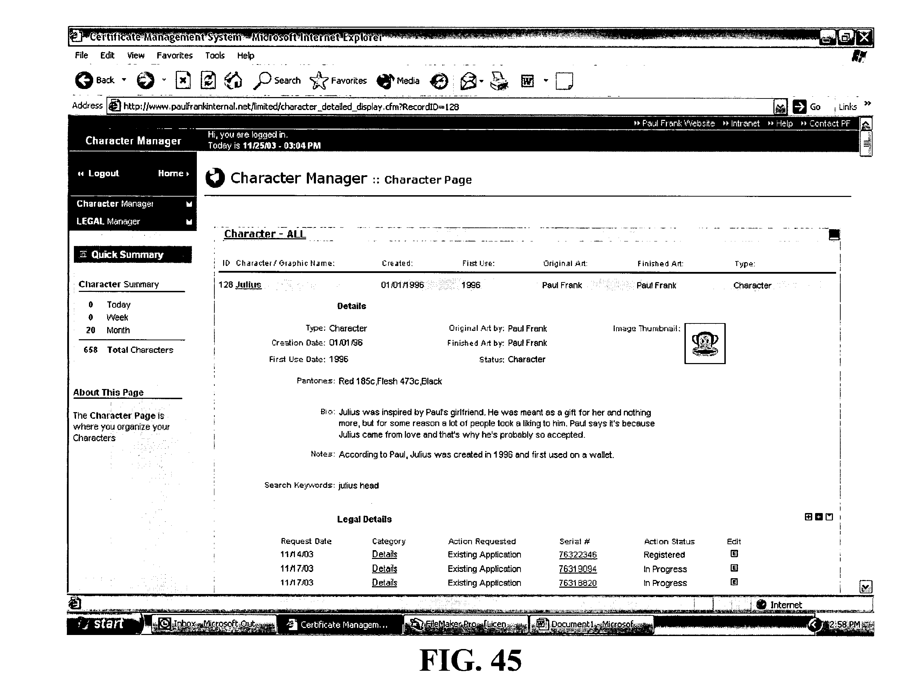

FIG. 45 illustrates the Character detail page in the Character Manager module 104 for one of the Julius characters. As described above, the Character detail page lists all of the details for this character, including the products on which this character is used. Further, as described previously, on the bottom of the Character detail page is the "Legal Details" section. This section lists all of the actions requested on this particular character or graphic. For example, there are the two "in progress" requests that appeared on the previous page, as well as one that is "registered." As discussed previously, the actual data structure of the database 120 does not require a one-to-one correspondence with how the information is ultimately presented to the user. Thus, for example, although the Legal Manager homepage separately groups the status information of the legal action request related to each of the character graphics by status, each character record stores the status information of all the legal action request for the respective character.

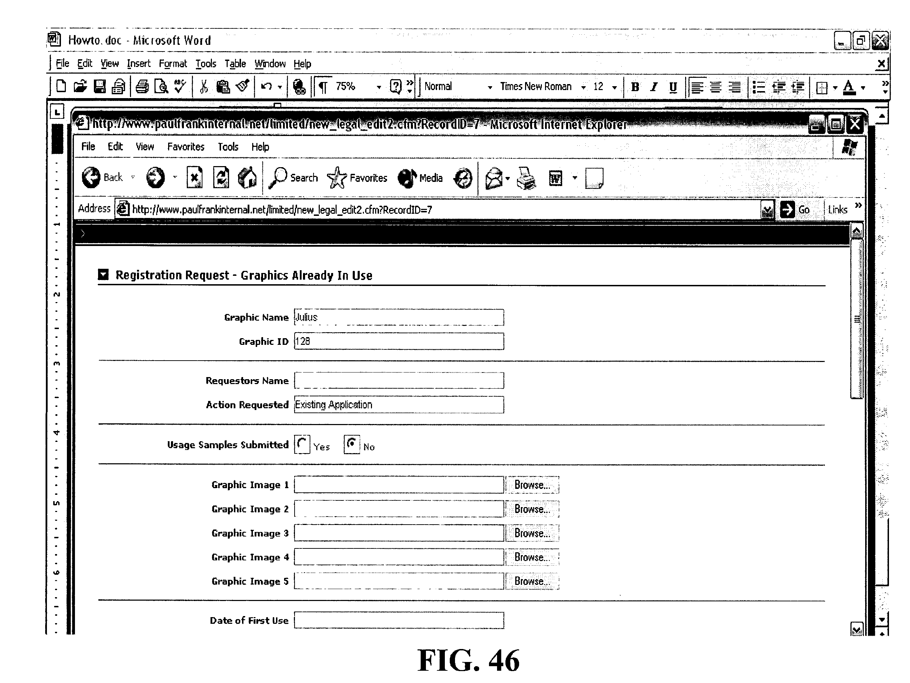

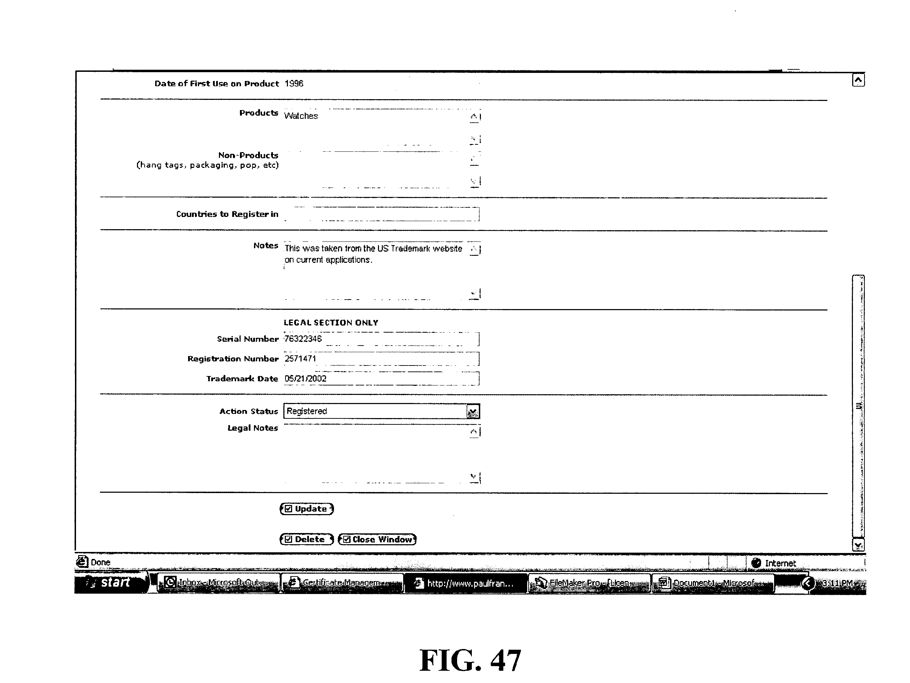

To see the details of a specific request, the user can select the "E" button next to the request. FIG. 46 and FIG. 47 illustrate a Registration Request Detail page that is retrieved for the first request when the user selects the first "E" button. The title of the page is "Registration Request - Graphic Already in Use," which indicates that the graphic or character has already been used on the products listed on this form when the action request was submitted. As discussed herein, the intellectual property management system 100 tracks information related to any use of the character or graphic, which allows the user to retrieve information necessary to assist in the determinination of answers to such questions as to whether to file for a particlar trademark, what type of application to file (based on intent-to-use or actual use), and which classes for which the trademark need to be applied. The information can also be used for copyright registration.

In one preferred embodiment, the Registration Request Detail page includes 2 sections, a "requestor" section--to be completed by a requestor, and a "legal" section--to be used by the individual(s) or entity(ies) responsible for the legal aspect of the request. For example, the requestor is responsible for providing information such as the action requested, the products and/or non-products on which the graphic is being used, and the countries in which the character or graphic is to be registered. The legal section, indicated by the "Legal Section Only" heading, is information related the legal aspect of the request and is preferably maintained by someone sufficiently trained to understand the legal aspects of the request. For example, each time there is a status change of the application, the appropriate entity should update the "action status field." Based on this information, the applications are sorted into the status summaries on the Legal Manager homepage, as shown in FIG. 43.

In one preferred embodiment, the legal section includes many of the fields necessary to identify an application. For example, a serial number (Serial #) field is used to store the application number assigned to the trademark application submitted to a trademark office such as the United States Patent and Trademark Office (USPTO). The information from this field is used to create a link to the official Trademark Application and Registration Retrieval database (TARR) website provided by the USPTO. Preferably, the serial number is input into the database 120 as soon as it is available.

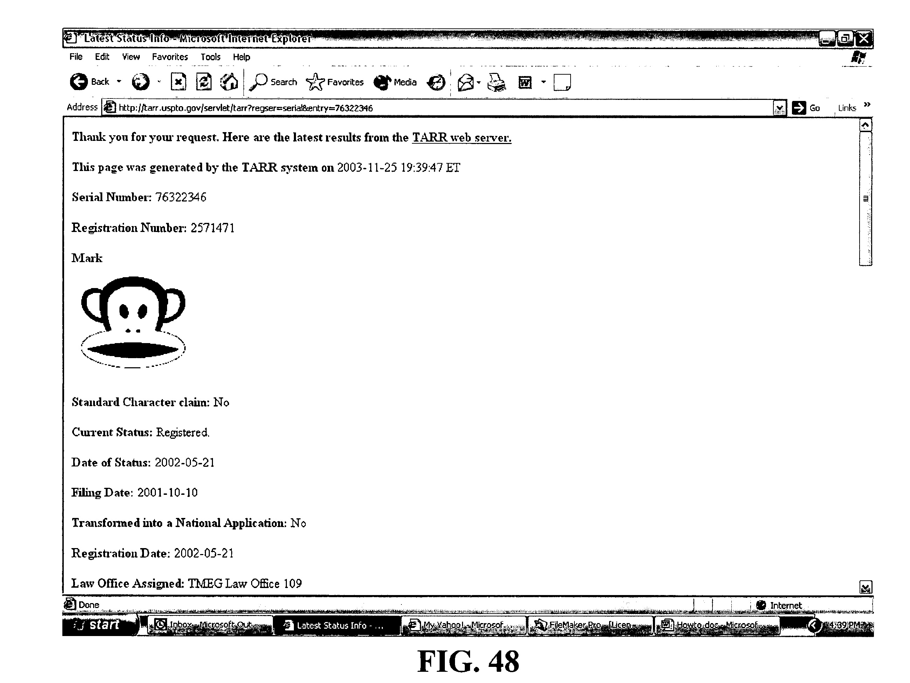

For example, referring to FIG. 45, the user can retrieve the details of the filing of the trademark application with serial number 76322346 for the "Julius" character by selecting the link labeled with "76322346." FIG. 48 illustrates the USPTO web page displaying the retrieved application, which is the online application stored at the USPTO and accessible from the TARR website. Thus, this USPTO page contains information needed to check on the status of an application.

Referring again to FIG. 45, in one embodiment three icons are placed to the right of the "Legal Details" heading. The first icon, which is a green box with a "+" symbol inside of it, is a button that will present the user with the "Add a New Registration Request - Graphics Already in Use" page that is used to request that a new registration application be prepared (i.e., add a new registration request to the intellectual property management system 100).

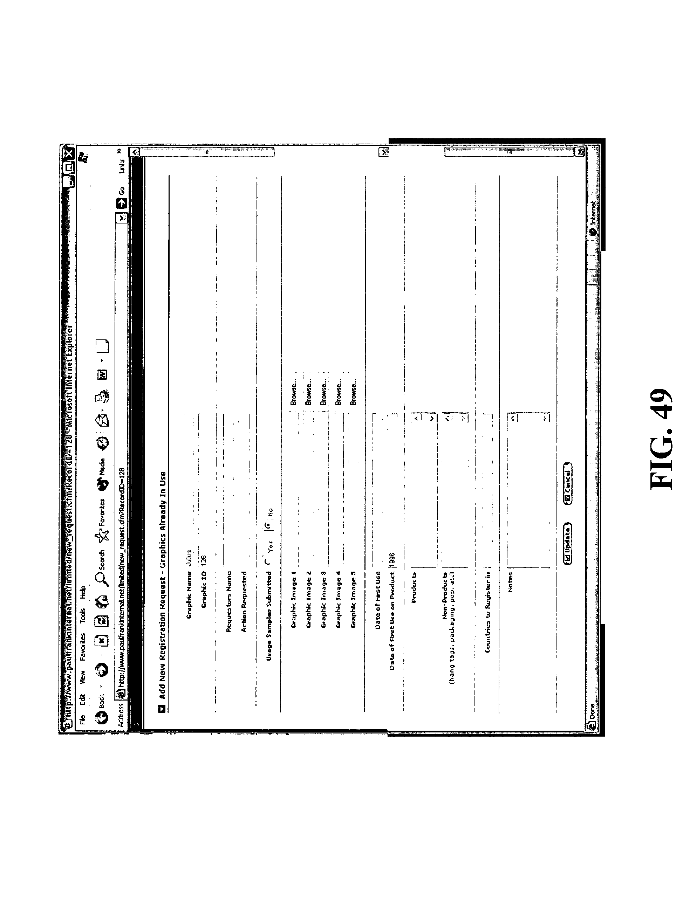

FIG. 49 illustrates the Add a New Registration Request - Graphics Already in Use page. This is the page used for a brand new request on a graphic that is currently being used in the categories for which registration is sought. Specifically, this is the page where the user can request that a trademark application be filed for a graphic in existing use. In one preferred embodiment, the character name (Graphic Name), character ID # (Graphic ID), and the date of first use (Date of First Use on Product) fields are automatically filled with information that is stored in the database 120. In addition, this page does not include a legal section (Legal Section Only) or the corresponding "legal" fields. The legal section and the fields therein are displayed after the registration request is created and is opened for editing. Once this form is completed and the "Update" button is clicked, the information will be displayed in the Legal Details section on the Character detail page, as well as in the "Requested - Summary" section on the Legal Manager homepage.

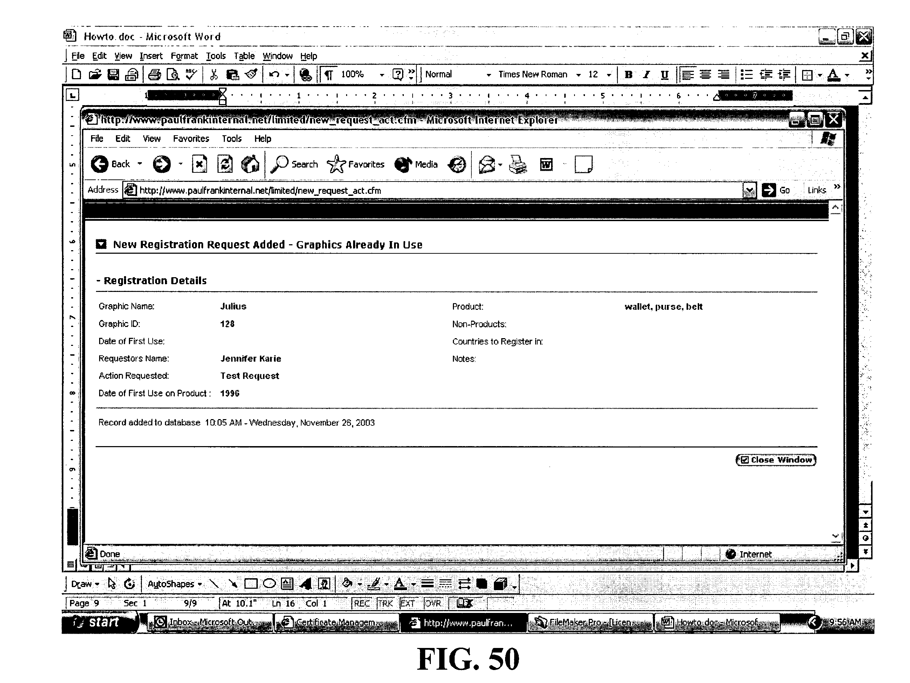

FIG. 50 illustrates a "New Registration Request Added - Graphics Already In Use" page that provides the user confirmation that a request has been received in the intellectual property management system 100 with the following manually entered values:

| | |
|---|---|
| Action Requested: | Test Request |
| Products : | wallet, purse, belt |
| Requestor's Name: | Jennifer Karie |

As described above, the Graphic Name, Graphic ID, and Date of First Use on Product fields are automatically inserted into the new legal matter databased record and did not have to be entered manually by the user. This page is presented to the user after the user has selected the "Update" Button.

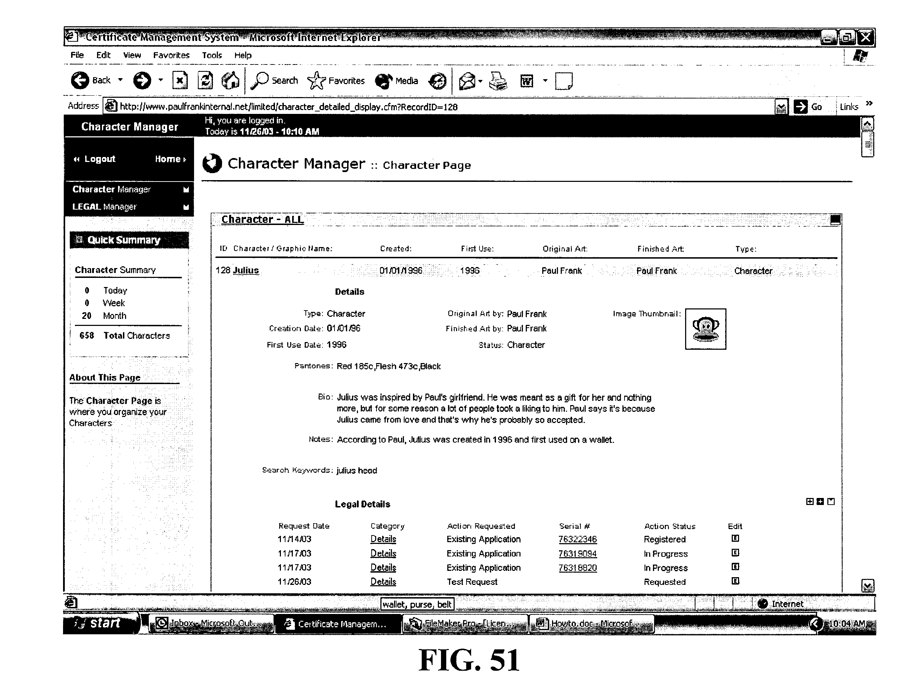

FIG. 51 illustrates an updated Character detail page that displays a new line under the "Legal Details" section with the newly added request. In one embodiment, when the user positions the cursor over the word "Details" on the line corresponding to the newly added request, a small window is displayed showing the entries that were input into the Products field (i.e., "wallet, purse, belt). This provides the user with the list of products for which a particular trademark application is being submitted without having to go into the actual request page using the "E" button.

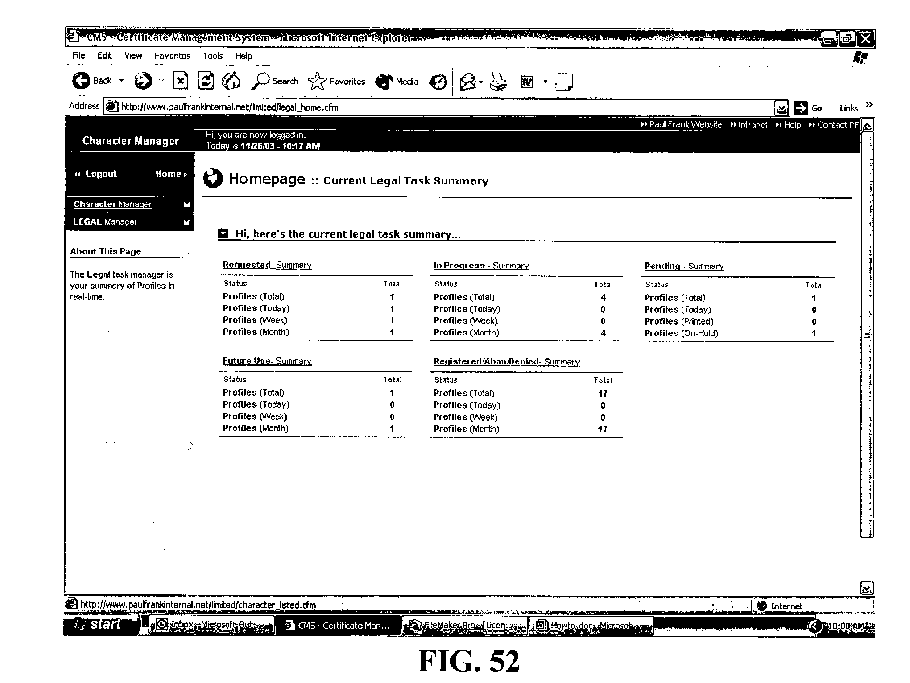

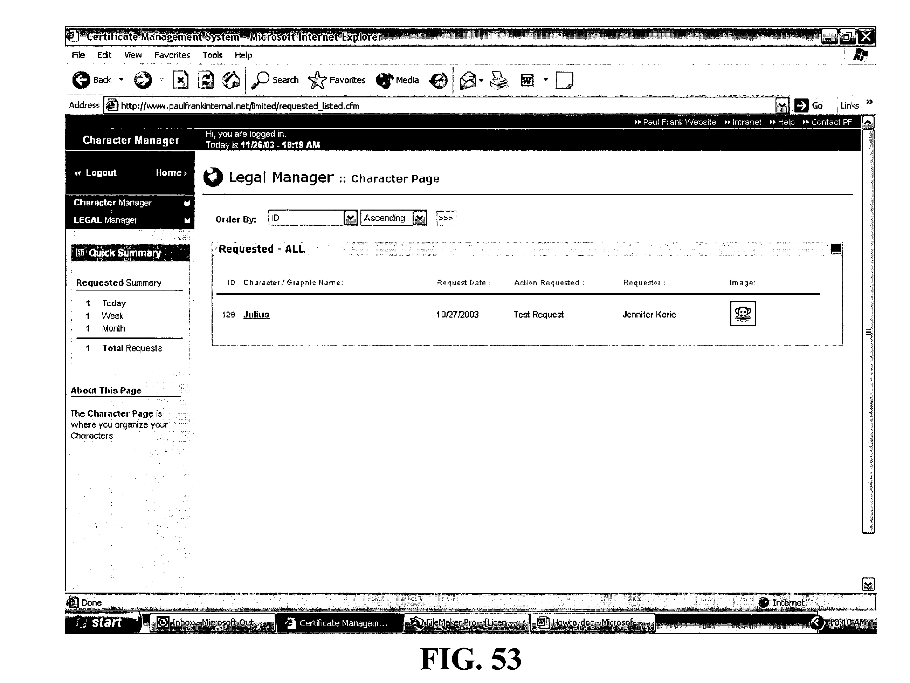

FIG. 52 illustrates the Legal Manager homepage with an updated display of the affected summaries. Specifically, there is now a "1" in the "Requested Summary" section. The user can the "Requested Summary" heading link to bring the user to a detail list of all forms with the status of "requested," as illustrated by FIG. 53.

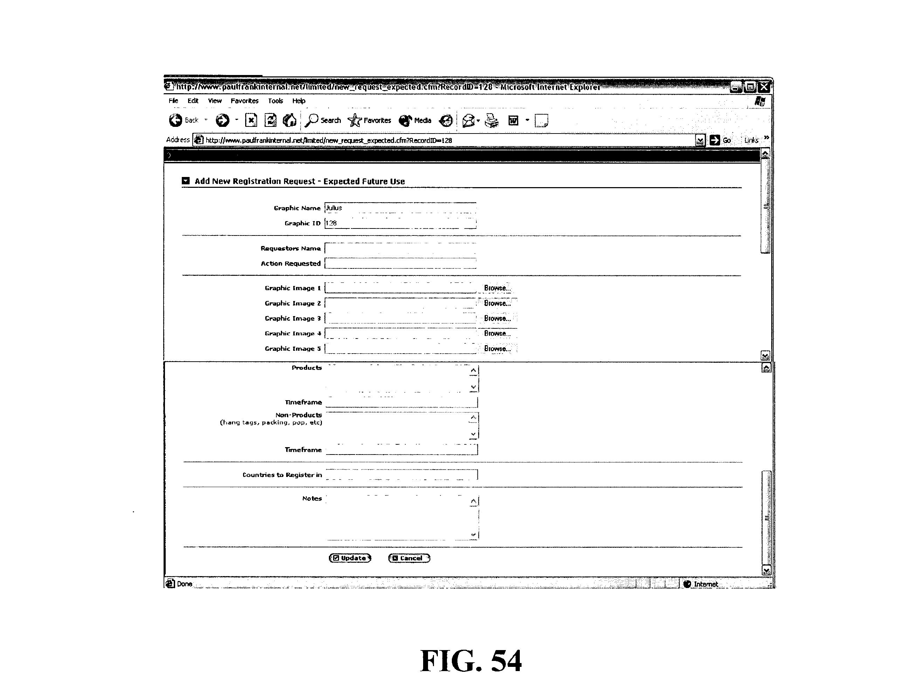

Referring again to FIG. 45, which is a view of the Character detail page, the second icon to the right of the Legal Details heading, which is a red box with a "+" inside of it, will allow the user to access the "Add a New Registration Request - Expected Future Use" page, as illustrated in FIG. 54. This page is used for a brand new legal action request on a graphic that is not currently used, but is intended to be used in the future and/or are in development for a specific product category. Specifically, this page will allow the user to request that a trademark application be filed based on a bona fide intent-to-use (ITU) the graphic as a trademark.

Similar to the New Registration Request Added - Graphics Already In Use page, the Graphic Name and Graphic ID fields are automatically inserted when this page is created. Thus, the user does not have to enter data for these fields. However, instead of the "Date of First Use on Product" field, a "Timeframe" field is used for the user to input a date of intended use. Again, in this embodiment the page does not have a legal section. Once the user enters the information on this page and selects the "Update" button, the Legal Details section on the Character Detail page, as well as in the "Requested - Summary" section on the Legal Manager homepage, will be updated accordingly the next time the user sees them.

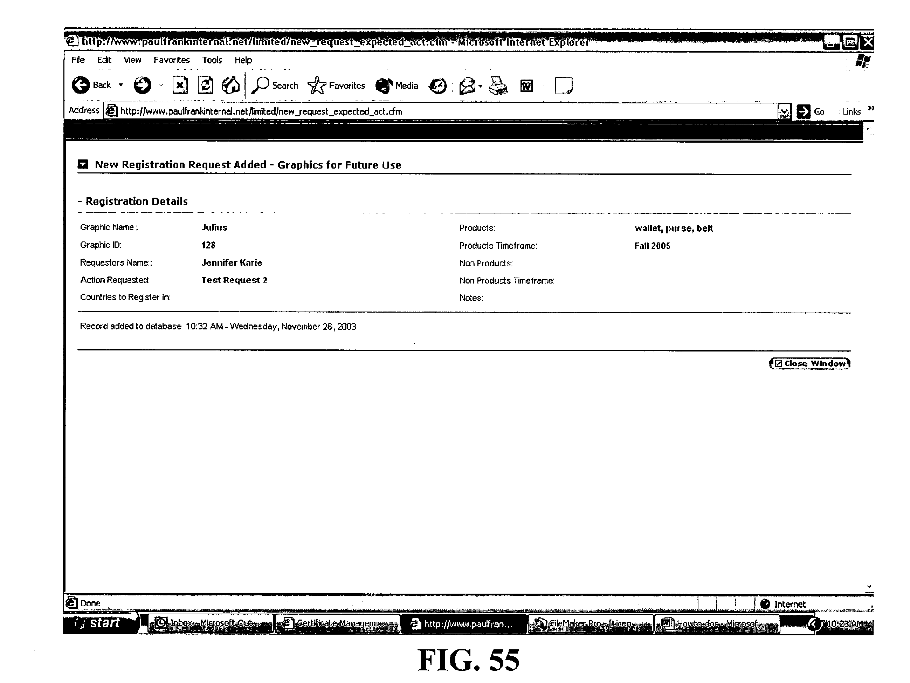

FIG. 55 illustrates a "New Registration Request Added - Graphics for Future Use" page that provides confirmation that a request has been received in the intellectual property management system 100 for a request with a "Test Request 2" value in the "Action Requested" field and a "Fall 2005" value in the "Product Timeframe" field.

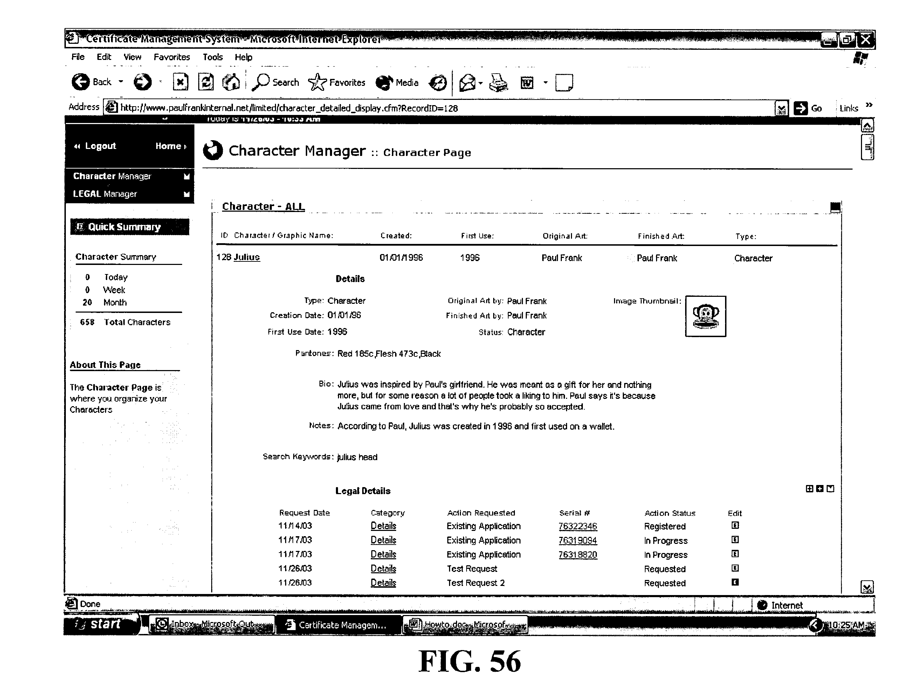

FIG. 56 illustrates the updated Character detail page where the request for filing the ITU application has been added to the list in the Legal Details section. In one preferred embodiment, the "E" icon next to the request, which is used to edit the record, is red to indicate that this is a future use request. A user can select the red "E" to open the request form.

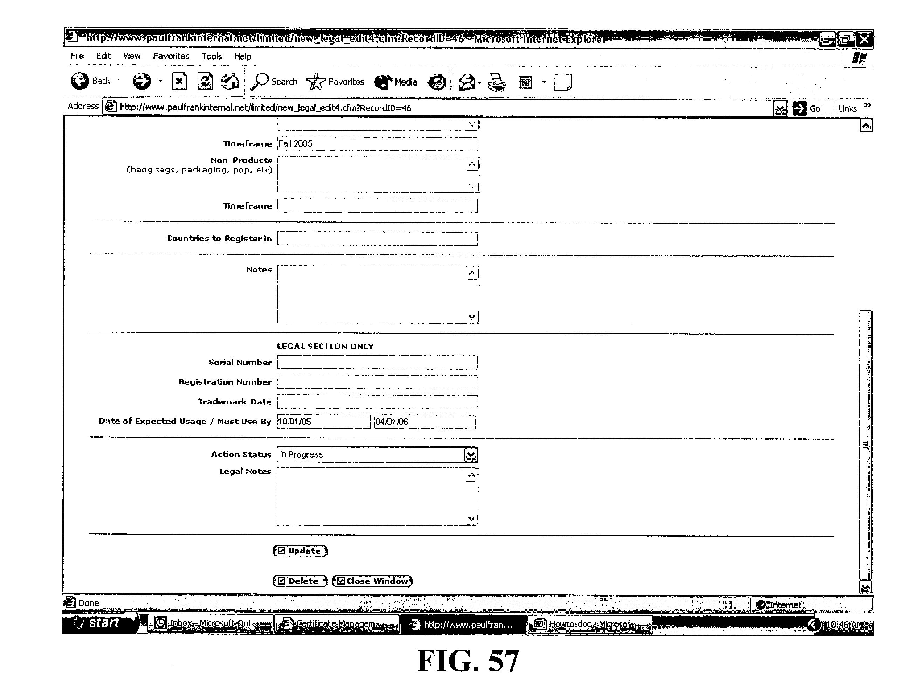

FIG. 57 illustrates a portion of the Registration Request edit page that will allow the user to edit the submitted "New Registration Request - Graphics for Future Use" of FIG. 54. In the figure, only the "Legal Section Only" section is shown, where the user has filled in a "10/01/05" value in the "Date of Expected Usage" field and a "04/01/06" value in the "Must Use By" field (the user having assumed a 6 month extension) as well as changing the value in the "Action Status" field to "In Progress." The date of expected use is the date that is entered in the trademark application sent to the trademark office. The date in the "Must Use By" field should be the deadline by which a statement of use stating that usage of that item in the categories listed in the trademark application was achieved. In one embodiment, each time an extension is requested, this date should be updated to reflect the next deadline. THe page also includes a serial number filed, which is preferably entered as soon as it is available from the USPTO to provide the link to access the trademark application on the TARR site. In one embodiment, once the "Date of Expected Use" field is completed, the request will show up in the "Future Use Summary" on the Legal Manager homepage

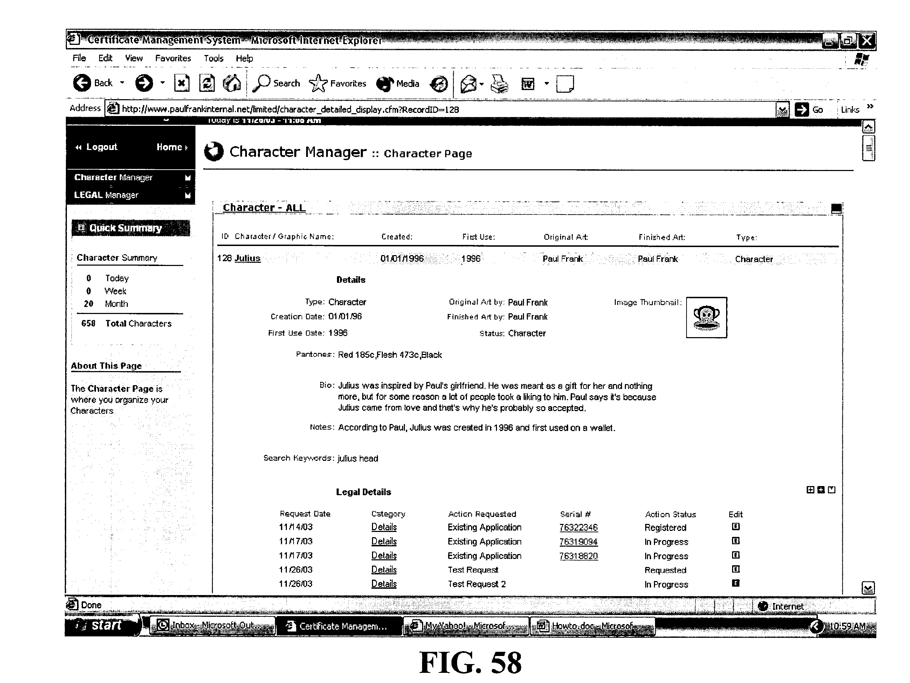

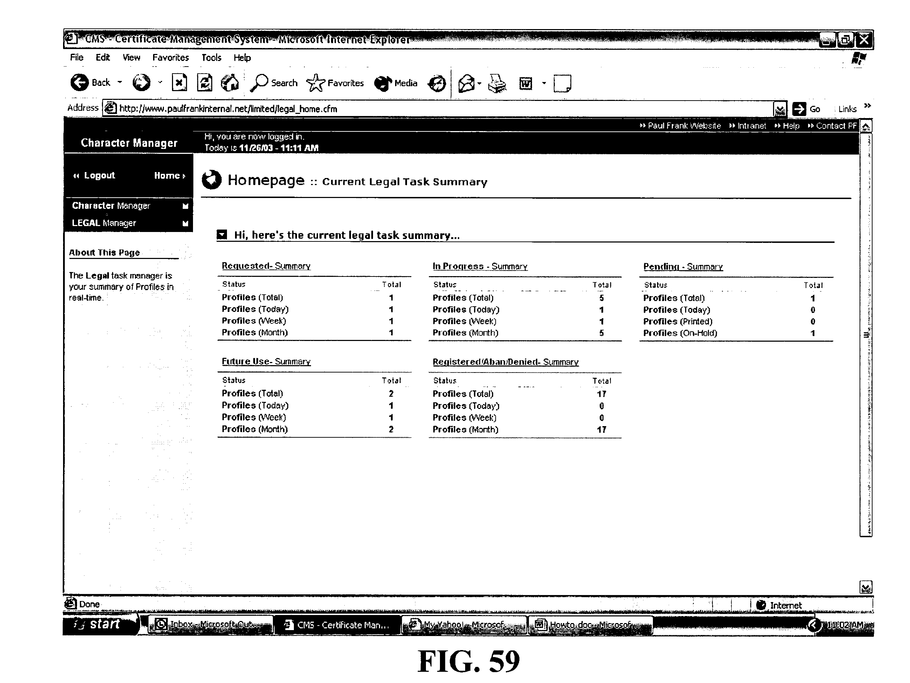

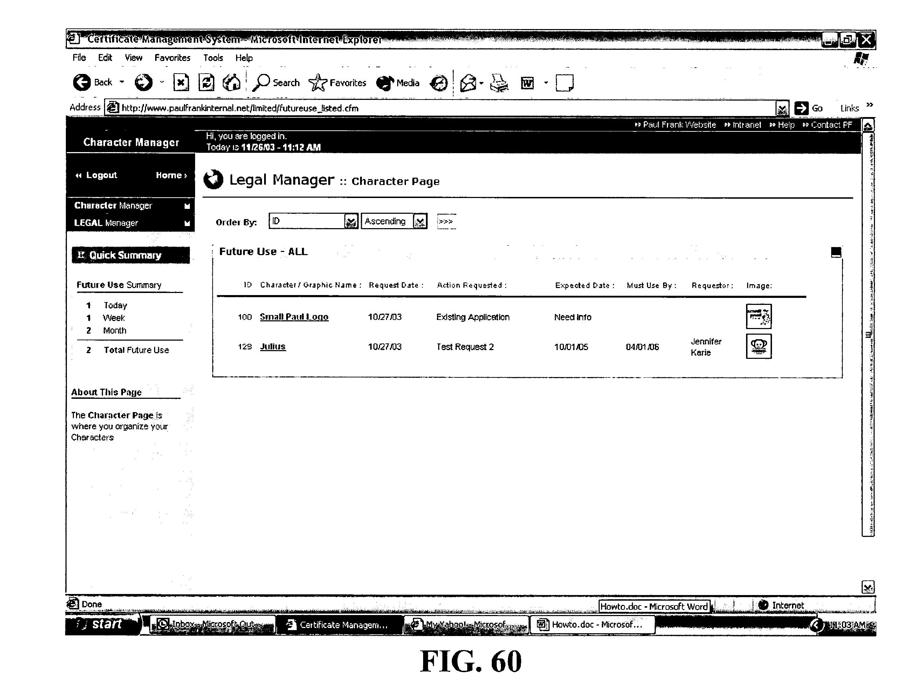

The envelope icon button next to the red and green "+" buttons on the right of the "Legal Details" heading will update the display of information in the Character detail page. Thus, as illustrated in FIG. 58, the status of the "Test Request 2" request is now updated to display "In Progress." In addition, the Legal Manager homepage is also updated, as illustrated in FIG. 59 when the user next accesses it and the "Future Use Summary" now displays 2 entries. Moreover, if the user selects the "Future Use" heading link, the user will be presented with the list of Future Use records that has been updated to include the "Test Request 2" request, as illustrated in FIG. 60.

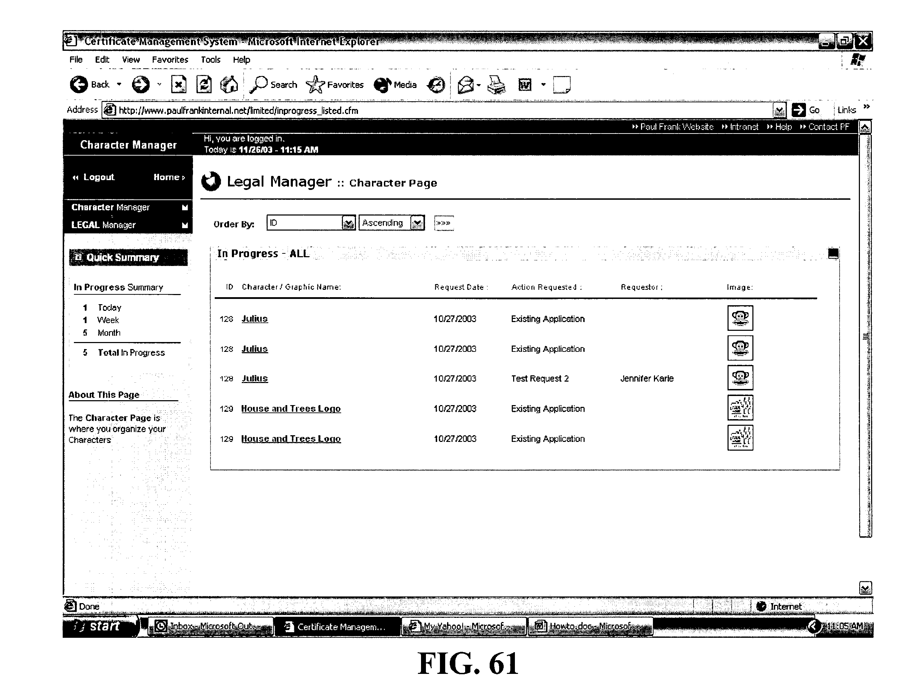

Further, referring again to the Legal Manager homepage as illustrated in FIG. 59, if the user selects the "In Progress Summary" heading link, the user will also see that the "In Progress" summary list of requests has been updated to include "Test Request 2," as illustrated in FIG. 61

### Certificate Manager

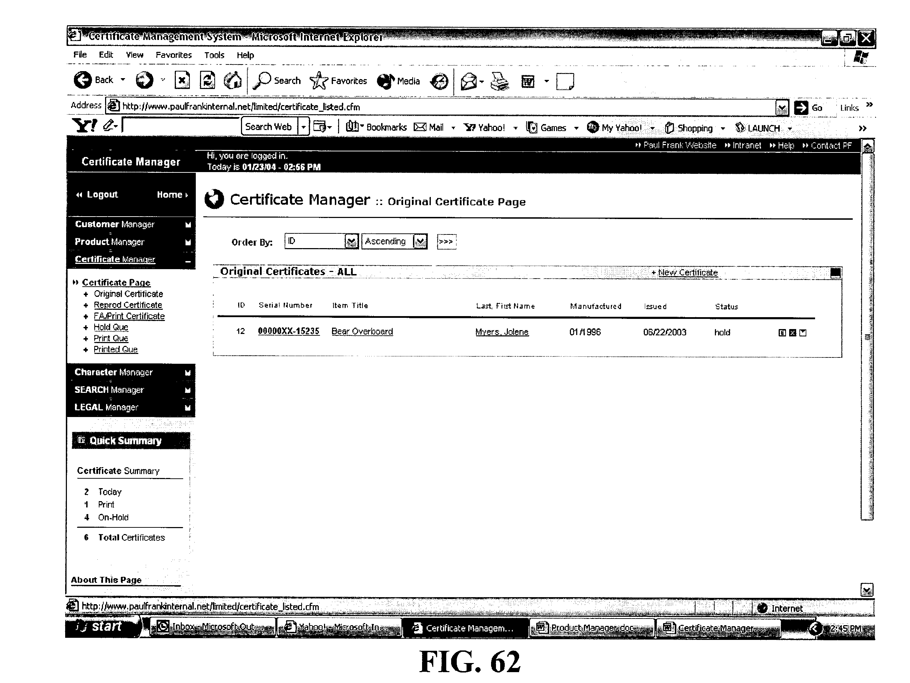

FIG. 62 illustrates a Certificate Manager homepage that may be used by the user to interact with the Certificate Manager module 110 of the intellectual property management system 100 to manipulate the certificate database records that store information about the various certificates of authenticity (also referred to simply as "certificates") in the database 120. Specifically, the Certificate Manager module 110 provides the user with the ability to create, modify, delete or otherwise manage the certificate records stored in the database 120 for tracking certificates issued to customers for the products they purchase, as further explained herein. In one preferred embodiment, the intellectual property management system 100 provides certificates for original works of art (Original Certificates) as well as other types of certificates as identified herein.

### Certificates for Original Works of Art

In one preferred embodiment, the default display of the Certificate Manager homepage is the "Original Certificate Page". The Original Certificate Page includes a list of all the database records storing information for original certificates ("original certificate database records") retrieved from database 120. In one preferred embodiment, as seen in the example, the information for each original certificate is listed on one row, with the columns of the list displaying information from preselected fields in each original certificate database record. The columns are chosen to provide a summary of the most often used or important information about original certificates. This information includes an identification number (ID) for the original certificate database record that stores the information for the original certificate, an original certificate serial number (Serial Number), a title of the item for which the certificate was issued (Item Title), the customer name on the certificate (Last, First Name), the manufacturing date of the item (Manufactured), the certificate issue date (Issued), and the print status of the certificate (Status). The description for these and other fields are further detailed herein.

The Original Certificate Page, similar to the pages for other types of certificates as described herein, includes a menu bar on the left side of the page that includes links to allow the user to choose which type of certificate the user wishes to create or manage. As further described herein, the menu bar also allows the user to monitor and manage the print queue of the certificates that have been created.

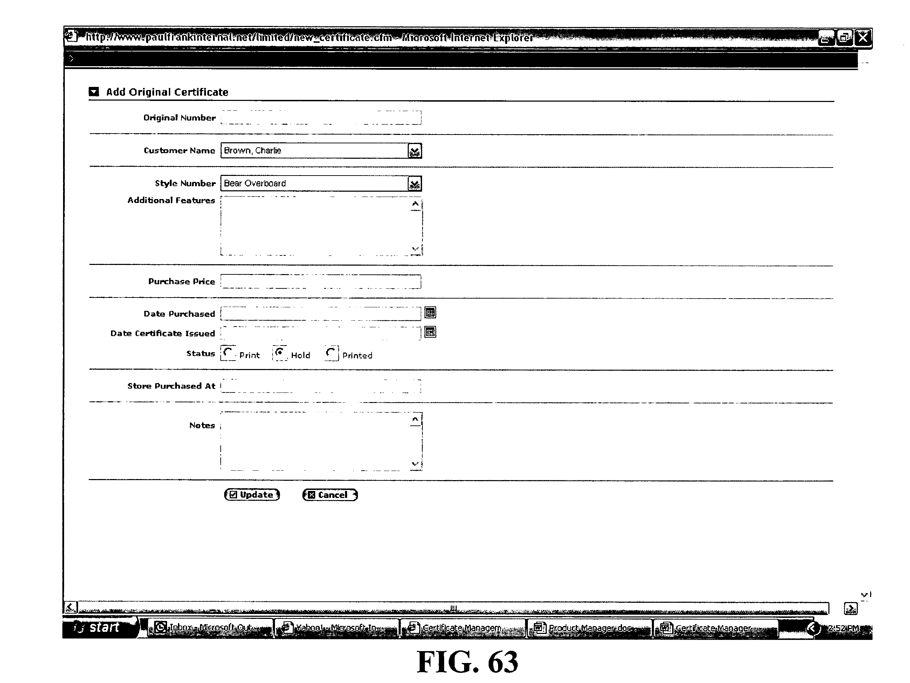

Starting from the Original Certificate Page, the user can create a new original certificate database record to store information for a new original certificate by selecting a "New Certificate" link, located on the top right hand portion of the Original Certificate Page. Once the user has selected the link, the user will be taken to an "Add Original Certificate" page, as illustrated by FIG. 63. The first field listed on the Add Original Certificate page is the "Original Number" field. Usually originals are one of a kind. However, sometimes an artist will make a template or mold and hand make "multiple" originals. In this instance the originals will be numbered. Thus, if the original is a one of a kind product, a number "1" should be stored in the field. If the original is a multiple original, the field should contain the number of the particular piece. The "Style Number" field identifies the product for which the user is creating the certificate. The "Additional Features" field provides for storage of information that is uselful to differentiate between multiple originals. For example, in the case of multiple originals, if the original for which the certificate is being created has a feature that the other originals do not, that feature should be listed in this field. The "Purchase Price" field lists the purchase price of the item. The "Date Purchased" and the "Date Certificate Issued" fields track the date that the item is purchased as well as the date the certificate is issued, respectively. The "Status" field stores the print status of the certificate. If the user wants to create the certificate but not print it until later, the user can choose the "Hold" option. In one preferred embodiment, this field defaults to "Hold." If the user desires to print the certificate immediately, the user can choose the "Print" option. Once the certificate has been printed, the status is changed to "Printed." The "Store Purchased At" field identifies the location where the piece was purchased. The "Notes" field stores any information not specifically stored by any other field but which is pertinent to this particular certificate. In one preferred embodiment, this field will not print on the certificate. The "Update" button will create a certificate database record to store the entered information into the database 120.

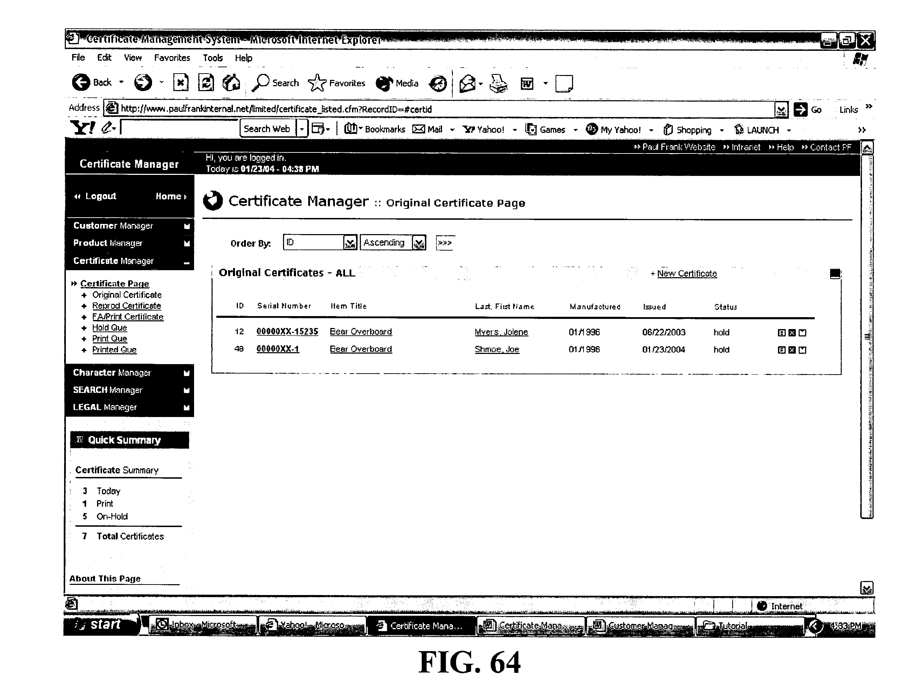

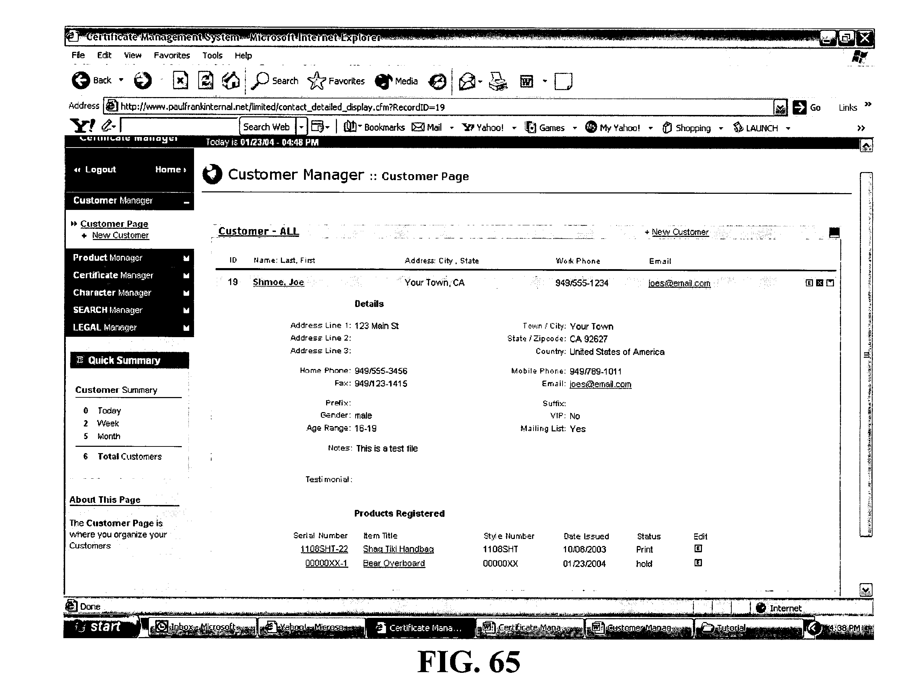

FIG. 64 illustrates an updated view of the original certificates database records list on the Original Certificate Page that includes a newly added certificate for the "Bear Overboard" product owned by a customer named "Joe Shmoe." In one embodiment, for each original certificate database record in the list, the user can access the related Certificate detail, Product detail, or Customer detail page from the Original Certificate Page. For example, when "Joe Shmoe" is selected, the user will be taken to the Customer detail page for Joe Shmoe, as illustrated by FIG. 65. Although the Customer detail page will be described further herein along with the Customer Manager module 112, it is displayed here to show that the bottom of the Customer detail page includes a "Products Registered" section that lists the products registered by the customer. In this example, the list includes the newly created Bear Overboard certificate. From here the user can go to the Certificate or the Product detail pages. For example, select the serial # for "Bear Overboard" to got to the Certificate detail page.

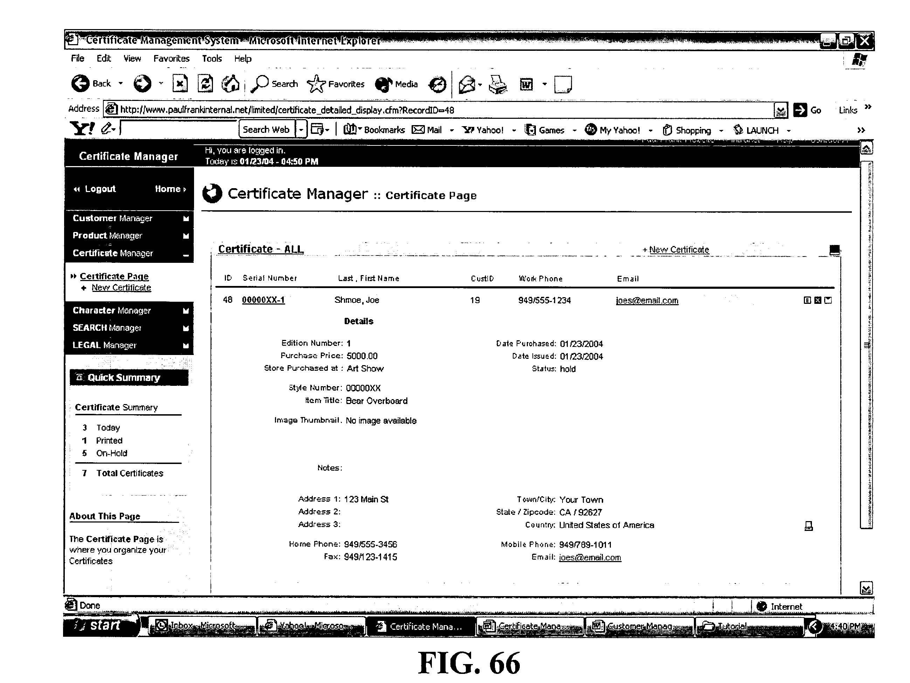

FIG. 66 illustrates the Certificate detail page for the certificate that was just created by the user. As seen in the example, in addition to the fields described above, the Purchase Price field shows that the item was purchased for "5000.00." The Date Purchased and Date Issued fields, which store the date the item was purchased and the date the certificate was issued, respectively, shows the same date of "January 23, 2004." The Status field shows that the certificate is on "Hold," which means that the user did not want to print the certificate when it was created. The Store Purchased At field shows that the item was purchased at an "Art Show." No notes have been entered, and thus the Notes field does not display any information. The user can print the certificate by selecting a printer icon located near the bottom right of the page. Once printed, the Quick Summary section is updated by the certificate manager module 110 to reflect the changed status of the certificate.

It should be noted that certain customer information for the customer that is being issued the certificate is also displayed on the Certificate detail page. In one preferred embodiment, all of this customer information may be retrieved by querying the database 120 for the customer's customer database record, as identified by the customer's customer ID. Therefore, as long as the certificate database record and its related customer database record are linked in some fashion, it may not be necessary to store duplicate information unless it is desirable to do so for a specific implementation. For example, the relationship information may be maintained by storing the customer ID in the certificate database record, storing the certificate ID's that are related to the customer in the customer database record, and/or creating an index that identifies the certificates belonging to the customer. As another example, however, if the customer information is stored in the certificate database record it will not be necessary to retrieve the customer database record to obtain the needed customer information, thereby reducing the amount of queries that is made on the database 120.

### Certificate for Non-Print Reproduction

The intellectual property management system 100 also tracks certificates for all reproductions that are NOT fine art prints ("reproduction certificates"). For example, reproduction certificates may be issued for a limited edition handbag. In contrast, the content of fine art print certificates ("FA/print certificate") is often regulated by law, such as California Civil Code. Therefore, fine art print reproductions require their own certificate form, which will be described below. To access the Reproduction Certificate Page Reproduction Certificate, the user can select the "Reprod Certificate" link in the menu bar area of the Certificate Manager homepage as illustrated in FIG. 62.

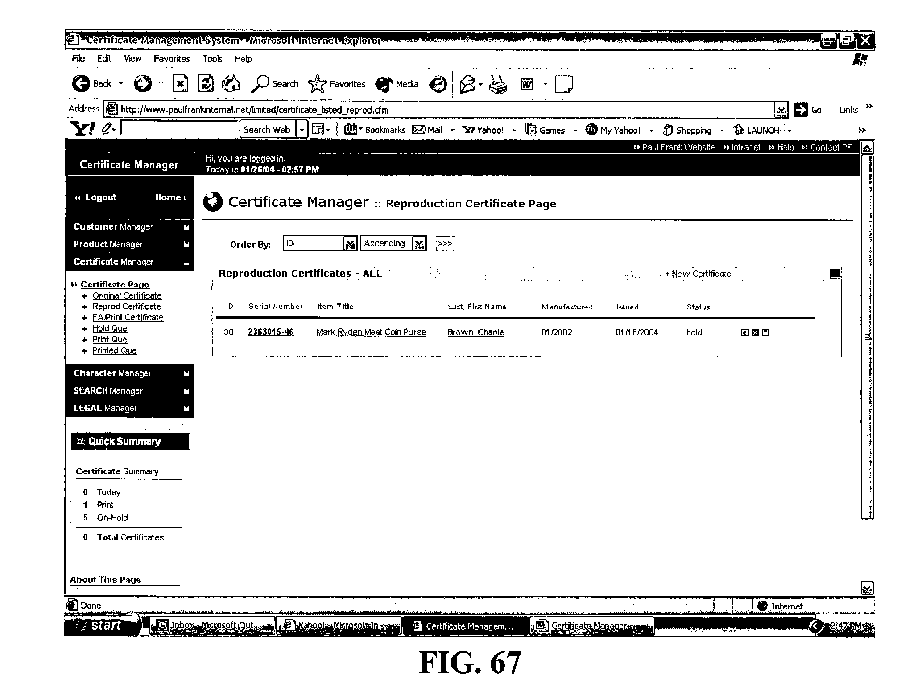

FIG. 67 illustrates the Reproduction Certificate Page, which includes a list of the reproduction certificate database records in the database 120. The user can create a new reproduction certificate database record by selecting the "New Certificate" link located in the upper right corner of the page, which will bring the user to an Add Reproduction Certificate page. In the example described herein, the Add Reproduction Certificate page includes the same fields as the Add Original Certificate page, and in one preferred embodiment the intellectual property management system 100 tracks the type of certificate database record that the user creates by a "Certificate Type" field that is not normally accessible to the user. In one embodiment, this value of this field is determined by the page on which the "New Certificate" link is located. Thus, for example, because the user selected the "New Certificate" link on the Reproduction Certificate Page, a new reproduction certificate database record is created with a Certificate Type of "Reproduction Certificate." The Add Reproduction Certificate page also includes an "Update" button for the user to submit the information for the newly created reproduction certificate database record.

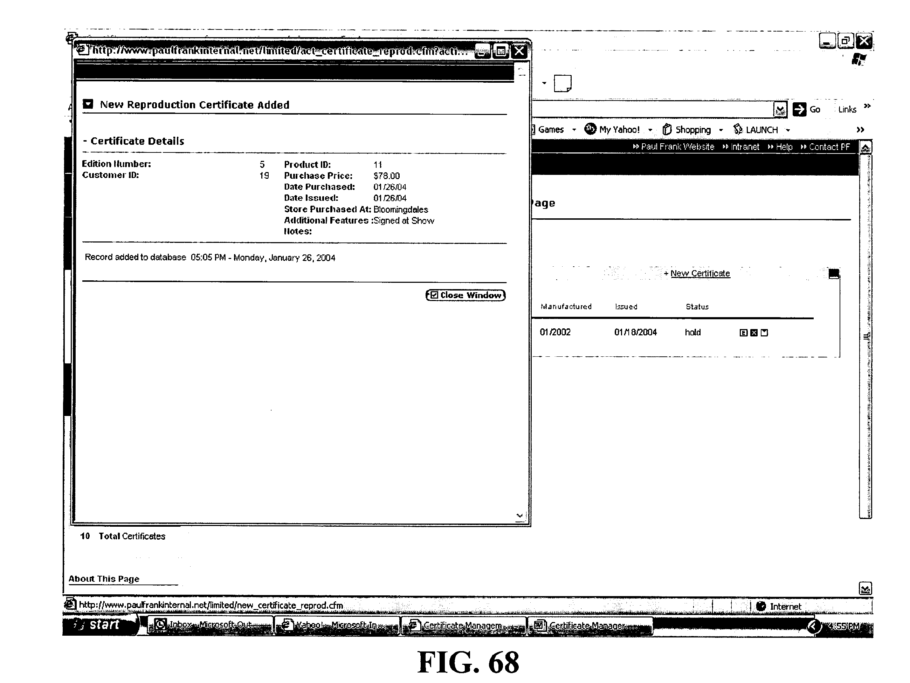

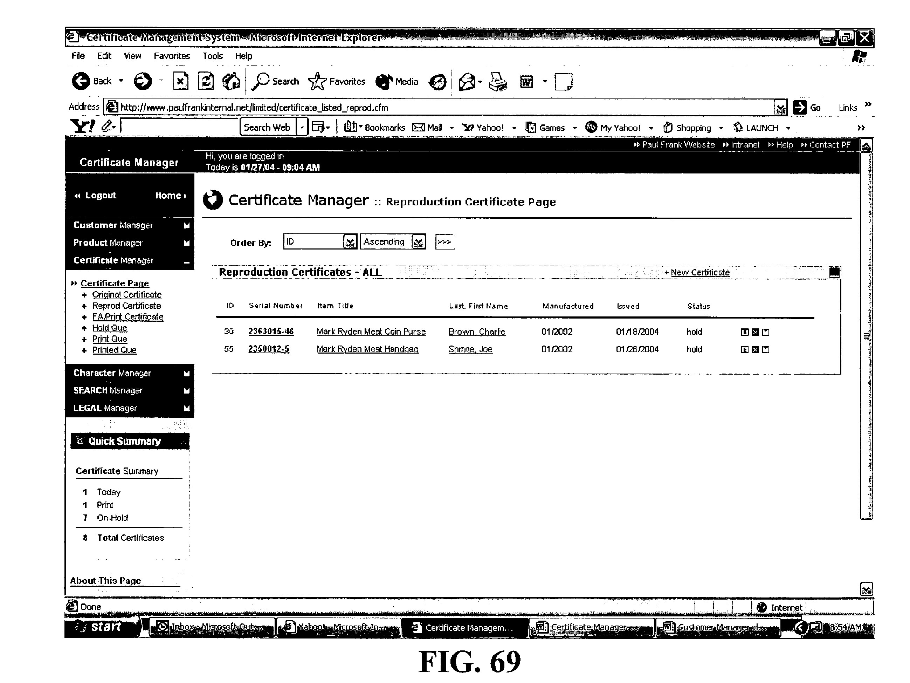

FIG. 68 illustrates a "New Reproduction Certificate Added" page confirming that a reproduction certificate database record has been added for a 5th edition of the "Mark Ryden Meat Handbag" product, which has a product ID of 11, purchased for 78.00 at Bloomingdales on January 26, 2004 by "Shmoe, Joe," who is the customer with a customer ID of 19. The page will display, as an additional feature for this particular piece, that it was signed by Paul Frank at a show. FIG. 69 illustrates the Reproduction Certificate Page with an updated listing that includes the created reproduction certificate.

### Certificate for a Fine Art Print Reproduction

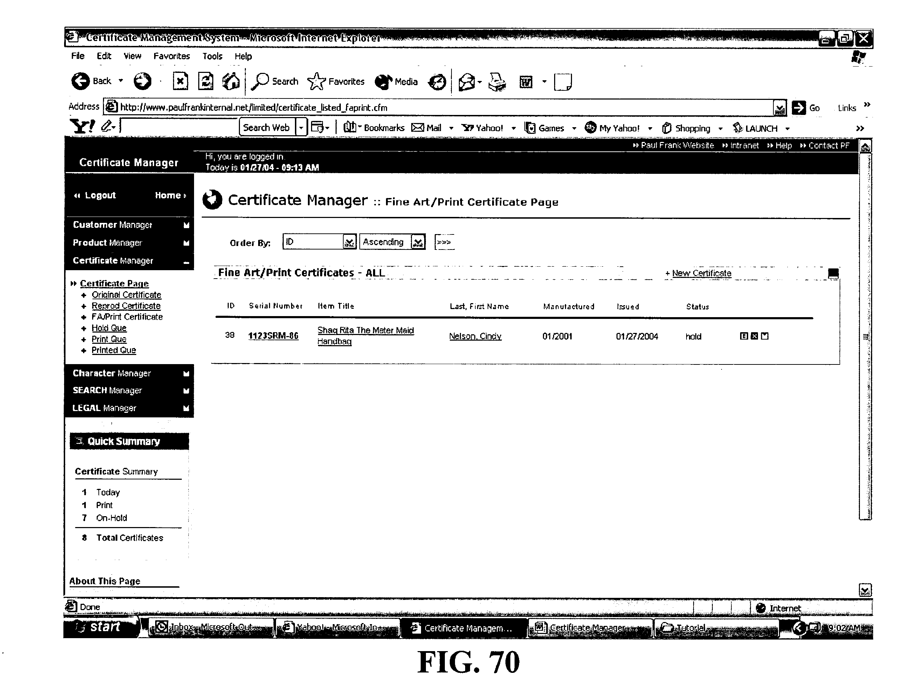

FIG. 70 illustrates a Fine Art/Print Certificate Page that is accessed by the user selecting a "FA/Print Certificate" link in the menu bar of the Certificate Manager homepage illustrated in FIG. 62. Similar to the other certificate pages, the user can create a FA/print certificate database record by selecting the "New Certificate" link on the top right hand portion of the Fine Art/Print Certificate Page. In one embodiment of the present invention, the fields for this type of certificate record are the same as the reproduction certificate. The additional information needed to comply with any legal requirement have been previously input into the product database record for the product that corresponds to this certificate, as further described below in the description for the Product Manager module 106.

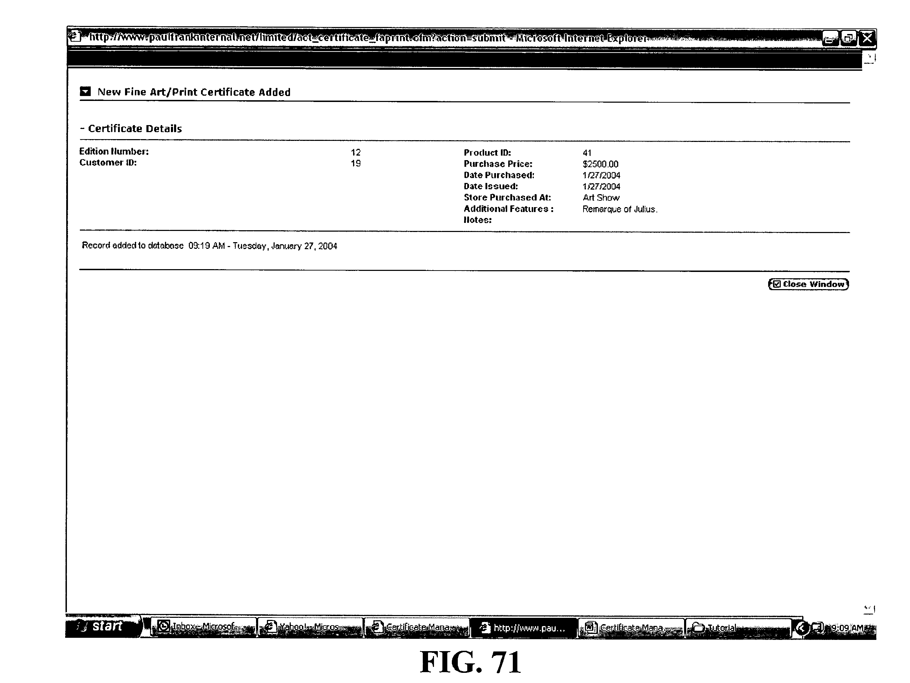

FIG. 71 illustrates a "New Fine Art/Print Certificate Added" page confirming the addition of a new FA/print certificate database record with the following values:

| | |
|---|---|
| Edition Number: | 12 |
| Customer: | Joe Shmoe |
| Style Number: | Test Printed Fine Art Reproduction |
| Additional Features: | Remarque of Julius |
| Purchase Price: | 2500.00 |
| Date Purchased and Issued: | 1/27/04 |
| Status: | Hold |
| Store: | Art Show |

### Print Queue

As discussed above, when the user creates certificates, the user chooses when the certificate should be printed by assigning a print status (print, hold, or printed) to each certificate record. In the above example, the user has created three certificates, but has not printed them--all three certificates were assigned a "Hold" status. The user can locate and print these and other certificates that have not yet been printed by using the print queue management features provided by Certificate Manager Module 110. The user may access these features by selecting the "Hold Queue" link in the menu bar area of the Certificate Manager homepage as illustrated in FIG. 62.

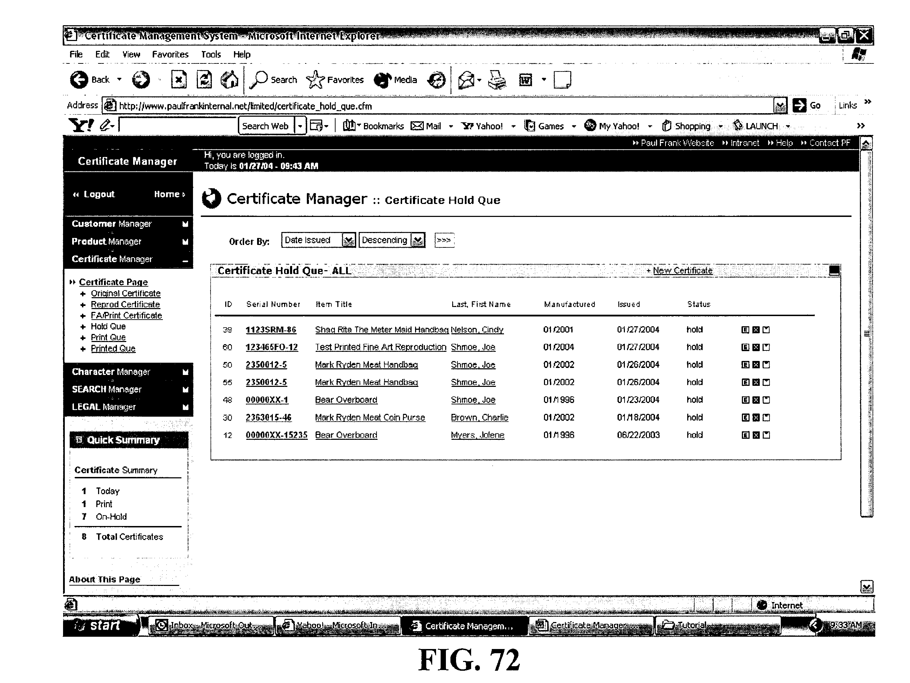

FIG. 72 illustrate a "Certificate Hold Que" page that includes a listing of all the certificates records that have a "Hold" status. In one embodiment, the user can print one or more of the held certificates by first changing their status from "Hold" to "Print." As previously indicated, the "edit" function for editing a database record is represented by an icon comprising a green square with an "E" in it. Thus, in this example, the user can select edit icons next to each certificate record that the user wishes to print to change their status. As each certificate database record is changed, it is removed from the Certificate Hold Que page. To access these records for printing, the user can select the "Print Queue" link on the menu bar.

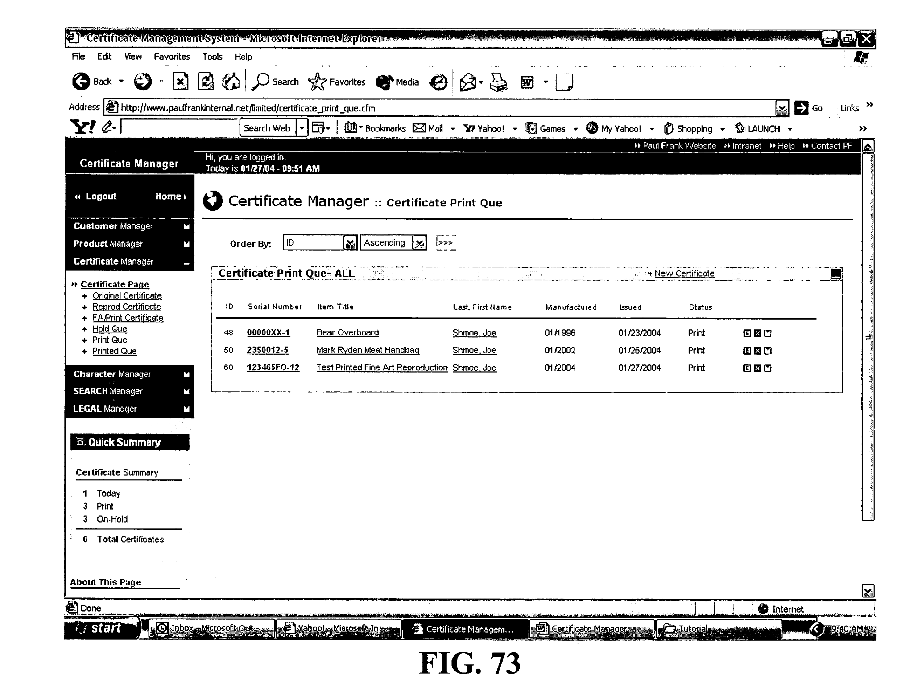

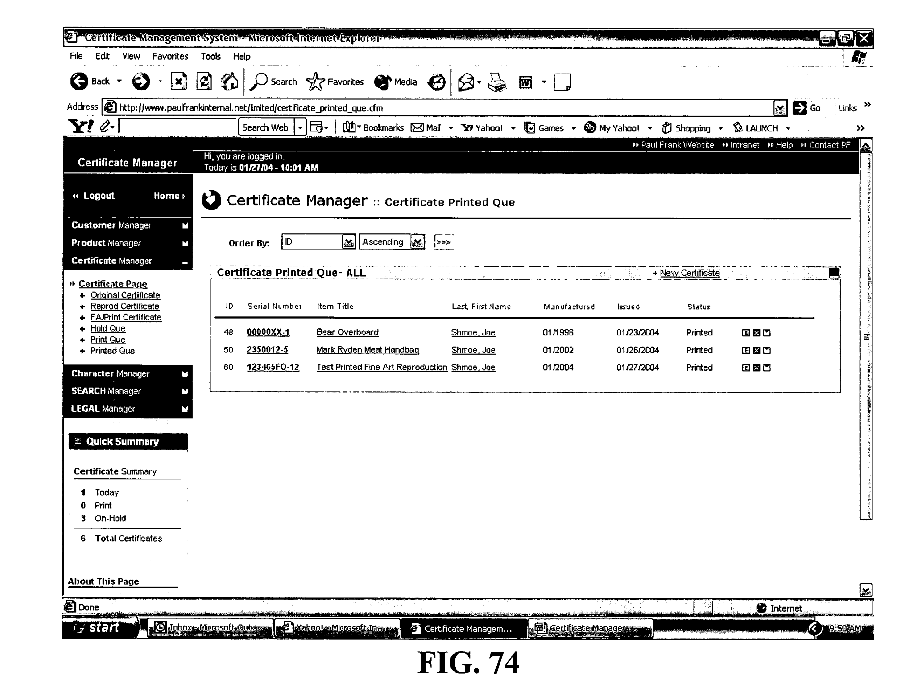

FIG. 73 illustrates a "Certificate Print Que" page where three certificates that were moved from the hold queue are listed. Once the user has printed these certificates, their database records should be changed to move the status from "Print" to "Printed." In one embodiment, the Certificate Manager module 110 may detect when a particular certificate has printed and update the certificate database record accordingly. In another embodiment, the user manually updates the status in each of the certificate database records as the particular certificate is printed. Once a certificates has been printed, it is cleared from the print queue list. To display the printed certificates, the user can select the "Printed Queue" link on the menu bar, which will bring the user to a "Certificate Printed Que" page, as illustrated by FIG. 74. The Certificate Printed Que page includes an updated list of the certificate database records showing the three printed certificates.

As noted above, the default display of the Certificate Manager homepage in the described embodiment is the Original Certificate Page. However, it should be noted that the default display for the Certificate Manager homepage may be any of the pages described above. For example, it may be desirable to set the default page to be the Certificate Hold Que page so to enforce the importance of sending out the various created certificates to the customers. In another embodiment, different users may be directed to different default pages upon accessing the Certificate Manager homepage. For example, a user who has primary responsibility for printing certificates can be brought to the Certificate Print Que page when the user access the Certificate Manager homepage. In addition, users can be assigned security information that will provide them with rights to access the various pages in the Certificate Manager module 110 as well as other manager modules. Moreover, in another embodiment, the rights can be based on the type of records. Various levels and granularities of security can be combined to implement a security policy as required for a particular situation, from the largest granularity assignable being the complete database and every type of record included therein, to the smallest granularity assignable being a specific page or function of a module. Where practicable, the smallest granularity may even be to a single field. As well, the security policy include various levels of security rights, from the highest level being full access to create, change or delete any element in the assigned granularity to the lowest level being read-only rights or other function to the assigned granularity. Thus, the level and granularity can also be based on functions as well as the data being accessed.

### Customer Manager

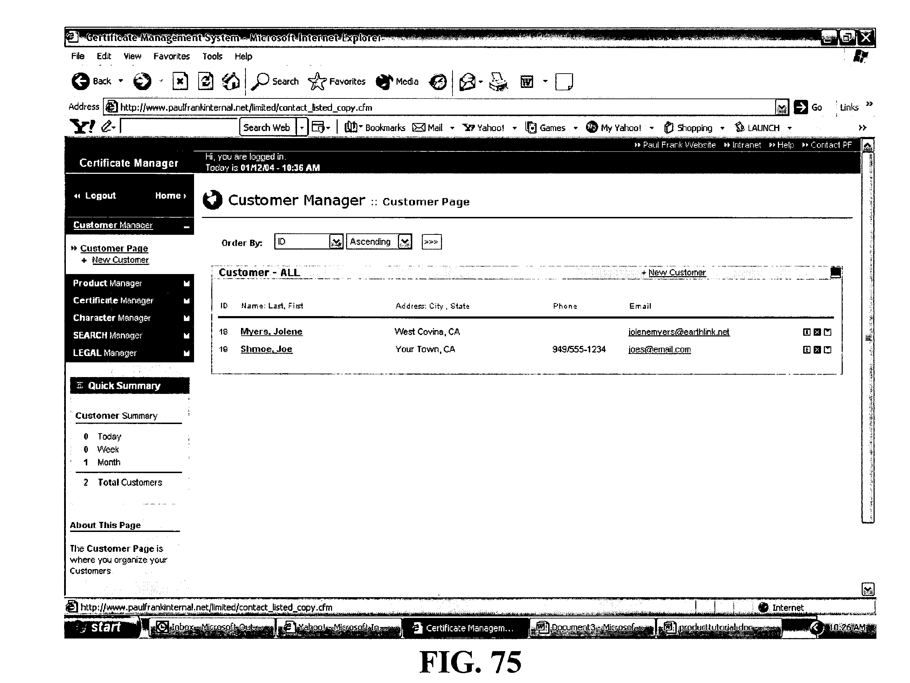

FIG. 75 illustrates a Customer Manager homepage for the Customer Manager module 112 configured in accordance with one preferred embodiment of the present invention. The Customer Manager homepage provides a listing of all the customer database records in the database 102 in a tabular format that displays certain contact information for each customer, including a phone number (Phone) and an e-mail address (Email).

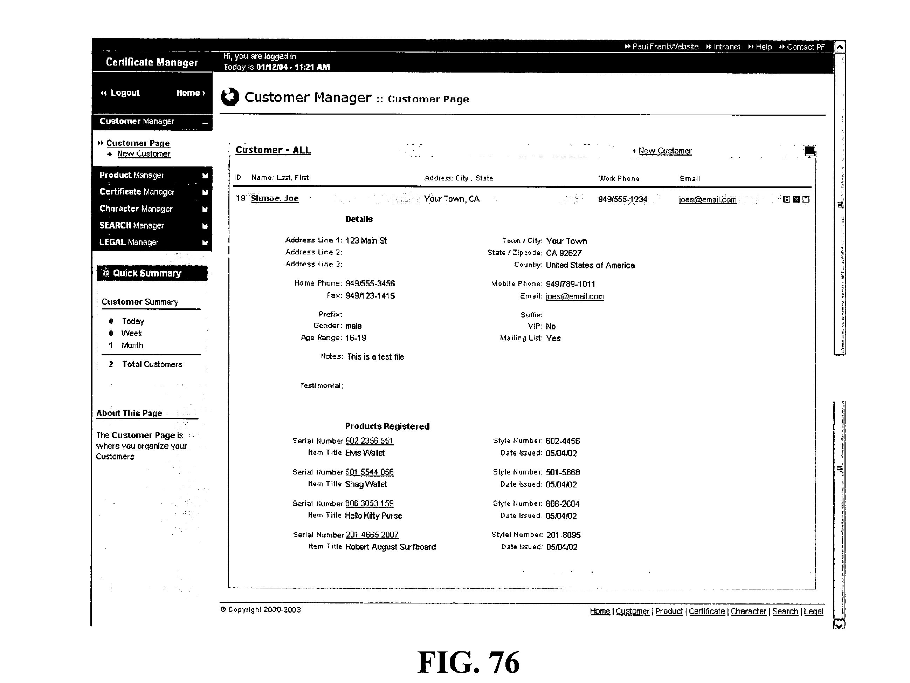

FIG. 76 illustrates a Customer Page that displays the details of the customer database record for a selected customer, "Shmoe, Joe." In one preferred embodiment, the information stored in the customer database record is gathered from such sources as mail-in registration cards, website registrations, or marketing or sales information received from retailers or distributors. In addition to contact information, the Customer Page also lists the products this customer has purchased and/or registered (Products Registered). In one preferred embodiment, the list of products is generated by a search of the certificate database records in the database 102. As discussed above in the description of the Certificate Manager module 110, each certificate database record includes customer identification information necessary to identify the customer to which the certificate is issued.

In one preferred embodiment, the Customer Manager module 112 provides multiple locations for the user to add a new customer database record. For example, referring to the Customer detail page illustrated by FIG. 76, the user can select the "New Customer" link located in the gray menu bar on the left side of the page. Alternatively, the user can select the "New Customer" link located near the top right of the page in the gray bar area. These links are also placed in similar locations on the Customer Manager homepage as illustrated by FIG. 75.

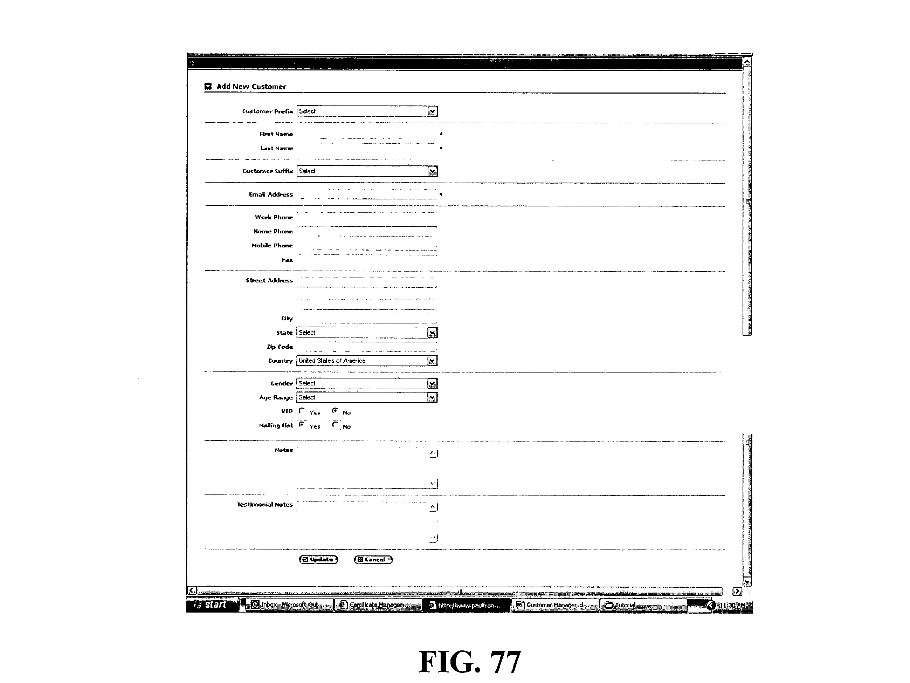

FIG. 77 illustrates an "Add New Customer" page that is presented to the user for adding a new customer record when the user has selected the "New Customer" link. Once the user has entered the requested information, the user can update the database 120 with the entered information by selecting the "Update" button on the bottom of the page. The user will then be presented with a confirmation that a customer record has been added with the entered information.

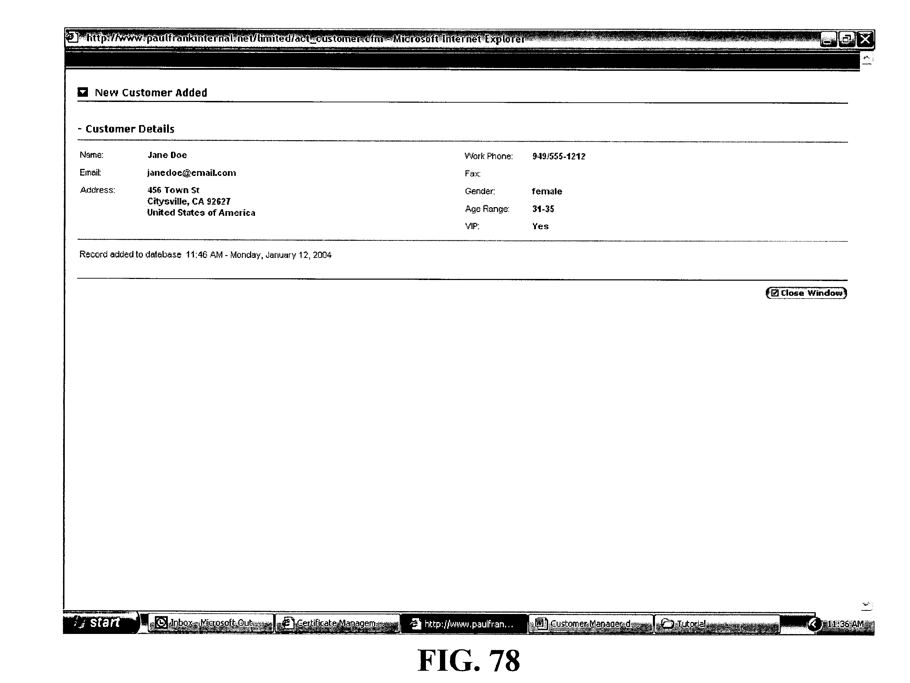

FIG. 78 illustrates a "New Customer Added" page confirming the following details:

| | |
|---|---|
| Name: | Jane Doe |
| Email: | janedoe@email.com |
| Work Phone: | 949/555-1212 |
| Address: | 456 Town St, Citysville CA 92627 |
| Gender: | female |
| Age Range: | 31-35 |
| VIP: | Yes |

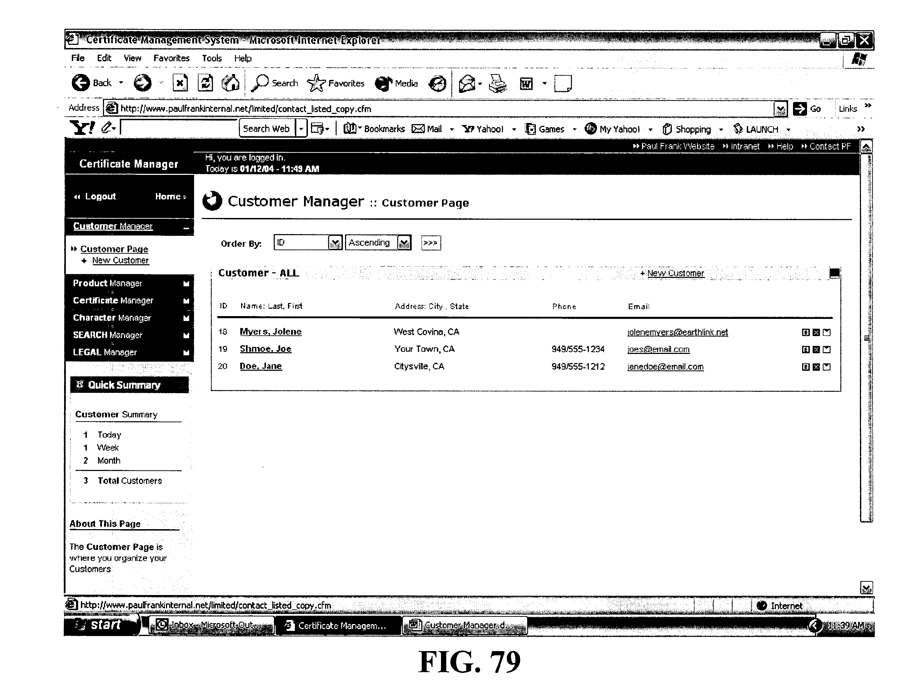

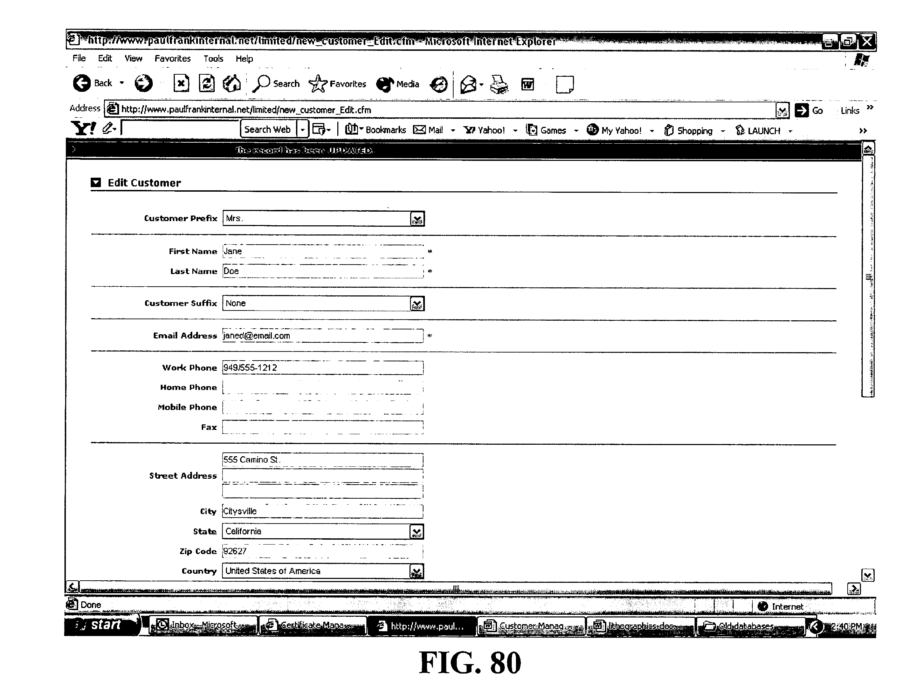

FIG. 79 illustrates an updated Customer Manager homepage reflecting the addition of the customer database record in database 120 for "Jane Doe." The user can edit a customer's customer database record by selecting the "edit" button, as indicated by a green square with an "E" in it. The edit button is provided on this page as well as on the Customer detail page. When the edit button is selected, the user will be taken to an "Edit Customer" page as illustrated by FIG. 80, where the user has updated Jane Doe's address to: "555 Camino St." and selected the "update" button to store the changes into database 120. The Edit Customer page also includes a "delete" button, denoted by a red square with an "x" in it, at the bottom of the page, which, if selected by the user, will delete the entire customer record.

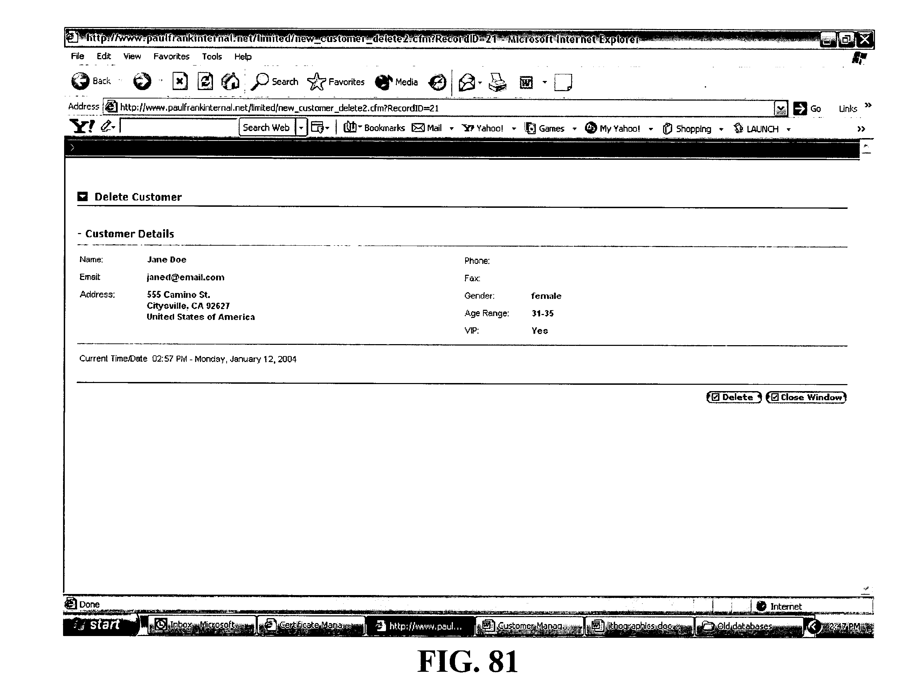

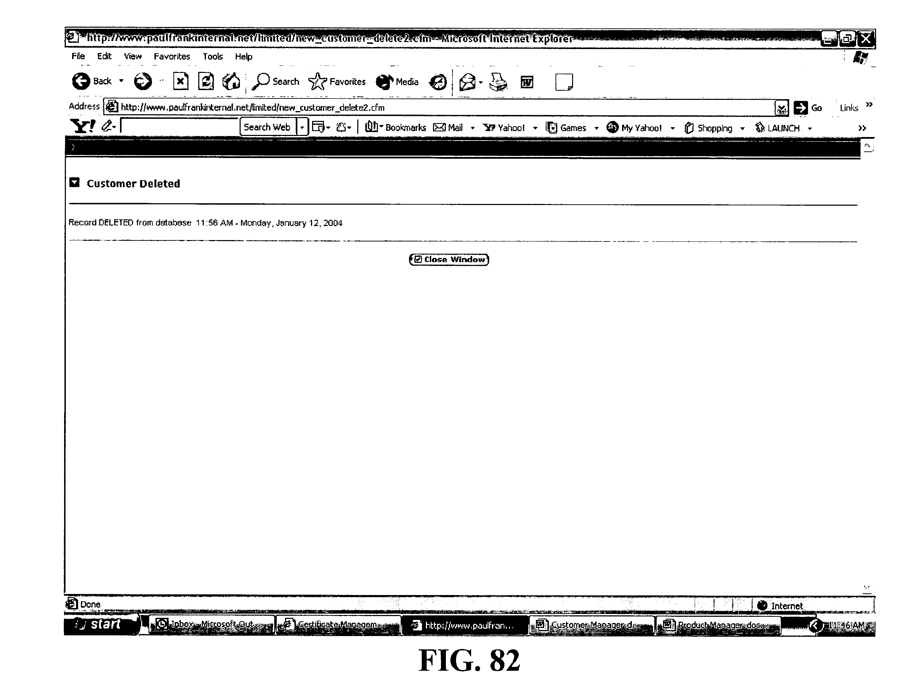

FIG. 81 illustrates a "Delete Customer" page requesting that the user confirm the deletion request. If the user wishes to delete the customer record, the user can select the "Delete" button. If the user does not wish to delete the customer record, the user can select the "Close Window" button. If the user confirms the deletion, a "Customer Deleted" page, as illustrated by FIG. 82, will be presented to the user to confirm the deletion.

### Search Manager

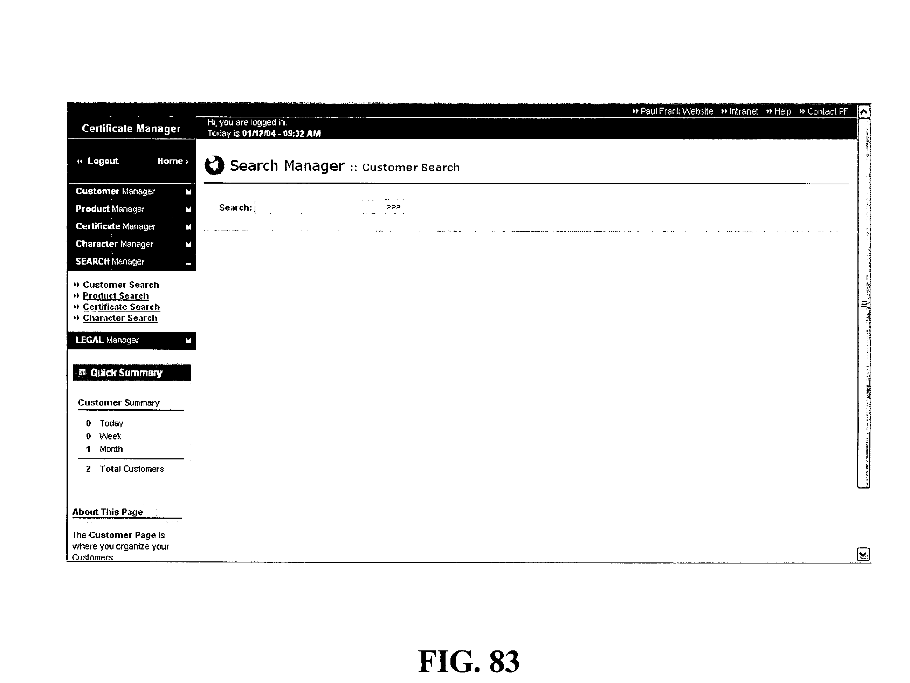

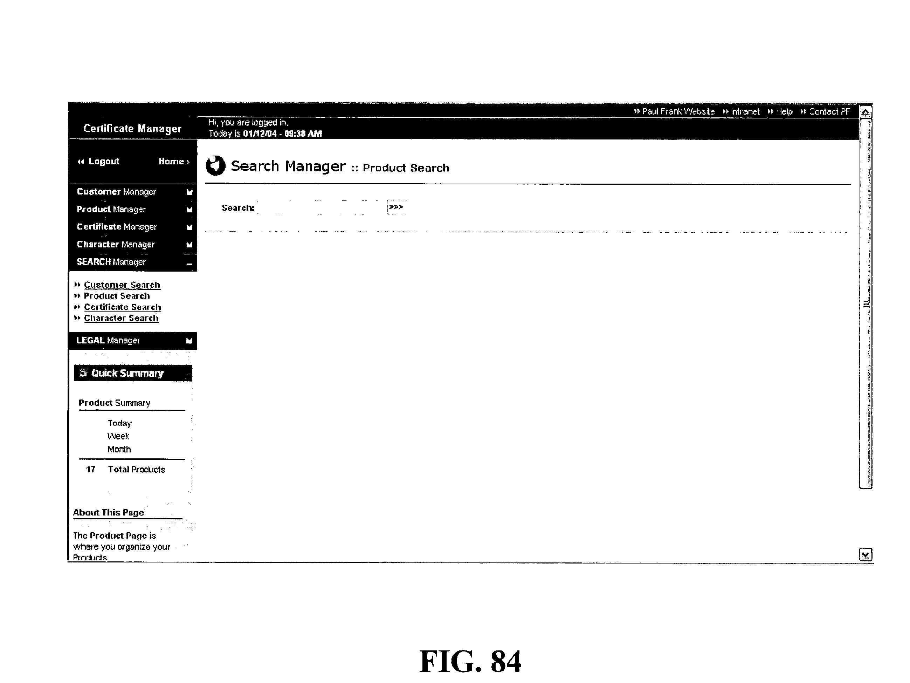

FIG. 83 illustrates a Search Manager homepage for the Search Manager module 114 that provides a user the ability to search the customer, product, certificate, or character database records stored in the database 120. In one preferred embodiment, the default homepage is a "Customer Search" page, which allows the user to search for one or more customer database records matching particular criteria. The user can access the pages to perform other types of searches by selecting a desired search link on the menu located on the left side of the page. For example, if the user selects "Product Search," then the user will be presented with a "Product Search" page, as illustrated by FIG. 84.

In one preferred embodiment, each page includes an alphanumeric input (Search) box in which the user can type an alphanumeric string for which to search, which may include all characters enterable with a keyboard device, including all punctuation and space characters. In this embodiment, the search will return all of the records in which the alphanumeric string occurs in the title or keyword fields. In another embodiment, the search will include a search on all fields in addition to the title and keyword fields.

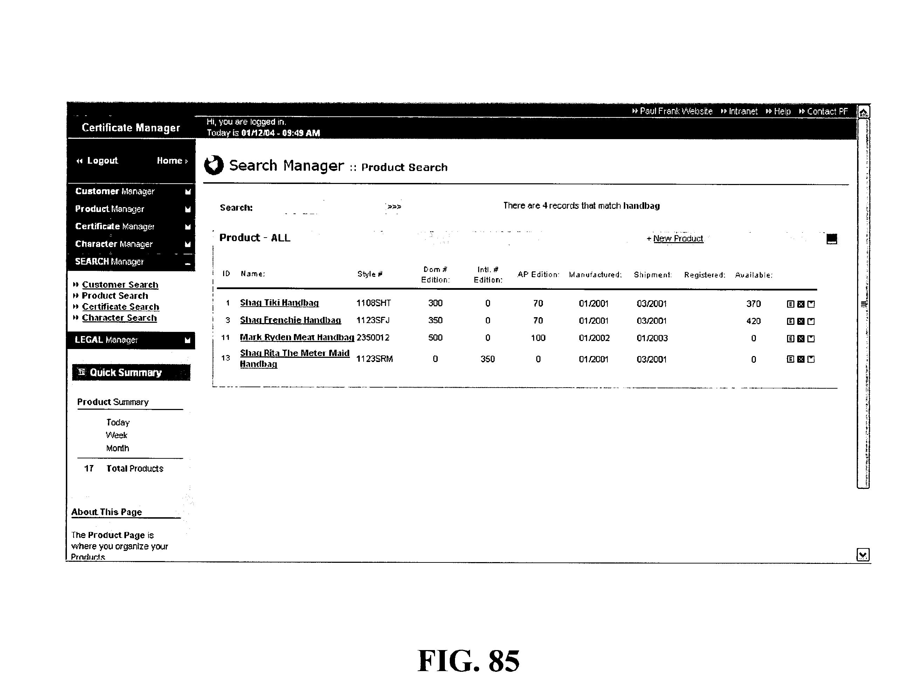

For example, to perform a search for all handbags in the Product Search page, the user can type "handbag" in the Search box and then select the execute search button, designated by the three arrows ">>>" next to the Search box. FIG. 85 illustrates an updated Product Search page where the results of the search containing the results of the search is presented to the user. As seen in the figure, the list includes all product database records where the word "handbag" was found in the title or keyword fields. The user can select the link for a particular returned product database record to view it in detail.

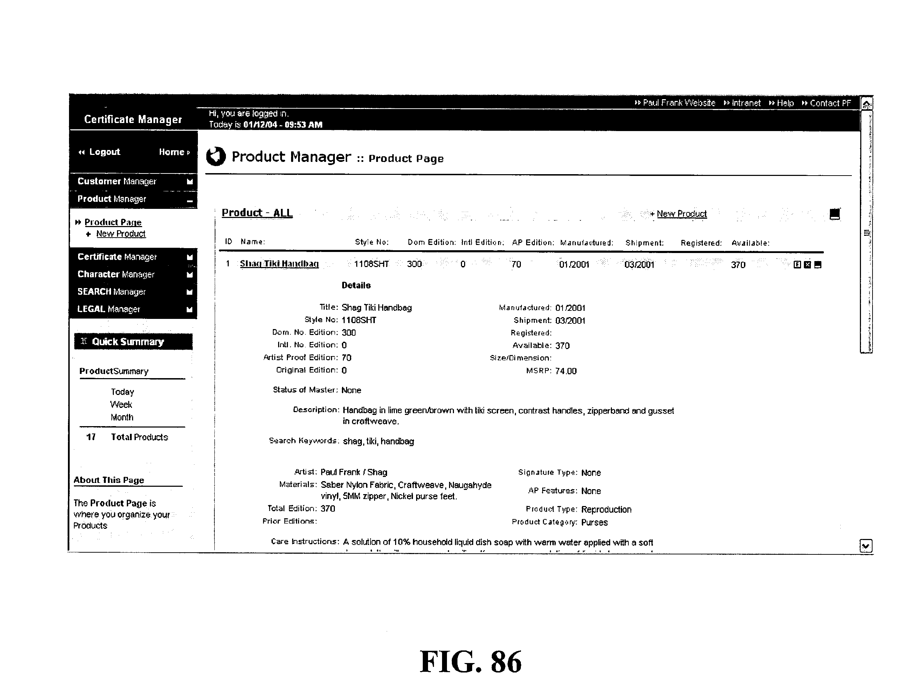

FIG. 86 illustrates a Product detail page where, continuing with the above example, the user has selected the link labeled as "Shag Tiki Handbag" from the search results list. The Product detail page, as described previously, displays information from a product database record retrieved from database 120, which in this case is the product database record for the Shag Tiki Handbag product. The user can select the "Back" button on their browser to return to the list of search result on the Search Manager page from which the user just came. The user can also select the "Search Manager" entry on the menu bar to return to the default Search Manager page, which is the Search manager homepage as illustrated by FIG. 83.

The following table lists the various fields, and a preferred data type for the data to be stored in each field as used in the database 120 in accordance with one embodiment of the present invention. As described herein the data in these fields are used by the various modules in the database management system 100. The data types that are listed herein are exemplary in nature and, as well understood to those of ordinary skill in the art, may be replaced with other data types and thus should not be limiting as to the scope of the claimed invention. Further, also as known to those of ordinary skill in the art, records of one type may store information that is duplicative of the information stored in another type of record. For example, as described above, the certificate database records may store the name of the customer that has purchased a particular item for which the certificate is issued. However, the certificate database record may also store link information used to retrieve the linked customer database record from the database 120 that includes the customer name. Conversely, a customer database record can include a link to the certificate database record that stores information for the certificates issued to the customer. If the customer is a collector that has purchased multiple products, thereby having been issued multiple certificates, the customer's customer database record can include a link to each of the certificate database record. These one-to-one or many-to-one relations can be defined in various ways to implement the database structure of the present invention.

**Table - Field Breakdown per Manager Module/Database Type/Field Entry Type (functions associated with module)**

| 1. product manager (add, edit, delete, refresh) | | | | |
|---|---|---|---|---|
| | a. | product title | (nvarchar) | text |
| | b. | style number | (nvarchar) | text |
| | c. | domestic edition number | (int) | text |
| | d. | international number edition | (int) | text |
| | e. | artist proof edition | (int) | text |
| | f. | shipment date | (date/time) | calendar |
| | g. | numbered registered | (int) | text |
| | h. | total number available | (int) | text |

| 2. customer manager (add, edit, delete, refresh) | | | | |
|---|---|---|---|---|
| | a. | name | (nvarchar) | text |
| | b. | street address | (nvarchar) | text |
| | c. | city | (nvarchar) | drop menu |
| | d. | state | (nvarchar) | drop menu |
| | e. | zip code | (nvarchar) | text |
| | f. | country | (nvarchar) | drop menu |
| | g. | prefix | (nvarchar) | drop menu |
| | h. | suffix | (nvarchar) | drop menu |
| | i. | work phone | (nvarchar) | text |
| | j. | home phone | (nvarchar) | text |
| | k. | cellular phone | (nvarchar) | text |
| | l. | fax | (nvarchar) | text |
| | m. | email | (nvarchar) | text |
| | n. | gender | (nvarchar) | drop menu |
| | o. | age range | (nvarchar) | drop menu |
| | p. | mailing list | (nvarchar) | radio the user can select |
| | q. | notes | (nvarchar) | text |

| 3. certificate manager (add, edit, delete, refresh) | | | | |
|---|---|---|---|---|
| | a. | serial number | (nvarchar) | text |
| | b. | features | (nvarchar) | text |
| | c. | purchase price | (nvarchar) | text |
| | d. | date purchased | (date/time) | calendar |
| | e. | date certificate issued | (date/time) | calendar |
| | f. | status | (nvarchar) | radio the user can select |
| | g. | store purchased at | (nvarchar) | text |
| | h. | notes | (nvarchar) | text |

| 4. legal manager (add, edit, delete, refresh) | | | | |
|---|---|---|---|---|
| | a. | requestor name | (nvarchar) | text |
| | b. | action requested | (nvarchar) | text |
| | c. | samples submitted | (nvarchar) | text |
| | d. | photo 1 | (nvarchar) | file upload |
| | e. | photo 2 | (nvarchar) | file upload |
| | f. | photo 3 | (nvarchar) | file upload |
| | g. | photo 4 | (nvarchar) | file upload |
| | h. | photo 5 | (nvarchar) | file upload |
| | i. | first use date | (nvarchar) | text |
| | j. | date first used on product | (nvarchar) | text |
| | k. | products | (nvarchar) | text |
| | l. | non products | (nvarchar) | text |
| | m. | register in countries | (nvarchar) | text |
| | n. | notes | (nvarchar) | text |
| | o. | serial number | (nvarchar) | text |
| | p. | registration number | (nvarchar) | text |
| | q. | trademark date | (nvarchar) | text |
| | r. | timeframe | (nvarchar) | text |
| | s. | date of expected use/ use by date | (nvarchar) | text |
| | t. | status of action | (nvarchar) | drop menu |
| | u. | legal notes | (nvarchar) | text |

| 5. character manager (add, edit, delete, refresh) | | | | |
|---|---|---|---|---|
| | a. | character/graphic name | (nvarchar) | text |
| | b. | image category type | (nvarchar) | radio the user can select |
| | c. | keyword search | (nvarchar) | text |
| | d. | pantone color | (nvarchar) | text |
| | e. | created by | (nvarchar) | drop menu |
| | f. | finished art by | (nvarchar) | drop menu |
| | g. | date created | (date/time) | calendar |
| | h. | first used on product | (nvarchar) | text |
| | i. | bio | (nvarchar) | text |
| | j. | notes | (nvarchar) | text |
| | k. | form completed by | (nvarchar) | text |
| | l. | photo | (nvarchar) | file upload |
| | m. | category | (nvarchar) | drop menu *usage |
| | n. | item | (nvarchar) | text *usage |
| | o. | season | (nvarchar) | drop menu *usage |
| | | | | |
| | p. | year | (nvarchar) | drop menu *usage |

The embodiments described above are exemplary embodiments of a the present invention. Those skilled in the art may now make numerous uses of, and departures from, the above-described embodiments without departing from the inventive concepts disclosed herein. Accordingly, the present invention is to be defined solely by the scope of the following claims.

## Claims

1. A integrated graphics and related trademark information system comprising:
a data storage system, the data storage system storing a database having a plurality of graphics and related trademark database records;
a database management system coupled to and in communication with the data storage system, the database management system including a plurality of manager modules coupled to the database that provide access to the plurality of graphics and related trademark database records; and,
a user interface system coupled to the database management system, the user interface system displaying a user interface for creating an association between a graphics database record identifying a first graphic and a trademark database record identifying a trademark application, and to retrieve information related to the trademark application based on that association.

2. The integrated graphics and related trademark information system of claim 1, wherein the database further storing a plurality of certificate database records that include information for a use of the graphic on a collectable product and a customer that purchased the collectable product.

3. The integrated graphics and related trademark information system of claim 1 or 2, wherein the user interface system is coupled to one or more other databases to retrieve the information related to the trademark application.

4. The integrated graphics and related trademark information system of claim 3, wherein the one or more other databases includes a database managed by a governmental entity having authority over the trademark application.

5. The integrated graphics and related trademark information system of claim 3 or 4, wherein the trademark database record includes an identification number for the trademark application, and the database management system using the identification number to create a query to retrieve the information related to the trademark application.

6. The integrated graphics and related trademark information system of any one of the preceding claims, wherein each graphics database record in the plurality of graphics database records includes use information related to the graphics.

7. The integrated graphics and related trademark information system of any one of the preceding claims, wherein the plurality of manager modules includes a graphics manager module to access information related to a product use of any graphics identified in the plurality of graphics database records in the data storage system and create a report with the information.

8. The integrated graphics and related trademark application system of any one of the preceding claims, wherein the plurality of manager modules includes a legal manager module to access information related to the plurality of trademark records in the data storage system.

9. The integrated graphics and related trademark application system of any one of the preceding claims, wherein the database further includes a plurality of customer records and the plurality of manager modules further includes a customer manager module to create an association between one or more graphics database records and one or more customer records in the data storage system.

10. The integrated graphics and related trademark application system of any one of the preceding claims, wherein the plurality of manager modules includes a search manager module.

11. The integrated graphics and related trademark application system of any one of the preceding claims, wherein the database further includes a plurality of customer and certificate database records, and the plurality of manager modules includes a certificate manager module for creating an association between the plurality of customer and certificate database records.

12. A computer-implemented method for processing data from an intellectual property (IP) database containing a plurality of records of IP assets, the method comprising the steps of:
searching the IP database for a matching set of records from the plurality of records of IP assets based on a first criteria;
displaying a list of the matching set of records;
identifying a status of legal protection for any IP assets referred to in any of the matching set of records;
updating information related to the status of legal protection in at least one record of the matching set of records;
displaying the information related to the status of legal protection.

13. The computer-implemented method according to claim 12, wherein the IP assets include a plurality of graphics.

14. The computer-implemented method according to claim 12 or 13, further including the step of collecting information required to perform a legal service with respect to obtaining legal protection for an IP asset.

15. The computer-implemented method according to any one of claims 12 to 14, wherein legal protection comprises a trademark registration.

16. The computer-implemented method according to any one of claims 12 to 15, wherein legal protection comprises a copyright registration.

17. The computer-implemented method according to any one of claims 12 to 16, further including the step of automatically performing a watch service for at least one of the IP assets in the user portfolio.

18. The computer-implemented method according to any one of claims 12 to 17, further including the step of updating docketing information for at least one of the IP assets.

19. The computer-implemented method according to claim 18, wherein the docketing information comprises use information related to the IP assets.

20. The computer-implemented method according to claim 18 or 19, wherein the docketing information comprises at least one of renewal, maintenance, and annuity docketing information.

21. The computer-implemented method according to any one of claims 18 to 20, wherein the docketing information comprises a fee owed for an IP asset and a date for which such fee is owed.

22. The computer-implemented method according to any one of claims 18 to 21, wherein the docketing information relates to at least one of a renewal and a maintenance of a trademark.

23. The computer-implemented method according to any one of claim 18 to 22, further including the step of displaying a docketing information for at least one IP asset.

24. A computer-implemented method for managing a legal protection for an image, the computer-implemented method comprising the steps of:
retrieving a graphics database record from a database, the graphics database record storing information related to the image, including use-related information of the image for at least one of a product and service;
creating an application for legal protection based on the information in the graphics database record;
receiving an application serial number for the application for legal protection, the application serial number assigned by an entity responsible for receiving the application for legal protection;
storing the application serial number in the graphics database record; and,
retrieving status information for the application for legal protection based on the application serial number.

25. The computer-implemented method according to claim 24, further comprises the step of updating the graphics database record based on the retrieved status information.

26. The computer-implemented method according to claim 24 or 25, further comprises the steps of:
determining a registration number for the application for legal protection; and,
storing the registration number for the application for legal protection in the graphics database record.

27. The computer-implemented method according to any one of claims 24 to 26, wherein the step of retrieving status information for the application for legal protection based on the application serial number comprises the steps of:
retrieving the application serial number from the graphics database record; and,
generating a link to retrieve application data managed by the entity based on the application serial number.

28. The computer-implemented method according to any one of claims 24 to 27, wherein the application for legal protection is a trademark application.

29. The computer-implemented method according to claim 28, wherein the use-related information includes an identification of a product on which the image is used and the trademark application is a use-based application.

30. The computer-implemented method according to claim 29, wherein the use-related information includes a date of use of the image on the product.

31. The computer-implemented method according to any one of claims 24 to 30, wherein the use-related information includes an identification of a product on which the image will be used and the trademark application is an intent-to-use-based application.

32. The computer-implemented method according to claim 31, wherein the use-related information includes a date of expected use of the image on the product.

33. The computer-implemented method according to any one of claims 24 to 32, wherein the entity responsible for receiving the application for legal protection is a governmental entity.

34. A computer readable medium having instructions stored thereon, the stored instructions, when executed by a processor, causes the processor to perform a method for managing legal protection for an image as claimed in any one of claims 12-34.
